(19) Europäisches Patentamt / European Patent Office / Office européen des brevets

(11) EP 4 631 994 A1

(12) **EUROPEAN PATENT APPLICATION**
published in accordance with Art. 153(4) EPC

(43) Date of publication:
**15.10.2025 Bulletin 2025/42**

(21) Application number: **23900647.1**

(22) Date of filing: **05.12.2023**

(51) International Patent Classification (IPC):
***C08G 77/00*** *(2006.01)* ***C08G 65/40*** *(2006.01)*
***G02B 1/04*** *(2006.01)*

(52) Cooperative Patent Classification (CPC):
**C08G 65/40; C08G 77/00; G02B 1/04**

(86) International application number:
**PCT/JP2023/043420**

(87) International publication number:
**WO 2024/122532 (13.06.2024 Gazette 2024/24)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **06.12.2022 JP 2022195247**

(71) Applicant: **MITSUBISHI GAS CHEMICAL COMPANY, INC.**
**Chiyoda-ku**
**Tokyo 100-8324 (JP)**

(72) Inventors:
- **AKIMOTO, Hisato**
  **Tokyo 125-8601 (JP)**
- **SAKAI, Kentaro**
  **Tokyo 125-8601 (JP)**
- **TAGUCHI, Daisuke**
  **Tokyo 125-8601 (JP)**
- **KAMATANI, Kohei**
  **Tokyo 125-8601 (JP)**
- **UERA, Kazuyoshi**
  **Tokyo 125-8601 (JP)**
- **KATO, Noriyuki**
  **Tokyo 100-8324 (JP)**
- **ISHIHARA, Kentaro**
  **Tokyo 100-8324 (JP)**
- **NISHIMORI, Katsushi**
  **Tokyo 125-8601 (JP)**
- **MOTEGI, Atsushi**
  **Tokyo 125-8601 (JP)**

(74) Representative: **Hoffmann Eitle**
**Patent- und Rechtsanwälte PartmbB**
**Arabellastraße 30**
**81925 München (DE)**

# (54) THERMOPLASTIC RESIN AND MOLDED OBJECT INCLUDING THERMOPLASTIC RESIN

(57) Provided are a thermoplastic resin excellent in terms of properties for optical uses, such as refractive index and chromatic aberration, and a molded article including such thermoplastic resin. This thermoplastic resin has: a silane constituent unit (S) which is a constituent unit represented by general formula (1) and is the -OSi($R^1R^2$)O-moiety; and a diol constituent unit (A) derived from a dihydroxy compound and is represented by M. (In general formula (1), $R^1$ and/or $R^2$ represents an optionally substituted C10-C30 polycyclic aryl group.)

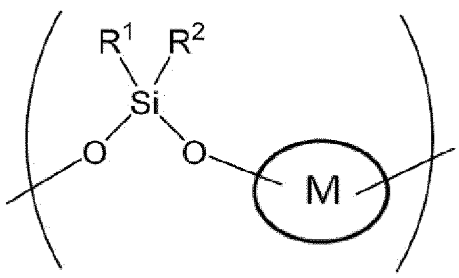

(1)

EP 4 631 994 A1

## Description

TECHNICAL FIELD

The present invention relates to a thermoplastic resin, in particular, a thermoplastic resin containing a constituent unit derived from a silane compound and the like, a molded body containing the thermoplastic resin, and others.

BACKGROUND ART

Conventionally, various thermoplastic resins have been used in a wide range of fields. Thermoplastic resins are formed into a variety of molded products by methods, such as injection molding, and are utilized in a wide range of industrial fields, such as electrical and electronics, OA equipment, heavy electrical machinery, precision machinery, and automotive fields.

Polymers of aromatic polysiloxane, also referred to as so-called polyarylenesiloxane, are known as thermoplastic resins used as materials for molded products and the like (for example, Patent Literature 1 and Patent Literature 2). In recent years, the importance of polysiloxane compounds such as polyarylenesiloxane has been growing, and polyarylenesiloxane is used as, for example, release layers in photocopying, photoresist materials, plasticizers for resins such as polycarbonate resins, or components in powder surface coating systems.

PRIOR ART DOCUMENTS

PATENT DOCUMENTS

Patent Literature 1: Japanese Translation of PCT International Application Publication No. 1996-502537

Patent Literature 2: Japanese Translation of PCT International Application Publication No. 2015-512999

SUMMARY OF THE INVENTION

PROBLEMS TO BE SOLVED BY THE INVENTION

Conventional thermoplastic resins, such as polysiloxane polymers, do not always have properties suited for specific applications, and thermoplastic resins with excellent properties have been needed as materials for molded products in optical and other applications. For example, in thermoplastic resins used in optical applications, improvement in both refractive index and Abbe number is not realized, at least not easily, since it is generally recognized that thermoplastic resins with a high refractive index tend to have a low Abbe number.

As described above, there is a need for a new thermoplastic resin with excellent properties from the viewpoint of properties in optical applications, such as chromatic aberration as indicated by refractive index and Abbe number.

MEANS FOR SOLVING THE PROBLEMS

The present invention provides a thermoplastic resin, a molded product containing the thermoplastic resin, and others as described below.

[1] A thermoplastic resin comprising a constituent unit represented by the following general formula (1) containing:

a silane constituent unit (S), which is a $-OSi(R^1R^2)O-$ moiety; and
a dihydroxy compound-derived diol constituent unit (A) represented by M,

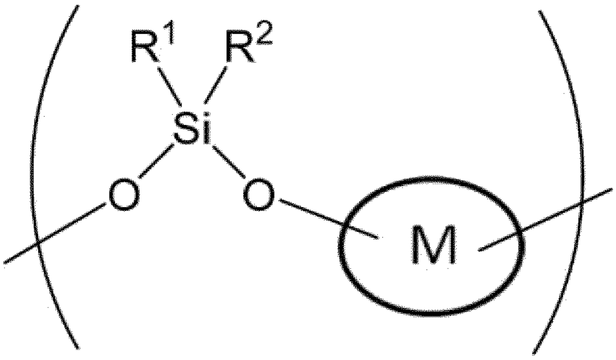

(1)

wherein at least one of $R^1$ and $R^2$ represents a polycyclic aryl group having 10 to 30 carbon atoms and optionally having a substituent.

[2] The thermoplastic resin according to the above [1], wherein a proportion of the polycyclic aryl group is 30% by mol or more based on a total number of moles of $R^1$ and $R^2$ in all the silane constituent units (S) contained in the thermoplastic resin.
[3] The thermoplastic resin according to the above [1] or [2], wherein a proportion of the silane constituent unit in which $R^1$ and $R^2$ in the general formula (1) are each the polycyclic aryl group is 30% by mol or more based on a total number of moles of all the silane constituent units (S) contained in the thermoplastic resin.
[4] The thermoplastic resin according to any of the above [1] to [3], wherein $R^1$ and $R^2$ in the general formula (1) are each independently a polycyclic aryl group selected from a naphthyl group, a phenanthrenyl group, an anthryl group, a pyrenyl group, a triphenylenyl group, a naphthacenyl group, and a chrysenyl group, all of which optionally have a substituent.
[5] The thermoplastic resin according to any of the above [1] to [4], wherein $R^1$ and $R^2$ are each independently a 1-naphthyl group, a 2-naphthyl group, or a 9-phenanthrenyl group.
[6] The thermoplastic resin according to any of the above [1] to [5], wherein one of $R^1$ and $R^2$ is a phenyl group optionally having a substituent.
[7] The thermoplastic resin according to any of the above [1] to [6], wherein the diol constituent unit (A) comprises a constituent unit represented by either of the following general formula (A-1) or general formula (A-2):

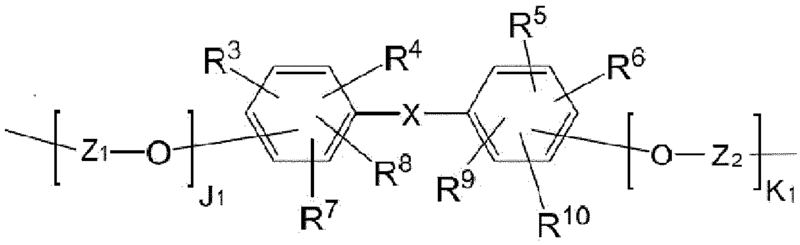

(A—1)

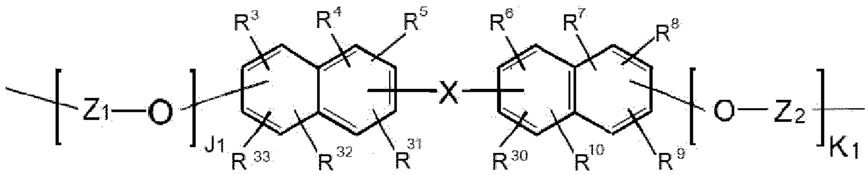

(A—2)

wherein $R^3$ to $R^{10}$ and $R^{30}$ to $R^{33}$ each independently represent hydrogen, a halogen, an alkoxy, an alkyl group having 1 to 20 carbon atoms and optionally having a substituent, an alkenyl group having 2 to 20 carbon atoms and optionally having a substituent, or an aryl group having 6 to 30 carbon atoms and optionally having a substituent;

$Z_1$ and $Z_2$ are each independently an alkylene group having 1 to 5 carbon atoms and optionally having a substituent;

$J_1$ each independently represents an integer of 0 or more and 5 or less;
$K_1$ each independently represents an integer of 0 or more and 5 or less;
X is each independently a single bond or any of structural formulas represented by the following formula (2):

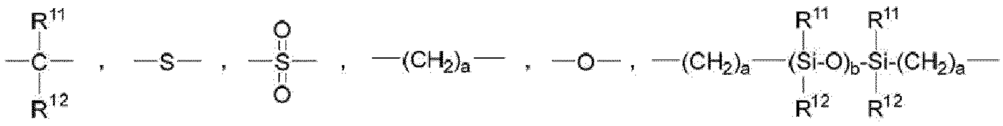

(2)

wherein $R^{11}$ and $R^{12}$ each independently represent hydrogen, a halogen, an alkyl group having 1 to 20 carbon atoms and optionally having a substituent, or an aryl group having 6 to 30 carbon atoms and optionally having a substituent, or $R^{11}$ and $R^{12}$ are bonded to each other to form and represent a carbocycle or heterocycle having 1 to 20 carbon atoms and optionally having a substituent; and
a and b each independently represent an integer of 0 or 1 or more and 5000 or less.

[8] The thermoplastic resin according to any of the above [1] to [7], wherein the diol constituent unit (A) comprises any of the following:

a fluorene constituent unit (F), which is a constituent unit derived from a fluorene ring-containing dihydroxy compound;
a dinaphthalene constituent unit (N), which is a constituent unit derived from a dinaphthalene-containing dihydroxy compound; and
a bisphenol constituent unit (B) derived from a bisphenol compound.

[9] The thermoplastic resin according to the above [8], wherein the fluorene constituent unit (F) is a constituent unit derived from any of BPEF, BPPEF, and BNEF.
[10] The thermoplastic resin according to the above [8] or [9], wherein the dinaphthalene constituent unit (N) comprises at least a constituent unit derived from 2NBN or DPBN.
[11] The thermoplastic resin according to the above [8], wherein a molar ratio between the fluorene constituent unit (F) and the dinaphthalene constituent unit (N) is 30:70 to 90: 10.
[12] The thermoplastic resin according to the above [1], wherein a relationship between a refractive index (nd) and an Abbe number (vd) of the thermoplastic resin satisfies a relationship of the following expression (I):

$$\text{refractive index (nd)} > -0.0078 \times \text{Abbe number (vd)} + 1.8293 \cdots \text{(I)}.$$

[13] The thermoplastic resin according to the above [12], wherein the expression (I) satisfies the following expression (I-1):

$$-0.0080 \times \text{Abbe number (vd)} + 1.861 > \text{refractive index (nd)} > -0.0078 \times \text{Abbe number (vd)} + 1.8293 \quad \text{(I-1)}.$$

[14] The thermoplastic resin according to any of the above [1] to [13], wherein the thermoplastic resin has a refractive index (nd) of 1.600 to 1.730.
[15] The thermoplastic resin according to any of the above [1] to [14], wherein the thermoplastic resin has an Abbe number (vd) of 15.0 to 27.0.
[16] The thermoplastic resin according to any of the above [1] to [15], wherein the thermoplastic resin has a Tg of 105 to 170°C.
[17] A molded body comprising the thermoplastic resin according to any of the above [1] to [16].
[18] The molded body according to the above [17], wherein the molded body is an optical lens or an optical film.

ADVANTAGEOUS EFFECT OF THE INVENTION

According to the present invention, a thermoplastic resin with excellent properties, such as high refractive index and Abbe number, and a molded body, such as optical lens, containing such a thermoplastic resin can be realized.

BRIEF DESCRIPTION OF DRAWING

[Figure 1] Figure 1 is a graph showing the relationship between the values of Abbe number and refractive index of the thermoplastic resins of Examples 1 to 5 and Comparative Examples 1 to 3.

DESCRIPTION OF EMBODIMENTS

A thermoplastic resin of the present invention has at least a constituent unit represented by general formula (1).

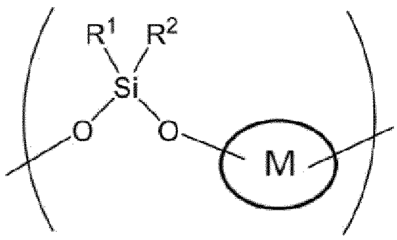

(1)

The constituent unit of general formula (1) contains a silane constituent unit (S), which is a -OSi($R^1R^2$)O- moiety, and a dihydroxy compound-derived diol constituent unit (A) represented by M in the formula.

Examples of the type of thermoplastic resins include polycarbonate resin, polyester resin, and polyester carbonate resin.

The silane constituent unit (S) in the thermoplastic resin is, for example, a constituent unit derived from a dialkoxysilane compound having a naphthyl group. The diol constituent unit (A) is derived from a diol compound, the details of which will be described later. Hereinafter, the thermoplastic resin will be described in detail.

[I. Thermoplastic resin]

<I-1. Types of constituent units>

(1) Silane constituent unit (S)

The silane constituent unit (S) in the thermoplastic resin is a constituent unit containing a silyl ether bond moiety in the above formula (1), that is, a constituent unit containing a -OSi($R^1R^2$)O- moiety. In the silane constituent unit (S), at least one of $R^1$ and $R^2$ is a polycyclic aryl group having 10 to 30 carbon atoms and optionally having a substituent.

The type of silane compound used for polymerization of such a thermoplastic resin can be selected as appropriate, depending on the type of silane constituent unit (S) formed in the main chain. The silane constituent unit (S) also acts as a linking group that links to the diol constituent unit (A), and the silane compound for forming the silane constituent unit (S) is hereinafter also referred to as linking agent.

At least one of $R^1$ and $R^2$ in the above formula (1) is a polycyclic aryl group having 10 to 30 carbon atoms, and the polycyclic aryl group optionally has a substituent. The number of carbon atoms in the polycyclic aryl group optionally having a substituent is preferably 10 to 24, more preferably 10 to 20, and still more preferably 10 to 16.

In the silane constituent unit (S), it is preferable that $R^1$ and $R^2$ be each independently selected from polycyclic aryl groups having 10 to 30 carbon atoms and optionally having a substituent. It is also preferable that $R^1$ and $R^2$ be each the polycyclic aryl group that may contain a substituent.

Examples of the aromatic ring in the polycyclic aryl group in the silane constituent unit (S) include a naphthalene ring, a phenanthrene ring, an anthracene ring, a pyrene ring, a perylene ring, a triphenylene ring, a tetracene ring (a naphthacene ring), a chrysene ring, a fluorene ring, an acenaphthacene ring, and a fluoranthene ring.

Therefore, specific examples of the polycyclic aryl group that is $R^1$ or $R^2$ in the silane constituent unit (S) include a naphthyl group, a phenanthrenyl group, an anthryl group (an anthracenyl group), a pyrenyl group, a perylenyl group, a triphenylenyl group, a tetracenyl group (a naphthacenyl group), a chrysenyl group, a fluorenyl group, an acenaphthacenyl group, and a fluoranthrene group.

The polycyclic aryl group that is $R^1$ or $R^2$ in the silane constituent unit (S) is preferably a fused polycyclic aryl group containing a fused ring, more preferably has a structure in which 2 to 4 benzene rings are fused, and still more preferably has a structure in which 2 to 3 benzene rings are fused.

Preferred specific examples of $R^1$ and $R^2$ in the silane constituent unit (S) include a naphthyl group containing a naphthalene ring, a phenanthrenyl group containing a phenanthrene ring, an anthryl group containing an anthracene ring, a pyrenyl group containing a pyrene ring, a triphenylenyl group containing a triphenylene ring, a naphthacenyl group

containing a naphthacene ring, and a chrysenyl group containing a chrysene ring, all of which optionally have a substituent.

The aromatic ring constituting the polycyclic aryl group in the silane constituent unit (S) may be bonded to the Si atom at any position.

For example, the polycyclic aryl group containing a naphthalene ring is a 1-naphthyl group, a 2-naphthyl group, or the like. The polycyclic aryl group containing an anthracene ring is a 1-anthryl group, a 2-anthryl group, a 9-anthryl group, or the like. The polycyclic aryl group containing a phenanthrene ring is a 1-phenanthrenyl group, a 2-phenanthrenyl group, a 9-phenanthrenyl group, or the like. The polycyclic aryl group containing a pyrene ring is a 1-pyrenyl group, a 9-pyrenyl group, a 10-pyrenyl group, or the like. The polycyclic aryl group containing a triphenylene ring is a 1-triphenylenyl group, a 1-naphthacenyl group, a 1-chrysenyl group, a 4-chrysenyl group, a 12-chrysenyl group, or the like. Among these specific examples, it is preferable that the polycyclic aryl group of $R^1$ or $R^2$ be a 1-naphthyl group, a 2-naphthyl group, a 9-phenanthrenyl group, or the like. That is, it is preferable that $R^1$ and $R^2$ be each independently selected from a naphthyl group optionally having a substituent, such as a 1-naphthyl group and a 2-naphthyl group, and a phenanthrenyl group optionally having a substituent, such as a 9-phenanthrenyl group.

It is preferable that $R^1$ other than the polycyclic aryl group and $R^2$ other than the polycyclic aryl group in the constituent unit of formula (1) be each independently an alkyl group having 1 to 20 carbon atoms and optionally having a substituent, or a monocyclic aryl group having 6 to 30 carbon atoms and optionally having a substituent.

When $R^1$ or $R^2$ other than the polycyclic aryl group in the silane constituent unit (S) is a monocyclic aryl group optionally having a substituent, the number of carbon atoms in total is preferably 6 to 20, the number of carbon atoms in total is more preferably 6 to 12, and the number of carbon atoms in total is particularly preferably 6 to 8.

Also, when $R^1$ or $R^2$ other than the polycyclic aryl group in the silane constituent unit (S) is an alkyl group optionally having a substituent, the number of carbon atoms in total is preferably 1 to 14 or 1 to 10, the number of carbon atoms in total is more preferably 1 to 6, and the number of carbon atoms in total is particularly preferably 1 or 2.

Preferred specific examples of $R^1$ and $R^2$ other than the polycyclic aryl group include a phenyl group, a benzyl group, a methyl group, an ethyl group, and a propyl group, and more preferably a phenyl group that may contain a substituent.

Examples of the above-mentioned substituent in the silane constituent unit (S) include a hydroxyl group, a halogen, an amino group, a vinyl group, a carboxyl group, a cyano group, a (meth)acryloxy group, a glycidyloxy group, and a mercapto group. Furthermore, when $R^1$ or $R^2$ is an aryl group, an alkyl group may be contained as a substituent, and when $R^1$ or $R^2$ is an alkyl group, an aryl group may be contained as a substituent.

Note that when the silane constituent unit (S) contains a substituent, such as the moiety represented by $R^1$ or $R^2$, the above-mentioned number of carbon atoms includes the number of carbon atoms in the substituent as well. That is, when the silane constituent unit (S) contains a substituent, the range of the above-mentioned number of carbon atoms is for the total number of carbon atoms, including the number of carbon atoms in the substituent.

In the thermoplastic resin, it is preferable that the proportion of the polycyclic aryl group that may contain a substituent be 30% by mol or more based on the total number of moles of $R^1$ and $R^2$ in all silane constituent units (S). The proportion of the polycyclic aryl group that may contain a substituent in all silane constituent units (S) in the thermoplastic resin is more preferably 40% by mol or more or 50% by mol or more, still more preferably 60% by mol or more or 70% by mol or more, and particularly preferably 80% by mol or more, 90% by mol or more, or 95% by mol or more.

Also, in the thermoplastic resin, it is preferable that the proportion of the silane constituent unit in which $R^1$ and $R^2$ in formula (1) are each the polycyclic aryl group that may contain a substituent group be 30% by mol or more based on the total number of moles of the silane constituent unit (S). The proportion of the constituent unit in which $R^1$ and $R^2$ are each the polycyclic aryl group that may contain a substituent in all silane constituent units (S) in the thermoplastic resin is more preferably 40% by mol or more or 50% by mol or more, still more preferably 60% by mol or more or 70% by mol or more, and particularly preferably 80% by mol or more, 90% by mol or more, or 95% by mol or more.

It is preferable that the silane compound for forming the silane constituent unit (S) be selected from a dialkoxysilane compound, a diaryloxysilane compound, and a monoalkoxymonoaryloxysilane compound, all of which are compounds containing a polycyclic aryl group that optionally has at least one substituent.

The dialkoxysilane compound includes at least any of a dialkyldialkoxysilane, a diaryldialkoxysilane, and a monoalkylmonoaryldialkoxysilane.

The diaryloxysilane compound includes at least any of a dialkyldiaryloxysilane, a diaryldiaryloxysilane, and a monoalkylmonoaryldiaryloxysilane.

Also, the monoalkoxymonoaryloxysilane compound includes at least any of a dialkylmonoalkoxymonoaryloxysilane, a diarylmonoalkoxymonoaryloxysilane, and a monoalkylmonoarylmonoalkoxymonoaryloxysilane compound.

The silane compound used for forming the silane constituent unit (S) is preferably represented by the general formula $Si(R^1R^2)(OR^3)_2$, wherein $R^1$ and $R^2$ are as described above. The $OR^3$ group in the general formula $Si(R^1R^2)(OR^3)_2$ of the silane compound each independently represents any of an alkoxy group and an aryloxy group. The two $-OR^3$ groups in the silane compound, which are alkoxy groups and/or aryloxy groups, are not introduced into the polymer chain (main chain) of the thermoplastic resin, and generate by-products, such as methanol and phenol (MeOH and PhOH), for

example. For this reason, there is no particular limitation on the type of alkoxy group or aryloxy group. However, in order to remove the by-products in the polymerization step as easily as possible from the reaction system, an aryloxy group and an alkoxy group with a relatively small number of carbon atoms are preferable, and for example, an aryloxy group having 8 or less carbon atoms or an alkoxy group having 3 or less carbon atoms is preferable, a phenoxy group (-$OC_6H_5$ group), a benzyloxy group, a methoxy group, an ethoxy group, or the like is more preferable, and a phenoxy group or a methoxy group is particularly preferable.

Preferred specific examples of the silane compound used for forming the silane constituent unit (S) include a naphthylalkyl dialkoxysilane, a dinaphthyl dialkoxysilane represented by the following formula (1-1a), a naphthylalkyl alkoxyphenoxysilane, a dinaphthyl alkoxyphenoxysilane, a naphthylalkyl diphenoxysilane, and dinaphthyl diphenoxysilane. More preferred specific examples of the silane compound include a dinaphthyl dialkoxysilane, such as di(1-naphthyl) dimethoxysilane, di(1-naphthyl)diethoxysilane, di(2-naphthyl)dimethoxysilane, and di(2-naphthyl)diethoxysilane.

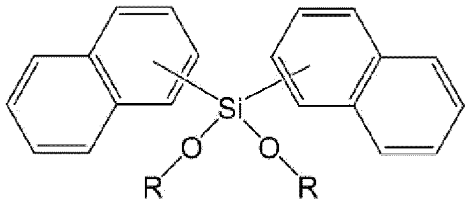

(1-1a)

In formula (1-1a), R each independently represents an alkyl group optionally containing a substituent, and the number of carbon atoms in the alkyl group is, for example, any of 1 to 6, preferably any of 1 to 4, and more preferably 1 or 2. In addition, specific examples of the substituent are as described above.

In addition, compounds in which either or both of the naphthyl groups in the silane compound represented by the above formula (1-1a) are replaced by a phenyl group, an alkyl group, a phenanthrenyl group, an anthryl group (an anthracenyl group), a pyrenyl group, a perylenyl group, a triphenylenyl group, a tetracenyl group (a naphthacenyl group), a chrysenyl group, a fluorenyl group, an acenaphtacenyl group, or a fluoranthrene group can also be preferred examples of the silane compound.

The silane compound is, for example, a (mononaphthyl)phenyl dialkoxysilane represented by the following formula (1-1b), a (monophenanthrenyl)phenyl dialkoxysilane represented by the following formula (1-1c), or the like, and it may be a (mononaphthyl)alkyl dialkoxysilane, a (monophenanthrenyl)alkyl dialkoxysilane, a (mononaphthyl)phenyl diaryloxysilane, a (monophenanthrenyl)phenyl diaryloxysilane, or the like.

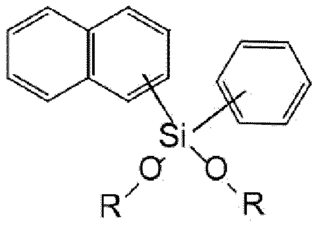

(1-1b)

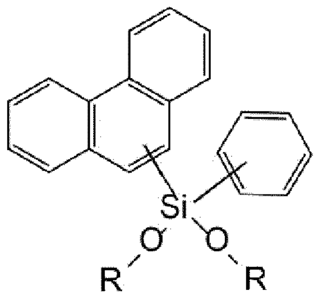

(1-1c)

In formula (1-1b) and formula (1-1c), R each independently represents an alkyl group optionally containing a substituent, and the number of carbon atoms in the alkyl group is, for example, any of 1 to 6, preferably any of 1 to 4, and more preferably 1 or 2. In addition, specific examples of the substituent are as described above.

In addition, as mentioned above, a constituent unit that is a -$OSi(R^1R^2)O$-moiety in which neither $R^1$ nor $R^2$ is a polycyclic aryl group can also be contained in thermoplastic resin, and as a silane compound for forming such a constituent unit, one having a phenyl group that may contain a substituent, such as diphenyldimethoxysilane or diphenyldiethoxysilane, is preferable.

As a silane compound constituting a constituent unit such as silane constituent unit (S), a single type of dialkoxysilane compound may be used, or several types of dialkoxysilane compounds may be used in combination.

(2) Diol constituent unit (A)

M, schematically shown in the above formula (1), is a diol constituent unit (A) derived from a dihydroxy compound.

The diol constituent unit (A) includes a constituent unit (B) derived from a diol including specific bisphenols and the like, a dinaphthalene constituent unit (N), a fluorene constituent unit (F), and the like. Most of diol constituent units (A) are bonded to the silane constituent unit at their terminals, and some diol constituent units (A) may be bonded to another diol constituent unit (A). Hereinafter, the diol constituent unit (A) will be described in detail.

(2-1) Constituent unit derived from bisphenol (bisphenol constituent unit (B))

For example, the constituent unit (B) derived from a diol, such as bisphenols, is represented by any of the following formulas (A-1) and (A-2).

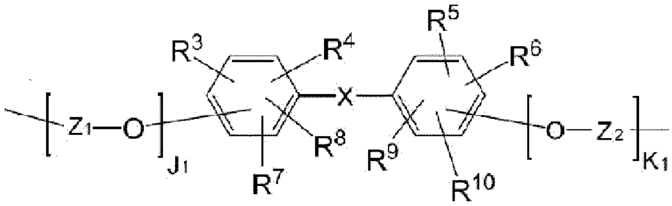

(A-1)

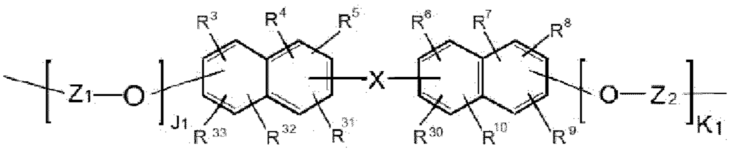

(A-2)

(In formulas (A-1) and (A-2), $R^3$ to $R^{10}$ and $R^{30}$ to $R^{33}$ are each independently hydrogen, a halogen, an alkoxy, an alkyl group having 1 to 20 carbon atoms and optionally having a substituent, an alkenyl group having 2 to 20 carbon atoms and optionally having a substituent, or an aryl group having 6 to 30 carbon atoms and optionally having a substituent.

When $R^3$ to $R^{10}$ and $R^{30}$ to $R^{33}$ are each an alkyl group optionally having a substituent, the number of carbon atoms in total is preferably 1 to 10, the number of carbon atoms in total is more preferably 1 to 4, and the number of carbon atoms in total is particularly preferably 1 or 2.

When $R^3$ to $R^{10}$ and $R^{30}$ to $R^{33}$ are each an alkenyl group optionally having a substituent, the number of carbon atoms in total is preferably 2 to 10, the number of carbon atoms in total is more preferably 2 to 6, and the number of carbon atoms in total is particularly preferably 2 to 4.

Also, when $R^3$ to $R^{10}$ and $R^{30}$ to $R^{33}$ are each an aryl group optionally having a substituent, the number of carbon atoms in total is preferably 6 to 20, the number of carbon atoms in total is more preferably 6 to 12, and the number of carbon atoms in total is particularly preferably 6 to 8.

$Z_1$ and $Z_2$ are each independently an alkylene group having 1 to 5 carbon atoms and optionally having a substituent. $Z_1$ and $Z^2$ are each preferably an alkylene group having 1 to 3 carbon atoms, and more preferably an alkylene group having 1 or 2 carbon atoms.

Also, in formulas (A-1) and (A-2), $J_1$ and $K_1$ are each independently an integer of 0 or more and 5 or less. $J_1$ and $K_1$ are each preferably an integer of 0 or more and 3 or less, more preferably an integer of 1 or more and 3 or less or 0 or more and 2 or less, and particularly preferably 1 or 2, for example.

Also, when $J_1$ and $K_1$ are both 1 or more, it is preferable that the constituent unit (B) be derived from a dihydroxy compound having an aliphatic hydrocarbon group bonded to a terminal hydroxyl group.

For example, it is preferable that the constituent unit (B) be formed by a dihydroxy compound in which the $-OZ_1-$ and $-OZ_2-$ moieties bonded to the cyclic skeleton of formulas (A-1) and (A-2) are each independently replaced by an alkyl group having 1 or more and 5 or less carbon atoms and having a hydroxyl group at a terminal (an alkyl group in which hydrogen at a terminal is replaced by a hydroxyl group), such as $-CH_2OH$, $-CH_2CH_2OH$, and $-CH_2CH_2CH_2OH$.

Also, the constituent unit (B) may be formed by using an aliphatic dihydroxy compound not having the cyclic skeleton of formulas (A-1) and (A-2) and containing an alkyl group having 1 or more and 5 or less carbon atoms and having a terminal hydroxyl group (an alkyl group in which hydrogen at a terminal is replaced by a hydroxyl group), such as $-CH_2OH$, $-CH_2CH_2OH$, and $-CH_2CH_2CH_2OH$, in combination with the above-mentioned aromatic dihydroxy compound, or only such an aliphatic dihydroxy compound may be used to constitute a constituent unit as an alternative to the constituent unit (B).

Note that the number of carbon atoms in the above-mentioned alkyl group having a terminal hydroxyl group is preferably 1 or more and 3 or less, and more preferably 1 or 2.

In formulas (A-1) and (A-2), X is each independently a single bond or any of structural formulas represented by the following formula (2).

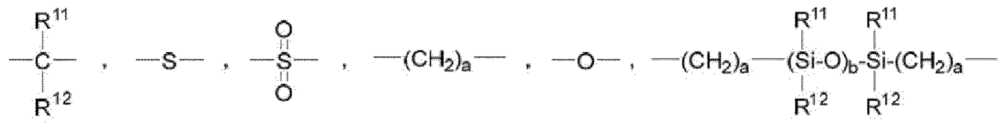

(2)

In formula (2), $R^{11}$ and $R^{12}$ each independently represent hydrogen, a halogen, an alkyl group having 1 to 20 carbon atoms and optionally having a substituent, or an aryl group having 6 to 30 carbon atoms and optionally having a substituent, or $R^{11}$ and $R^{12}$ are bonded to each other to form a carbocycle or heterocycle having 1 to 20 carbon atoms and optionally having a substituent.

a and b each independently represent an integer of 0 or 1 or more and 5000 or less.

$R^{11}$ and $R^{12}$ are preferably each independently hydrogen, an alkyl group having 1 to 10 carbon atoms and optionally having a substituent, or an aryl group having 6 to 16 carbon atoms and optionally having a substituent.

In formula (2), a and b are each independently an integer of 0 or 1 or more and 5000 or less. a and b are each preferably an integer of 1000 or less, more preferably an integer of 500 or less, and still more preferably an integer of 100 or less.

Also, in the siloxane constituent unit, it is preferable that X be a fluorene ring structure formed by $R^{11}$ and $R^{12}$ being bonded to each other.

Examples of the substituent in the constituent unit (B) include a hydroxyl group, a halogen, an amino group, a vinyl group, a carboxyl group, a cyano group, a (meth)acryloxy group, a glycidyloxy group, and a mercapto group. When the constituent unit (B) contains a substituent, the range of the above-mentioned number of carbon atoms is for the total number of carbon atoms, including the number of carbon atoms in the substituent.

Specific examples of the constituent unit (B) include a constituent unit derived from a bisphenol compound, such as bisphenol A, bisphenol AP, bisphenol AF, bisphenol B, bisphenol C, bisphenol BP, bisphenol E, bisphenol F, bisphenol G, bisphenol M, bisphenol S, bisphenol P, bisphenol PH, bisphenol TMC, or bisphenol Z.

(2-2) Dinaphthalene constituent unit (N)

The dinaphthalene constituent unit (N) is derived from a dinaphthalene-containing dihydroxy compound. It is preferable that the dinaphthalene-containing dihydroxy compound for forming the dinaphthalene constituent unit (N) be selected from, for example, those represented by the following formula (3).

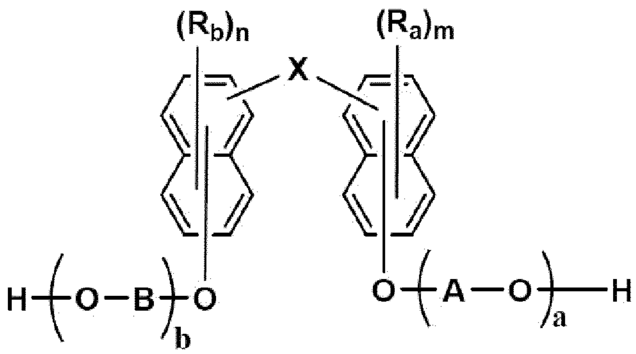

(3)

In general formula (3), Ra and Rb are each independently selected from the group consisting of a halogen atom, an alkyl group having 1 to 20 carbon atoms and optionally having a substituent, an alkoxyl group having 1 to 20 carbon atoms and optionally having a substituent, a cycloalkyl group having 5 to 20 carbon atoms and optionally having a substituent, a cycloalkoxyl group having 5 to 20 carbon atoms and optionally having a substituent, an aryl group having 6 to 20 carbon atoms and optionally having a substituent, a heteroaryl group having 6 to 20 carbon atoms and optionally having a substituent, which contains one or more heterocycle atoms selected from O, N, and S, an aryloxy group having 6 to 20 carbon atoms and optionally having a substituent, and -C≡C-Rh. Rh represents an aryl group having 6 to 20 carbon atoms and optionally having a substituent, or a heteroaryl group having 6 to 20 carbon atoms and optionally having a substituent, which contains one or more heterocycle atoms selected from O, N, and S.

Ra and Rb are preferably a hydrogen atom, an aryl group having 6 to 20 carbon atoms and optionally having a substituent, or a heteroaryl group having 6 to 20 carbon atoms and optionally having a substituent, which contains one or

more heterocycle atoms selected from O, N, and S, more preferably a hydrogen atom or an aryl group having 6 to 20 carbon atoms and optionally having a substituent, and still more preferably a hydrogen atom or an aryl group having 6 to 12 carbon atoms and optionally having a substituent.

In general formula (3), X represents a single bond or a fluorene group optionally having a substituent. X is preferably a single bond or a fluorene group having 12 to 20 carbon atoms in total and optionally having a substituent.

In general formula (3), A and B are each independently an alkylene group having 1 to 5 carbon atoms and optionally having a substituent, and preferably an alkylene group having 2 or 3 carbon atoms.

In general formula (3), m and n are each independently an integer of 0 to 6, preferably an integer of 0 to 3, and more preferably 0 or 1.

In general formula (3), a and b are each independently an integer of 0 to 10, preferably an integer of 1 to 3, and more preferably 1 or 2.

Examples of the above-mentioned substituent in the dinaphthalene constituent unit (N) include a hydroxyl group, a halogen, an amino group, a vinyl group, a carboxyl group, a cyano group, a (meth)acryloxy group, a glycidyloxy group, and a mercapto group. When the dinaphthalene constituent unit (N) contains a substituent, the range of the above-mentioned number of carbon atoms is for the total number of carbon atoms, including the number of carbon atoms in the substituent.

Specific examples of the dinaphthalene constituent unit (N) include those derived from 2,2'-bis(2-hydroxyethoxy)-6,6'-diphenyl-1,1'-binaphthalene (DPBN), 2,2'-bis(2-hydroxyethoxy)-6,6'-di(naphthalen-2-yl)-1,1'-binaphthalene (2NBN), 2,2'-bis(2-hydroxyethoxy)-1,1'-binaphthalene (BNE), and the like, and it is more preferably a constituent unit derived from 2NBN, DPBN, or the like.

In the thermoplastic resin containing the dinaphthalene constituent unit (N) as described above, the effect of higher heat resistance is recognized compared to thermoplastic resins containing a constituent unit containing an alicyclic ring derived from an alicyclic diol, a constituent unit containing a monocyclic aromatic ring derived from a bisphenol, and the like.

(2-3) Fluorene constituent unit (F)

The fluorene constituent unit (F) is derived from a fluorene ring-containing dihydroxy compound. It is preferable that the fluorene ring-containing dihydroxy compound be one represented by the following general formula (3), for example.

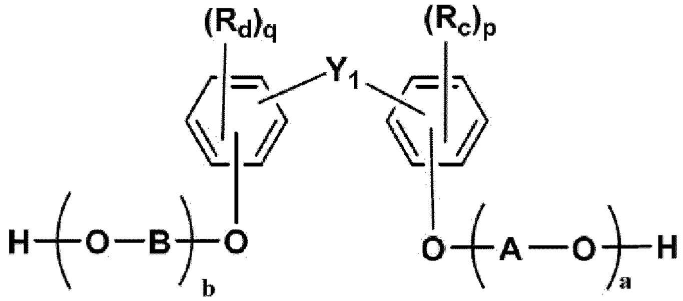

(4)

In general formula (4), Rc and Rd are each independently selected from the group consisting of a halogen atom, an alkyl group having 1 to 20 carbon atoms and optionally having a substituent, an alkoxyl group having 1 to 20 carbon atoms and optionally having a substituent, a cycloalkyl group having 5 to 20 carbon atoms and optionally having a substituent, a cycloalkoxyl group having 5 to 20 carbon atoms and optionally having a substituent, and an aryl group having 6 to 20 carbon atoms and optionally having a substituent.

Rc and Rd are preferably a hydrogen atom, an aryl group having 6 to 20 carbon atoms and optionally having a substituent, or a heteroaryl group having 6 to 20 carbon atoms and optionally having a substituent, which contains one or more heterocycle atoms selected from O, N, and S, more preferably a hydrogen atom or an aryl group having 6 to 20 carbon atoms and optionally having a substituent, and still more preferably a hydrogen atom or an aryl group having 6 to 12 carbon atoms and optionally having a substituent.

In general formula (4), $Y_1$ contains at least a fluorene group optionally having a substituent. However, in the thermoplastic resin, in addition to the fluorene constituent unit (F) in which $Y_1$ is a fluorene group optionally having a substituent, a fluorene constituent unit with different $Y_1$ may also be contained. That is, in general formula (4), $Y_1$ may be a single bond or any of structural formulas represented by the following formulas (8) to (14), and is preferably a fluorene group, a single bond, or a structural formula represented by the following formula (8).

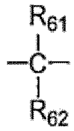
(8)

$-S-$
(9)

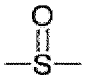
(10)

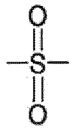
(11)

$-(CH_2)_r-$
(12)

$-O-$
(13)

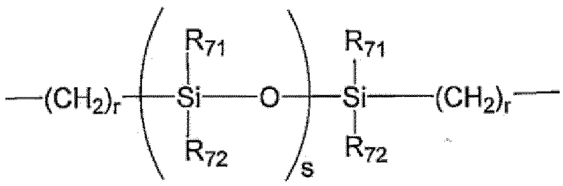
(14)

In formulas (8) to (14), $R_{61}$, $R_{62}$, $R_{71}$, and $R_{72}$ each independently represent a hydrogen atom, a halogen atom, an alkyl group having 1 to 20 carbon atoms and optionally having a substituent, or an aryl group having 6 to 30 carbon atoms and optionally having a substituent, or $R_{61}$ and $R_{62}$ or $R_{71}$ and $R_{72}$ are bonded to each other to form and represent a carbocycle or heterocycle having 1 to 20 carbon atoms and optionally having a substituent.

In formulas (8) to (14), r and s are each independently an integer of 0 to 5000.

In the above general formula (4), A and B are each independently an alkylene group having 1 to 5 carbon atoms and optionally having a substituent, and preferably an alkylene group having 2 or 3 carbon atoms. In the above general formula (4), p and q are each independently an integer of 0 to 4, and preferably 0 or 1. Also, in the above general formula (4), a and b are each independently an integer of 0 to 10, preferably an integer of 0 to 5, and more preferably an integer of 0 to 2, such as 0 or 1.

Examples of the above-mentioned substituent in the fluorene constituent unit (F) include a hydroxyl group, a halogen, an amino group, a vinyl group, a carboxyl group, a cyano group, a (meth)acryloxy group, a glycidyloxy group, and a mercapto group. When the fluorene constituent unit (F) contains a substituent, the range of the above-mentioned number of carbon atoms is for the total number of carbon atoms, including the number of carbon atoms in the substituent.

Specific examples of the fluorene constituent unit (F) include those derived from BPEF (9,9-bis(4-(2-hydroxyethoxy)phenyl)fluorene), BPPEF (9,9-bis(4-(2-hydroxyethoxy)-3-phenylphenyl)fluorene), 9,9-bis[6-(2-hydroxyethoxy)naphthalen-2-yl]fluorene (BNEF), bisphenol A, bisphenol AP, bisphenol AF, bisphenol B, bisphenol BP, bisphenol C, bis(4-hydroxyphenyl)-2,2-dichloroethylene, bisphenol E, bisphenol F, bisphenol G, bisphenol M, bisphenol S, bisphenol P, bisphenol PH, bisphenol TMC, bisphenol P-AP (4,4'-(1-phenylethylidene)bisphenol), bisphenol P-CDE (4,4'-cyclododecylidenebisphenol), bisphenol P-HTG (4,4'-(3,3,5-trimethylcyclohexylidene)bisphenol), bisphenol P-MIBK (4,4'-(1,3-dimethylbutylidene)bisphenol), bisphenol PEO-FL (bisphenoxyethanolfluorene), bisphenol P-3MZ (4-[1-(4-hydroxyphenyl)-3-methylcyclohexyl]phenol), bisphenol OC-FL (4,4'-[1-[4-[1-(4-hydroxyphenyl)-1-methylethyl]phenyl]ethylidene]bisphenol), bisphenol Z, BP-2EO (2,2'-[[1,1'-biphenyl]-4,4'-diylbis(oxy)bisethanol), S-BOC (4,4'-(1-methylethylidene)bis(2-methylphenol)), TrisP-HAP (4,4',4"-ethylidenetrisphenol), and the like.

Among these, more preferred specific examples of the fluorene constituent unit (F) include one derived from BNEF, BPEF, or BPPEF.

Note that the fluorene ring-containing dihydroxy compound, which is the compound for forming the fluorene constituent unit (F), is hereinafter also referred to as component A, and the dinaphthalene-containing dihydroxy compound, which is the compound for forming the above-mentioned dinaphthalene constituent unit (N), is hereinafter also referred to as component B.

When the component B is used together with the component A and they are copolymerized, a thermoplastic resin with a high refractive index can be obtained. Also, in a thermoplastic resin produced using the component B, it is easily possible to contain a moderate amount of a low molecular weight body, the details of which will be described later. In such a thermoplastic resin, it is expected that there are advantages such as improved plasticity during molding, improved productivity, and lower energy consumption.

(2-4) Optional constituent unit (constituent unit (Z))

In the thermoplastic resin, a constituent unit (optional constituent unit (Z)) other than the silane constituent unit, the specific diol constituent unit (B), dinaphthalene constituent unit (N), and fluorene constituent unit (F), which can be considered as the main components constituting the main chain, may be contained. It is, for example, any of the constituent units derived from the diol compounds described below.

Examples of the constituent unit (Z) that may be contained in the thermoplastic resin include those derived from a diol compound represented by any of the following formulas ($I^1$) to ($I^6$). These diol compounds may be abbreviated as diol

compounds ($I^1$) to ($I^6$), respectively.

The diol compound ($I^1$) is represented by the following formula ($I^1$):

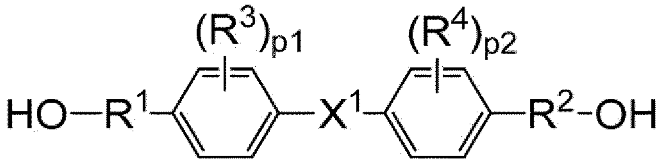

( $I^1$ )

wherein

$R^1$ and $R^2$ independently represent $-(CR^5R^6)_{q1}-$ or $-(-O-(CR^5R^6)_{q2}-)_{q3}-$ (wherein $R^5$ and $R^6$ independently represent H or a $C_{1-6}$ alkyl group, q1 represents an integer of 0 or more and 10 or less, q2 represents an integer of 1 or more and 10 or less, q3 represents an integer of 1 or more and 10 or less, and when q1 or q2 is an integer of 2 or more, a plurality of $R^5$ or $R^6$ may be the same as or different from each other);

$R^3$ and $R^4$ independently represent one or more halogeno groups selected from the group consisting of chloro, bromo, and iodo, a $C_{1-20}$ aliphatic hydrocarbon group, a $C_{1-20}$ alkoxyl group, a $C_{3-20}$ cycloalkyl group, a $C_{6-20}$ aromatic hydrocarbon group, a $C_{7-20}$ aralkyl group, a $C_{6-20}$ aromatic hydrocarbon oxy group, or a $C_{3-20}$ cycloalkoxyl group;

$X^1$ is any of the groups shown below:

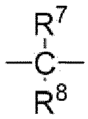 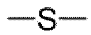 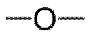 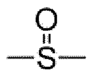 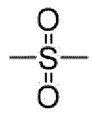 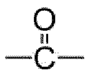 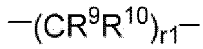

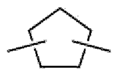 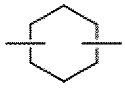 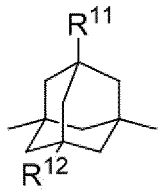 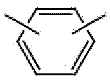 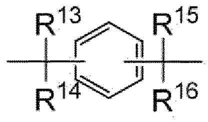

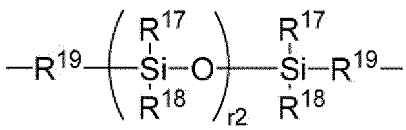

wherein

$R^7$ and $R^8$ independently represent H, one or more halogeno groups selected from the group consisting of chloro, bromo, and iodo, a $C_{1-20}$ aliphatic hydrocarbon group optionally having a substituent $\alpha$, a $C_{1-20}$ alkoxyl group optionally having a substituent $\alpha$, or a $C_{6-20}$ aromatic hydrocarbon group optionally having a substituent $\beta$, or $R^7$ and $R^8$ may be bonded to form a $C_{3-20}$ carbocycle or a 5- to 12-membered heterocycle;

$R^9$ and $R^{10}$ independently represent H or a $C_{1-6}$ alkyl group, and when r1 is an integer of 2 or more, a plurality of $R^9$ or $R^{10}$ may be the same as or different from each other;

$R^{11}$ to $R^{18}$ independently represent one or more halogeno groups selected from the group consisting of chloro, bromo, and iodo, a $C_{1-20}$ aliphatic hydrocarbon group optionally having a substituent $\alpha$, a $C_{1-20}$ alkoxyl group optionally having a substituent $\alpha$, or a $C_{6-12}$ aromatic hydrocarbon group optionally having a substituent $\beta$;

$R^{19}$ represents a $C_{1-9}$ alkylene group optionally having a substituent $\alpha$;

r1 represents an integer of 1 or more and 20 or less; and

r2 represents an integer of 1 or more and 500 or less.

In the above formula ($I^1$),

p1 and p2 independently represent an integer of 0 or more and 4 or less;

the substituent a is one or more substituents selected from a $C_{1-6}$ alkoxyl group, a $C_{1-7}$ acyl group, one or more halogeno groups selected from the group consisting of chloro, bromo, and iodo, an amino group, a nitro group, a cyano

group, and a carbamoyl group; and
the substituent β is one or more substituents selected from a $C_{1-6}$ alkyl group, a $C_{1-6}$ alkoxyl group, a $C_{1-7}$ acyl group, one or more halogeno groups selected from the group consisting of chloro, bromo, and iodo, an amino group, a nitro group, a cyano group, and a carbamoyl group.

Note that when the diol compound contains a substituent, the description of the range of the number of carbon atoms is for the total number of carbon atoms, including the number of carbon atoms in the substituent.

Examples of $-(CR^5R^6)_{q1}-$, which is a choice for $R^1$ and $R^2$ in the above formula ($I^1$), may include an ethylene group ($-CH_2CH_2-$), and examples of $-O-(CR^5R^6)_{q2}-$ may include $-O-CH_2CH_2-$ and $-O-CH(CH_3)CH_2-$. Note that when $R^1$ is $-(-O-(CR^5R^6)_{q2}-)_{q3}-$, HO-$R^1$-Ph is not HO-$(-O-(CR^5R^6)_{q2}-)_{q3}$-Ph but HO-$(-(CR^5R^6)_{q2}-O-)_{q3}$-Ph from the standpoint of stability. q2 is preferably 2 or more.

As the "halogeno groups," chloro, bromo, and iodo can be exemplified, with chloro or bromo being preferable, and chloro being more preferable.

The "$C_{1-20}$ aliphatic hydrocarbon group" refers to a linear or branched monovalent aliphatic hydrocarbon group having 1 or more and 20 or less carbon atoms, and examples thereof may include a $C_{1-20}$ alkyl group, a $C_{2-20}$ alkenyl group, and a $C_{2-20}$ alkynyl group. Examples of the $C_{1-20}$ alkyl group include methyl, ethyl, n-propyl, isopropyl, n-butyl, isobutyl, s-butyl, t-butyl, n-pentyl, n-hexyl, n-octyl, n-decyl, n-pentadecyl, and n-icosyl. It is preferably a $C_{1-10}$ alkyl group or a $C_{1-6}$ alkyl group, more preferably a $C_{1-4}$ alkyl group or a $C_{1-2}$ alkyl group, and even more preferably methyl. Examples of the $C_{2-20}$ alkenyl group include ethenyl (vinyl), 1-propenyl, 2-propenyl (allyl), isopropenyl, 2-butenyl, 3-butenyl, isobutenyl, pentenyl, hexenyl, octenyl, decenyl, pentadecenyl, and icosenyl. It is preferably a $C_{2-10}$ alkenyl group or a $C_{2-6}$ alkenyl group, and more preferably ethenyl (vinyl) or 2-propenyl (allyl). Examples of the $C_{2-20}$ alkynyl group include ethynyl, 1-propynyl, 2-propynyl, 2-butynyl, 3-butynyl, pentynyl, hexynyl, octynyl, decynyl, pentadecynyl, and icosynyl. It is preferably a $C_{2-10}$ alkynyl group or a $C_{2-6}$ alkynyl group, and more preferably a $C_{2-4}$ alkynyl group or a $C_{2-3}$ alkynyl group.

The "$C_{1-20}$ alkoxyl group" refers to a linear or branched monovalent aliphatic hydrocarbon oxy group having 1 or more and 20 or less carbon atoms. Examples thereof include methoxy, ethoxy, n-propoxy, isopropoxy, n-butoxy, isobutoxy, t-butoxy, n-pentoxy, and n-hexoxy, and it is preferably a $C_{1-10}$ alkoxyl group or a $C_{1-6}$ alkoxyl group, more preferably a $C_{1-4}$ alkoxyl group or a $C_{1-2}$ alkoxyl group, and even more preferably methoxy.

The "$C_{3-20}$ cycloalkyl group" refers to a monovalent cyclic saturated aliphatic hydrocarbon group having 3 or more and 20 or less carbon atoms. Examples thereof include cyclopropyl, cyclobutyl, cyclopentyl, cyclohexyl, and adamantyl. It is preferably a $C_{3-10}$ cycloalkyl group.

The "$C_{6-20}$ aromatic hydrocarbon group" refers to a monovalent aromatic hydrocarbon group having 6 or more and 20 or less carbon atoms. Examples thereof include phenyl, indenyl, naphthyl, biphenyl, acenaphthenyl, fluorenyl, phenalenyl, phenanthrenyl, anthracenyl, triphenylenyl, pyrenyl, chrysenyl, naphthacenyl, and perylenyl, and it is preferably a $C_{6-12}$ aromatic hydrocarbon group, and more preferably phenyl.

The "$C_{7-20}$ aralkyl group" refers to an alkyl group having 7 or more and 20 or less atoms, substituted with one aromatic hydrocarbon group. Examples thereof may include benzyl, phenethyl, phenylpropyl, naphthylmethyl, naphthylethyl, and biphenylmethyl, with benzyl being preferable.

The "$C_{6-20}$ aromatic hydrocarbon oxy group" refers to a monovalent aromatic hydrocarbon oxy group having 6 or more and 20 or less carbon atoms. Examples thereof include phenoxy, indenyloxy, naphthyloxy, biphenyloxy, acenaphthenyloxy, fluorenyloxy, phenalenyloxy, phenanthrenyloxy, anthracenyloxy, anthracenyloxy, triphenylenyloxy, pyrenyloxy, chrysenyloxy, naphthacenyloxy, and perylenyloxy, and it is preferably a $C_{6-12}$ aromatic hydrocarbon oxy group, and more preferably phenoxy.

The "$C_{3-20}$ cycloalkoxyl group" refers to a monovalent cyclic saturated aliphatic hydrocarbon oxy group having 3 or more and 20 or less carbon atoms. Examples thereof include cyclopropyloxy, cyclobutyloxy, cyclopentyloxy, cyclohexyloxy, adamantyloxy, and cyclododecanyl. It is preferably a $C_{3-12}$ cycloalkyloxy group.

Examples of the substituent α may include one or more substituents selected from a $C_{1-6}$ alkoxyl group, a $C_{1-7}$ acyl group, one or more halogeno groups selected from the group consisting of chloro, bromo, and iodo, an amino group, a nitro group, a cyano group, and a carbamoyl group.

Examples of the substituent β may include one or more substituents selected from a $C_{1-6}$ alkyl group, a $C_{1-6}$ alkoxyl group, a $C_{1-7}$ acyl group, one or more halogeno groups selected from the group consisting of chloro, bromo, and iodo, an amino group, a nitro group, a cyano group, and a carbamoyl group.

The "amino group" shall include an unsubstituted amino group ($-NH_2$), as well as a mono-$C_{1-6}$ alkylamino group, which is substituted with one $C_{1-6}$ alkyl group, and a di-$C_{1-6}$ alkylamino group, which is substituted with two $C_{1-6}$ alkyl groups. Examples of such an amino group may include: amino ($-NH_2$); a mono-$C_{1-6}$ alkylamino group, such as methylamino, ethylamino, n-propylamino, isopropylamino, n-butylamino, isobutylamino, t-butylamino, n-pentylamino, and n-hexylamino; and a di-$C_{1-6}$ alkylamino group, such as dimethylamino, diethylamino, di(n-propyl)amino, diisopropylamino, di(n-butyl)amino, diisobutylamino, di(n-pentyl)amino, di(n-hexyl)amino, ethylmethylamino, methyl(n-propyl)amino, n-butylmethylamino, ethyl(n-propyl)amino, and n-butylethylamino. It is preferably an unsubstituted amino group.

The "$C_{1-7}$ acyl group" refers to the remaining atomic group of an aliphatic carboxylic acid having 1 or more and 7 or less carbon atoms, excluding OH. Examples thereof include formyl, acetyl, ethylcarbonyl, n-propylcarbonyl, isopropylcarbonyl, n-butylcarbonyl, isobutylcarbonyl, t-butylcarbonyl, n-pentylcarbonyl, and n-hexylcarbonyl, and it is preferably a $C_{1-4}$ acyl group, and more preferably acetyl.

There is no particular restriction on the number of substituents of the substituent $\alpha$, as long as it is substitutable, but for example, it can be 1 or more and 20 or less. Such a number of substituents is preferably 10 or less, more preferably 5 or less or 3 or less, and even more preferably 2 or less or 1.

There is no particular restriction on the number of substituents of the substituent $\beta$, as long as it is substitutable, but for example, it can be 1 or more and 10 or less. Such a number of substituents is preferably 5 or less, more preferably 3 or less, and even more preferably 2 or less or 1.

Examples of the $C_{5-20}$ carbocycle that $R^7$ and $R^8$ are bonded to form may include a $C_{3-20}$ cycloalkyl group optionally having a substituent $\beta$, and a fused ring of a cycloalkyl group and an aromatic hydrocarbon group. Examples of such a fused ring may include acenaphthenyl and fluorenyl.

Examples of the 5- to 12-membered heterocycle that $R^7$ and $R^8$ are bonded to form may include oxiranyl, aziridinyl, tetrahydrofuranyl, tetrahydrothiophenyl, pyrrolidinyl, oxathiolanyl, piperidinyl, and 1(3H)-isobenzofuranonyl.

Specific examples of the diol compound ($I^1$) include the following compounds.

Examples thereof may include bis(4-hydroxyphenyl)methane, bis(2-hydroxyphenyl)methane, 2,4'-dihydroxydiphenylmethane, bis(4-hydroxyphenyl) ether, bis(4-hydroxyphenyl)sulfone, 2,4'-dihydroxydiphenylsulfone, bis(2-hydroxyphenyl)sulfone, bis(4-hydroxy-3-methylphenyl)sulfone, bis(4-hydroxyphenyl) sulfoxide, bis(4-hydroxyphenyl) sulfide, bis(4-hydroxyphenyl) ketone, 1,1-bis(4-hydroxyphenyl)ethane, 1,1-bis(4-hydroxyphenyl)-1-phenylethane, bis(4-hydroxyphenyl)diphenylmethane, 2,2-bis(4-hydroxyphenyl)propane, 2,2-bis(4-hydroxy-3-methylphenyl)propane, 1,1-bis(4-hydroxy-3-methylphenyl)ethane, bis(4-hydroxy-3-methylphenyl)methane, 2,2-bis(4-hydroxy-3-t-butylphenyl)propane, 2,2-bis(4-hydroxyphenyl)butane, 1,1-bis(4-hydroxyphenyl)cyclohexane, 1,1-bis(4-hydroxy-3-methylphenyl)cyclohexane, 1,1-bis(4-hydroxyphenyl)cycloundecane, 1,1-bis(4-hydroxyphenyl)cyclododecane, 2,2-bis(4-hydroxy-3-allylphenyl)propane, 3,3,5-trimethyl-1,1-bis(4-hydroxyphenyl)cyclohexane, 9,9-bis(4-hydroxy-3-ethylphenyl)fluorene, 9,9-bis(4-hydroxy-3-methylphenyl)fluorene, 9,9-bis(4-hydroxyphenyl)fluorene, $\alpha,\omega$-bis[3-(o-hydroxyphenyl)propyl]polydimethyldiphenyl random copolymerized siloxane, $\alpha,\omega$-bis[3-(o-hydroxyphenyl)propyl]polydimethylsiloxane, 4,4'-[1,4-phenylenebis(1-methylethylidene)]bisphenol, 4,4'-[1,3-phenylenebis(1-methylethylidene)]bisphenol, 2,2-bis(4-hydroxyphenyl)butane, 1,1-bis(4-hydroxyphenyl)-2-ethylhexane, 1,1-bis(4-hydroxyphenyl)-2-methylpropane, 2,2-bis(4-hydroxyphenyl)-4-methylpentane, 1,1-bis(4-hydroxyphenyl)decane, 1,3-bis(4-hydroxyphenyl)-5,7-dimethyladamantane, 9,9-bis[4-(2-hydroxyethoxy)phenyl]fluorene, 9,9-bis[4-(2-hydroxyethoxy)-3-methylphenyl]fluorene, 9,9-bis[4-(2-hydroxyethoxy)-3-t-butylphenyl]fluorene, 9,9-bis[4-(2-hydroxyethoxy)-3-isopropylphenyl]fluorene, 9,9-bis[4-(2-hydroxyethoxy)-3-cyclohexylphenyl]fluorene, 9,9-bis[4-(2-hydroxyethoxy)-3-phenylphenyl]fluorene, 4-(9-(4-hydroxyethoxy)phenyl)-9H-fluoren-9-yl)phenol, 2,2-bis(4-(2-hydroxyethoxy)phenyl)propane, 4,4-bis(2-hydroxyethoxy)biphenyl, 2,2'(9H-fluorene-9,9'-diyl)bis(ethan-1-ol), 9H-fluorene-9,9-diyl)dimethanol, 2,2'-(1,4-phenylene)bis(ethan-1-ol), 2,2'-(1,4-phenylene)bis(methan-1-ol), 2,2'-(1,4phenylenebis(oxy))bis(ethan-1-ol), 1,1-bis(4-hydroxyphenyl)cyclododecane, 1,1-bis(4-hydroxy-3-methylphenyl)cyclododecane, 1,1-bis(4-hydroxy-3-phenylphenyl)cyclododecane, 1,1-bis(4-hydroxy-3-t-butylphenyl)cyclododecane, 1,1-bis(4-hydroxy-3-sec-butylphenyl)cyclododecane, 1,1-bis(4-hydroxy-3-allylphenyl)cyclododecane, 1,1-bis(4-hydroxy-3,5-dimethylphenyl)cyclododecane, 1,1-bis(4-hydroxy-3-fluorophenyl)cyclododecane, 1,1-bis(4-hydroxy-3-chlorophenyl)cyclododecane, 1,1-bis(4-hydroxy-3-bromophenyl)cyclododecane, 7-ethyl-1,1-bis(4-hydroxyphenyl)cyclododecane, and 5,6-dimethyl-1,1-bis(4-hydroxyphenyl)cyclododecane.

Among these, in particular, bis(4-hydroxyphenyl)methane, bis(2-hydroxyphenyl)methane, 2,4'-dihydroxydiphenylmethane, bis(4-hydroxyphenyl) ether, 2,2-bis(4-hydroxyphenyl)propane, 2,2-bis(4-hydroxy-3-methylphenyl)propane, 1,1-bis(4-hydroxyphenyl)cyclohexane, 9,9-bis[4-(2-hydroxyethoxy)phenyl]fluorene, 9,9-bis[4-(2-hydroxyethoxy)-3-phenylphenyl]fluorene, 1,1-bis(4-hydroxyphenyl)cyclododecane, and 1,1-bis(4-hydroxy-3-methylphenyl)cyclododecane are preferable. Furthermore, representative diol compounds ($I^1$) are shown below:

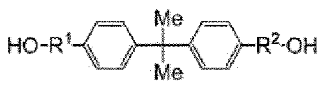
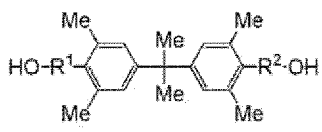

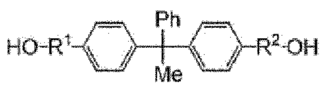
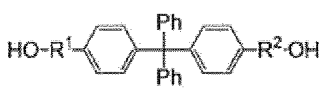

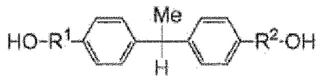
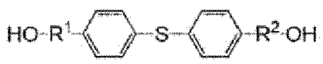
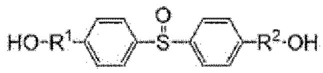
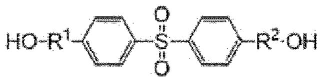
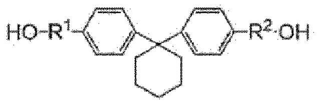
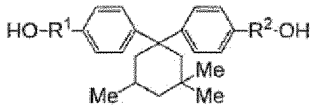
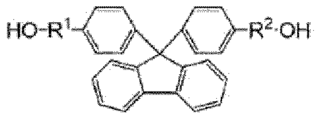
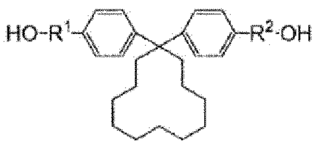
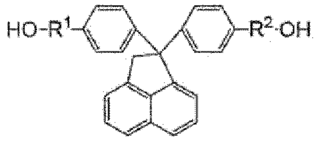
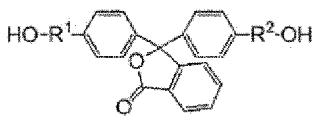
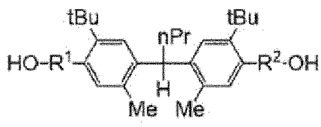

wherein $R^1$ and $R^2$ represent the same definition as described above.

However, in some cases, bisphenol A, bisphenol AP, bisphenol B, bisphenol BP, bisphenol E, bisphenol F, bisphenol TMC, and bisphenol Z may be excluded from the diol compound ($I^1$).

The diol compound ($I^2$) is represented by the following formula ($I^2$):

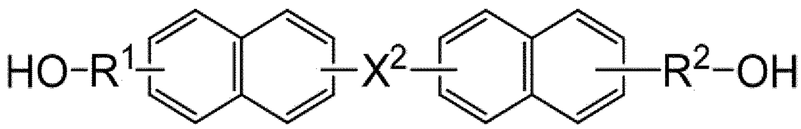 ( $I^2$ )

wherein $R^1$ and $R^2$ represent the same definition as described above, and $X^2$ represents the same definition as $X^1$.

Specific examples of the diol compound ($I^2$) include 9,9-bis[6-(1-hydroxymethoxy)naphthalen-2-yl]fluorene, 9,9-bis[6-(2-hydroxyethoxy)naphthalen-2-yl]fluorene, 9,9-bis[6-(3-hydroxypropoxy)naphthalen-2-yl]fluorene, and 9,9-bis[6-(4-hydroxybutoxy)naphthalen-2-yl]fluorene. Among the above, 9,9-bis[6-(2-hydroxyethoxy)naphthalen-2-yl]fluorene is preferable.

The diol compound ($I^3$) is represented by the following formula ($I^3$):

$$HO\text{-}R^1\text{-}X^3\text{-}R^2\text{-}OH \qquad (I^3)$$

wherein $R^1$ and $R^2$ represent the same definition as described above, and $X^3$ represents a $C_{15\text{-}32}$ divalent aromatic hydrocarbon group.

Examples of the $C_{15\text{-}32}$ divalent aromatic hydrocarbon group may include: a $C_{15\text{-}32}$ divalent fused polycyclic aromatic hydrocarbon group, such as fluoranthenylene, acephenanthrylenylene, aceanthrylenylene, triphenylene, pyrenylene, chrysenylene, naphthacenylene, pleiadenylene, pycenylene, perylenylene, biphenylene, pentaphenylene, pentacenylene, tetraphenylenylene, hexaphenylene, hexacenylene, rubicenylene, coronenylene, trinaphthylenylene, heptaphenylene, heptacenylene, pyranthrenylene, and ovalenylene; and terphenylene and quaterphenylene.

There is no particular restriction on the number of $R^3$ groups on $X^3$, as long as they are substitutable, but for example, it can be 1 or more and 10 or less, with 8 or less or 5 or less being preferable, and 1 or 2 being more preferable.

Specific examples of the diol compound ($I^3$) include a binaphthalene diol compound represented by the following formula:

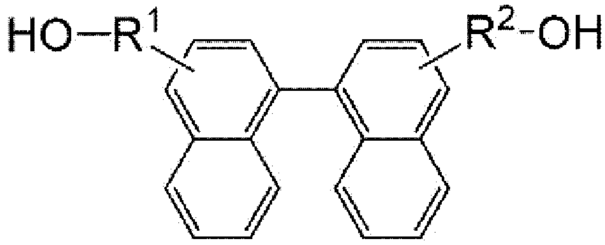

wherein $R^1$ and $R^2$ represent the same definition as described above.

Examples of such a binaphthalene diol compound include 2,2'-bis(1-hydroxymethoxy)-1,1'-binaphthalene, 2,2'-bis(2-hydroxyethoxy)-1,1'-binaphthalene, 2,2'-bis(3-hydroxypropyloxy)-1,1'-binaphthalene, and 2,2'-bis(4-hydroxybutoxy)-1,1'-binaphthalene. Among the above, 2,2'-bis(2-hydroxyethoxy)-1,1'-binaphthalene is preferable.

The diol compound ($I^4$) is represented by the following formula ($I^4$):

$$HO\text{-}R^{20}\text{-}X^4\text{-}R^{21}\text{-}OH \qquad (I^4)$$

wherein

$R^{20}$ and $R^{21}$ independently represent $-(CR^5R^6)_{m1}-$ or $-(-O-(CR^5R^6)_{m2}-)_{m3}-$(wherein $R^5$ and $R^6$ represent the same definition as described above, $m_1$ represents an integer of 1 or more and 10 or less, $m_2$ represents an integer of 1 or more and 10 or less, $m_3$ represents an integer of 1 or more and 10 or less, and when $m_1$ or $m_2$ is an integer of 2 or more, a plurality of $R^5$ or $R^6$ may be the same as or different from each other); and

$X^4$ represents a divalent group containing one or more hydrocarbon rings or heterocycles.

$m_2$ is preferably 2 or more.

Examples of $-(CR^5R^6)_{m1}-$, which is a choice for $R^{20}$ and $R^{21}$ in the above formula ($I^4$), may include an ethylene group ($-CH_2CH_2-$), and examples of $-O-(CR^5R^6)_{m2}-$ may include $-O-CH_2CH_2-$ and $-O-CH(CH_3)CH_2-$. Note that when $R^1$ is $-(-O-(CR^5R^6)_{m2}-)_{m3}-$, $HO-R^1-X^3-$ is not $HO-(-O-(CR^5R^6)_{m2}-)_{m3}-X^3-$ but $HO-(-(CR^5R^6)m_2-O-)m_3-X^3-$ from the standpoint of stability.

Examples of the divalent group containing one or more hydrocarbon rings or heterocycles may include a divalent $C_{6-32}$ aromatic hydrocarbon group optionally having a substituent β, a divalent $C_{3-20}$ cycloalkyl group optionally having a substituent β, and a divalent group having one or more each of a divalent $C_{6-32}$ aromatic hydrocarbon group optionally having a substituent β and a divalent $C_{3-20}$ cycloalkyl group optionally having a substituent β.

The divalent $C_{6-32}$ aromatic hydrocarbon group may contain a heteroatom selected from an oxygen atom, a sulfur atom, and a nitrogen atom, as long as it exhibits aromaticity as a whole. There is no particular restriction on the divalent $C_{6-32}$ aromatic hydrocarbon group, but examples thereof may include the following.

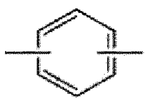
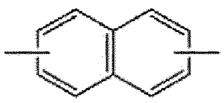
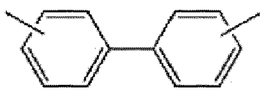
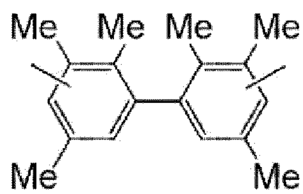
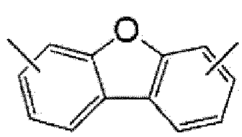
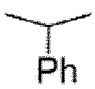
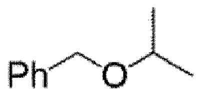
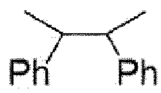
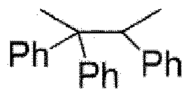

The divalent $C_{3-20}$ cycloalkyl group may also contain a heteroatom selected from an oxygen atom, a sulfur atom, and a nitrogen atom. There is no particular restriction on the divalent $C_{3-14}$ cycloalkyl group, but examples thereof may include the following.

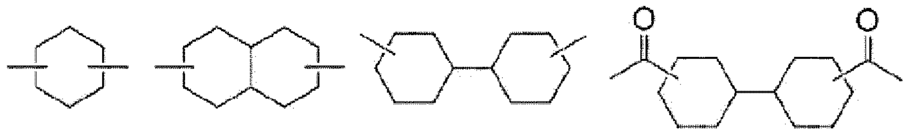

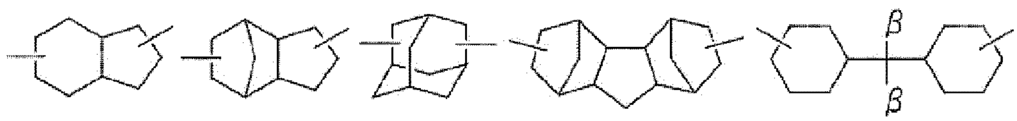

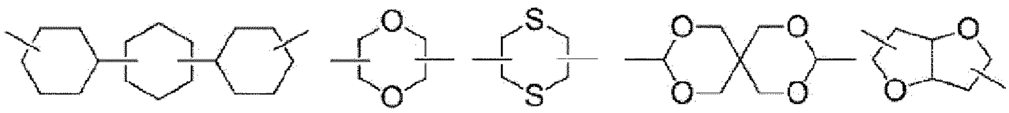

There is no particular restriction on the divalent group having one or more each of a divalent $C_{6-32}$ aromatic hydrocarbon group optionally having a substituent β and a divalent $C_{3-20}$ cycloalkyl group optionally having a substituent β, but examples thereof may include the following.

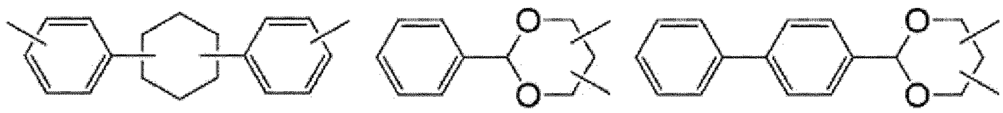

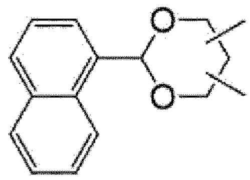

The diol compound ($I^5$) is represented by the following formula ($I^5$):

$$HO-R^1-X^5-R^2-OH \qquad (I^5)$$

wherein $R^1$ and $R^2$ represent the same definition as described above, and $X^5$ represents a divalent saturated heterocyclic group.

There is no particular restriction on the divalent saturated heterocyclic group, but examples thereof may include the following.

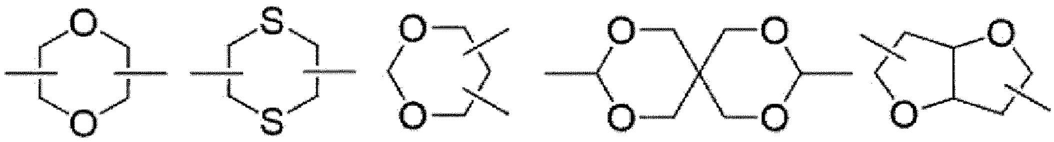

The diol compound ($I^6$) is represented by the following formula ($I^6$):

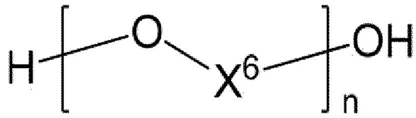

wherein $X^6$ represents a $C_{1-10}$ alkylene group; and
n represents an integer of 13 or more and 50 or less.

The $C_{1-10}$ alkylene group refers to a linear or branched divalent saturated aliphatic hydrocarbon group having 1 or more and 10 or less carbon atoms. Examples thereof may include $-CH_2-$, $-CH_2CH_2-$, $-CH_2CH_2CH_2-$, $-CH_2CH(CH_3)-$, $-CH(CH_3)CH_2-$, and $-CH_2CH_2CH_2CH_2-$. $X^6$ in the diol compound ($I^6$) may be the same as or different from each other, and

when there is a plurality of $X^5$, the arrangement of -O-$X^6$- may be in a random or block manner. The $C_{1-10}$ alkylene group is preferably a $C_{2-10}$ alkylene group.

Only one type of diol compound may be used alone, or two or more types thereof may be used in combination. For example, the use of two or more types of diol compounds in combination can produce a copolymerized polycarbonate well. However, from the viewpoint of production efficiency and other factors, it is preferable to use only one type of diol compound alone. When two or more types of diol compounds are used, the number of diol compounds is preferably 5 or less, more preferably 3 or less, and even more preferably 2. By using two or more types of diol compounds and copolymerizing them by the present invention method, the physical property range of the resulting polycarbonate is broadened and the physical properties can be easily adjusted.

There is no particular limitation on the amounts of the $C_{1-4}$ halogenated hydrocarbon and the diol compound used, as long as the reaction proceeds and the desired product is obtained, and for example, the above reaction proceeds even when using one time the moles of diol compound relative to the number of moles of $C_{1-4}$ halogenated hydrocarbon. Note that, from the viewpoint of reaction efficiency, reaction time, and other factors, the molar ratio of the diol compound to the $C_{1-4}$ halogenated hydrocarbon ([diol compound]/[$C_{1-4}$ halogenated hydrocarbon]) is preferably set to 0.001 or more and 1 or less. The above molar ratio is more preferably 0.01 or more, and even more preferably 0.1 or more, and also, it is more preferably 0.8 or less, and even more preferably 0.5 or less. If the above molar ratio is too large, the amount of nucleophilic functional group-containing compound is relatively increased, resulting in an increase in unreacted nucleophilic functional group-containing compound, whereas if the above molar ratio is too small, the amount of unreacted $C_{1-4}$ halogenated hydrocarbon is increased, which may cause the release of carbonyl halide outside the reaction system. Also, if the $C_{1-4}$ halogenated hydrocarbon is liquid at normal temperature and normal pressure and can also be used as a solvent, the proportion of the diol compound to the $C_{1-4}$ halogenated hydrocarbon may be set to 1 mg/mL or more and 500 mg/mL or less.

Among the above-mentioned optional constituent units (Z), constituent units derived from diols having an aromatic ring, which tend to increase the value of refractive index of the thermoplastic resin, are preferable. Also, from the viewpoint of monomer reactivity in the polymerization reaction, constituent units derived from diols having an aliphatic hydroxyl group bonded to a non-phenolic alkylene group or the like (such as $-CH_2-OH$) are preferable. In view of the above, it is preferable to provide a constituent unit (Z) derived from any of the diol compounds ($I^1$) to ($I^3$) represented by the above general formulas ($I^1$) to ($I^3$), containing an aromatic ring and an aliphatic hydroxyl group.

The thermoplastic resin may be a random copolymer or block copolymer consisting of the silane constituent unit, the dinaphthalene constituent unit (N), and the fluorene constituent unit (F). Alternatively, the thermoplastic resin may be either a random copolymer or block copolymer containing the silane constituent unit, the dinaphthalene constituent unit (N), the fluorene constituent unit (F), and the constituent unit (Z).

In addition, from the viewpoint of the properties of the thermoplastic resin, simplification of the production process, and other factors, it is preferable that the thermoplastic resin be a random copolymer. It is also preferable that the bonding of dinaphthalene constituent units (N) to each other via the silane constituent unit and the bonding of fluorene constituent units (F) to each other via the silane constituent unit be as little as possible, and that most dinaphthalene constituent units (N) and fluorene constituent units (F) be bonded alternately via the silane constituent unit.

In the thermoplastic resin, it is preferable that each of the above-mentioned constituent units, that is, the silane constituent unit, the dinaphthalene constituent unit (N), the fluorene constituent unit (F), and the optional constituent unit (Z), be bonded via an ether bond, and it is more preferable that substantially all of the constituent units in the thermoplastic resin be bonded via an ether bond.

However, in the thermoplastic resin, a carbonate bond and/or an ester bond may be present, and the thermoplastic resin may be a polycarbonate resin, a polyester resin, or a polyester carbonate resin.

<I-2. Ratio of constituent units>

In the thermoplastic resin, only one of the diol constituent unit (bisphenol constituent unit) (B) derived from a specific compound, such as a phenol, the fluorene constituent unit (F), and the dinaphthalene constituent unit (N) may be contained, or two or more of them may be contained. There is no particular limitation on the proportions of the diol constituent unit (B), the fluorene constituent unit (F), and the dinaphthalene constituent unit (N), and they may be any values. For example, each of the contents of the specific diol constituent unit (B), the fluorene constituent unit (F), and the dinaphthalene constituent unit (N), based on the total number of moles, is, for example, 10 to 100 mol%, and may be 30 to 70 mol%, 40 to 60 mol%, or 45 to 55 mol%.

Also, in the thermoplastic resin, the fluorene constituent unit (F) and the dinaphthalene constituent unit (N) may be used in combination, in which case the molar ratio between the fluorene constituent unit (F) and the dinaphthalene constituent unit (N) is preferably 30:70 to 90:10, more preferably 40:60 to 80:20, and still more preferably 50:50 to 70:30.

In the thermoplastic resin, the silane constituent unit (S) is bonded to a terminal of the constituent unit (A), such as the specific diol constituent unit (B), the fluorene constituent unit (F), or the dinaphthalene constituent unit (N), and due to

the following reason, it is contained in a number of moles approximately equal to the total number of moles of the specific diol constituent unit (B), the fluorene constituent unit (F), and the dinaphthalene constituent unit (N). The silane constituent unit (S) is formed as follows. In the polymerization reaction between the above-mentioned silane compound and a hydroxyl group in the diol compound, an alkoxy group or monoaryloxy group in the silane compound is eliminated. Therefore, in the thermoplastic resin, the number of moles of the silane constituent unit (S) is normally equal to the total number of moles of the fluorene constituent unit (F) and the dinaphthalene constituent unit (N).

However, when the silane constituent unit (S) is placed at the both terminals of the above-mentioned constituent unit (B), (F), or (N) derived from the diol, the number of moles of the silane constituent unit (S) may be slightly in excess of the total number of moles of the constituent units (B), (F), and (N), and for example, the number of moles of the silane constituent unit (S) may be about 1.01 times the total number of moles of the constituent units (B), (F), and (N).

As described above, the number of moles of the silane constituent unit (S) in the thermoplastic resin is, for example, 1.00 times to 1.05 times, preferably 1.00 times to 1.03 times, and more preferably 1.00 times to 1.01 times, the total number of moles of the diol-derived constituent units (B), (F), and the dinaphthalene constituent unit (N).

In the thermoplastic resin, the proportion that the optional constituent unit (Z) accounts for in all constituent units is preferably 30% by mol or less, more preferably 20% by mol or less, still more preferably 10% by mol or less, and particularly preferably 5% by mol or less, and the optional constituent unit (Z) is not necessarily contained.

Also, in the thermoplastic resin, the total of the silane constituent unit and the diol constituent units (B), (F), and (N) in all constituent units is preferably 70% by mol or more, more preferably 80% by mol or more, still more preferably 90% by mol or more, and particularly preferably 95% by mol or more. Moreover, the thermoplastic resin may be constituted only by the silane constituent unit, and the specific diol constituent unit (B), the fluorene constituent unit (F), or the dinaphthalene constituent unit (N).

<I-3. Properties of thermoplastic resin>

The weight average molecular weight of the thermoplastic resin is, for example, 5,000 to 100,000, preferably 5,000 to 50,000, 5,000 to 60,000, or 6,000 to 45,000, and more preferably 6,000 to 30,000, 7,000 to 40,000, 8,000 to 45,000, or 8,000 to 38,000. The weight average molecular weight of the thermoplastic resin is still more preferably 9,000 to 36,000, 10,000 to 32,000, or 10,000 to 25,000, more preferably 12,000 to 22,000, and particularly preferably 15,000 to 20,000.

In the thermoplastic resin, the glass transition temperature (Tg) in accordance with JIS K 7121 is preferably 105 to 170°C, and preferably 110 to 165°C. The range of Tg of the thermoplastic resin is preferably 112 to 163°C, more preferably 120 to 155°C, and still more preferably 125 to 152°C.

In the thermoplastic resin, the refractive index (nd) is preferably 1.600 to 1.750, more preferably 1.630 to 1.730, still more preferably 1.650 to 1.725, and particularly preferably 1.660 to 1.720 or 1.665 to 1.715. Normally, the value of the refractive index (nd) of thermoplastic resins that may be used in optical applications is preferably high, and therefore, the lower limit is important. The thermoplastic resin in one form of the present invention has a refractive index (nd) value of 1.670 or more, as illustrated in Figure 1. The refractive index (nd) value of the thermoplastic resin is preferably 1.675 or more, more preferably 1.680 or more, and still more preferably 1.685 or more.

While the upper limit value of the refractive index (nd) of the thermoplastic resin is not particularly important, the thermoplastic resin in one form of the present invention has a refractive index (nd) value of 1.720 or less.

In the thermoplastic resin, the Abbe number (v) of the thermoplastic resin is preferably 15.0 to 27.0, more preferably 15.0 to 25.0, 15.0 to 23.0, or 15.0 to 22.0, and still more preferably 15.0 to 21.0 or 15.5 to 20.5. Thermoplastic resins, especially thermoplastic resins used in optical applications, preferably have a high refractive index, and in thermoplastic resins with a high refractive index, there is normally a tendency for the value of the Abbe number (v) to be small.

However, it can be said that thermoplastic resins for optical use with a high Abbe number (v) value can also be useful, and the thermoplastic resin in one form of the present invention has an Abbe number (v) of 15.0 or more, as illustrated in Figure 1. The Abbe number (v) of the thermoplastic resin is preferably 16.0 or more, more preferably 16.5 or more or 17.0 or more, still more preferably 17.5 or more, and particularly preferably 18.0 or more.

For example, in thermoplastic resins used in optical applications, it is sometimes desired to have a high refractive index as described above and also a relatively large Abbe number (v) value. The thermoplastic resin in one form of the present invention has, as such, a relatively large value, not only for the refractive index, but also for the Abbe number.

Specifically, it is preferable that the values of refractive index (nd) and Abbe number (vd) in the thermoplastic resin of the present invention satisfy the relationship of the following expression (I):

$$\text{refractive index (nd)} > -0.0078 \times \text{Abbe number (vd)} + 1.8293 \cdots \text{(I)}.$$

In particular, it is preferable that the relational expression (I) be satisfied in the range where the refractive index (nd) value in the thermoplastic resin is 1.640 to 1.730 and the Abbe number (vd) is 15.0 to 24.0.

It is also preferable that the relational expression (I) be satisfied in a thermoplastic resin containing no carbonate bond, for example, a thermoplastic resin in which the silane compound and an aliphatic hydroxyl group of a dihydroxy compound are silyl ether-bonded.

As shown in Figure 1, in the thermoplastic resins of Examples 1 to 5, the relational expression of the above expression (I) is satisfied, realizing a high refractive index and a high Abbe number.

In addition, it is more preferable that the values of refractive index (nd) and Abbe number (vd) in the thermoplastic resin satisfy the relationship of the following expression (I-1) or (I-2):

$$-0.0080 \times \text{Abbe number (vd)} + 1.861 > \text{refractive index (nd)} > -0.0078 \times \text{Abbe number (vd)} + 1.8293 \qquad \text{(I-1);}$$

or

$$-0.0080 \times \text{Abbe number (vd)} + 1.852 > \text{refractive index (nd)} > -0.0078 \times \text{Abbe number (vd)} + 1.8293 \qquad \text{(I-2).}$$

For example, as is obvious from Figure 1, in the thermoplastic resins of Examples 1 to 5, the relational equation y (refractive index (nd)) = 0.0091 $\times$ X (Abbe number (vd)) + 1.8638 is generally established, and for such thermoplastic resins of Examples 1 to 5, the relationships of the above expressions (I-1) and (I-2) are satisfied.

It is particularly preferable that the relational expressions of expressions (I-1) and (I-2), as in the case of expression (I), be satisfied in a thermoplastic resin having a refractive index (nd) value of 1.640 to 1.730 and an Abbe number (vd) in the range of 15.0 to 24.0.

In the thermoplastic resin, it is preferable that the YI value, as measured in accordance with JIS K 7105, be 15.0 or less. The range of YI value of the thermoplastic resin is more preferably 12.0 or less, still more preferably 10.0 or less, and particularly preferably 8.0 or less.

In the thermoplastic resin, the proportion of the total weight of silicon atoms (total Si content) based on the entire weight of the thermoplastic resin is, for example, 0.4 to 10.0% by mass, preferably 1.0 to 10.0% by mass, more preferably 1.2 to 8.0% by mass, still more preferably 1.5 to 7.0% by mass, and particularly preferably 2.0 to 6.5% by mass, such as 2.0 to 4.0% by mass.

In the polymer chain of the thermoplastic resin, the proportion of carbonate-derived Ph terminal groups, that is, -OC(O)O-Ph terminal groups, is preferably 0.1 to 20 μeq/g, more preferably 0.5 to 18 μeq/g, still more preferably 1.0 to 16 μeq/g, and particularly preferably 1.5 to 12 μeq/g.

The proportion of carbonate-derived Ph terminal groups, based on the number of all terminal groups in the polymer chain of the thermoplastic resin, is preferably 1 to 20% by mol, more preferably 2 to 18% by mol, still more preferably 3 to 15% by mol, and particularly preferred 4 to 12% by mol.

In the polymer chain of the thermoplastic resin, the proportion of silyl ether-derived Ph terminal groups, that is, $-OSiRs_1Rs_2-OPh$ terminal groups ($Rs_1$ and $Rs_2$ are as defined elsewhere), is preferably 5 to 200 μeq/g, more preferably 10 to 150 μeq/g, still more preferably, 15 to 120 μeq/g, and particularly preferably 20 to 100 μeq/g.

The proportion of silyl ether-derived Ph terminal groups, based on the number of all terminal groups in the polymer chain of the thermoplastic resin, is preferably 30 to 99% by mol, more preferably 40 to 95% by mol, still more preferably 50 to 90% by mol, and particularly preferred 60 to 85% by mol.

Also, in the polymer chain of the thermoplastic resin, the proportion of alkoxy terminal groups, such as silyl ether-derived OMe terminal groups, for example, $-OSiRs_1Rs_2-OMe$ terminal groups ($Rs_1$ and $Rs_2$ are as defined elsewhere), is preferably 5 to 300 μeq/g, more preferably 20 to 250 μeq/g, still more preferably 40 to 200 μeq/g, and particularly preferably 60 to 200 μeq/g.

The proportion of alkoxy terminal groups, such as silyl ether-derived Me terminal groups, based on the number of all terminal groups in the polymer chain of the thermoplastic resin, is preferably 10 to 99% by mol, more preferably 20 to 90% by mol, still more preferably 30 to 80% by mol, and particularly preferred 40 to 70% by mol.

In the thermoplastic resin polymer, impurities may be contained to some extent. For example, in the thermoplastic resin polymer, the respective contents of impurities, such as those derived from raw materials including formic acid and organophosphorous compounds, based on its entire weight, may be, for example, about 5 ppm or more and 100 ppm by weight or less, 10 ppm or more and 70 ppm by weight or less, or 20 ppm or more and 50 ppm by weight or less.

Also, in the thermoplastic resin, a slight amount of catalyst used in the polymerization reaction for production may remain. For example, with respect to 1 mole of all dihydroxy compounds used in production of the thermoplastic resin polymer, the residual catalyst may be contained in, for example, about 5 μmol or more and 100 μmol or less, 15 mol or more and 80 μmol or less, 25 mol or more and 60 μmol or less, or 30 mol or more and 50 μmol or less, in terms of the metal equivalent.

[II. Composition (thermoplastic resin composition)]

A thermoplastic resin composition of the present invention preferably contains as the main component the above-mentioned thermoplastic resin, which is a polysilyl ether resin. In addition to the thermoplastic resin, the thermoplastic resin composition of the present invention may contain the components described below.

<II-1. Low molecular weight compound (cyclic body)>

In the thermoplastic resin composition, a compound or oligomer with a weight average molecular weight of 1000 or less may be contained. It is, for example, a low molecular weight cyclic body represented by the following general formula (T). The cyclic body represented by the following general formula (T) is thought to be mainly derived from the above-mentioned component B.

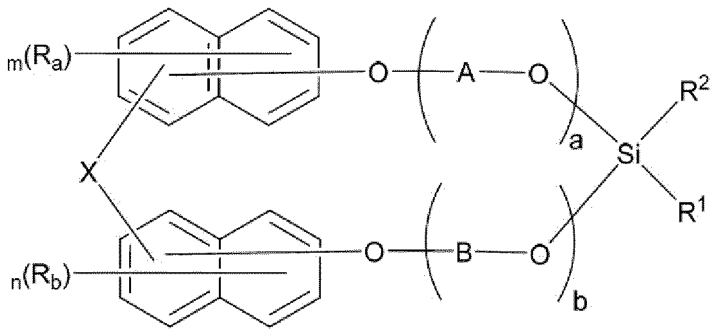

(T)

(In general formula (T),
$R^1$ and $R^2$ each independently represent an alkyl group having 1 to 20 carbon atoms and optionally having a substituent or an aryl group having 6 to 30 carbon atoms and optionally having a substituent.

When $R^1$ and $R^2$ are each an alkyl group optionally having a substituent, the number of carbon atoms in total is preferably 1 to 14 or 1 to 10, the number of carbon atoms in total is more preferably 1 to 6, and the number of carbon atoms in total is particularly preferably 1 or 2.

Also, when $R^1$ and $R^2$ are each an aryl group optionally having a substituent, the number of carbon atoms in total is preferably 6 to 20, the number of carbon atoms in total is more preferably 6 to 12, and the number of carbon atoms in total is particularly preferably 6 to 8.

Preferred specific examples of $R^1$ and $R^2$ include a methyl group, an ethyl group, a propyl group, a phenyl group, and a benzyl group, and more preferred examples thereof include a methyl group and a phenyl group.

In general formula (T), Ra and Rb are each independently selected from the group consisting of a hydrogen atom, a halogen atom, an alkyl group having 1 to 20 carbon atoms and optionally having a substituent, an alkoxyl group having 1 to 20 carbon atoms and optionally having a substituent, a cycloalkyl group having 5 to 20 carbon atoms and optionally having a substituent, a cycloalkoxyl group having 5 to 20 carbon atoms and optionally having a substituent, an aryl group having 6 to 20 carbon atoms and optionally having a substituent, a heteroaryl group having 6 to 20 carbon atoms and optionally having a substituent, which contains one or more heterocycle atoms selected from O, N, and S, an aryloxy group having 6 to 20 carbon atoms and optionally having a substituent, and $-C\equiv C-R_h$.

Ra and Rb are preferably a hydrogen atom, an aryl group having 6 to 20 carbon atoms and optionally having a substituent, or a heteroaryl group having 6 to 20 carbon atoms and optionally having a substituent, which contains one or more heterocycle atoms selected from O, N, and S, more preferably a hydrogen atom or an aryl group having 6 to 20 carbon atoms and optionally having a substituent, and still more preferably a hydrogen atom or an aryl group having 6 to 12 carbon atoms and optionally having a substituent.

In general formula (T), X represents a single bond or a fluorene group optionally having a substituent. X is preferably a single bond or a fluorene group having 12 to 20 carbon atoms in total and optionally having a substituent.

In general formula (T), A and B are each independently an alkylene group having 1 to 5 carbon atoms and optionally having a substituent, and preferably an alkylene group having 2 or 3 carbon atoms.

In general formula (T), m and n are each independently an integer of 0 to 6, preferably an integer of 0 to 3, and more preferably 0 or 1.

In general formula (T), a and b are each independently an integer of 0 to 10, preferably an integer of 1 to 3, and more preferably 1 or 2.

Examples of the substituent in general formula (T) include a hydroxyl group, a halogen, an amino group, a vinyl group, a carboxyl group, a cyano group, a (meth)acryloxy group, a glycidyloxy group, and a mercapto group. When general

formula (T) contains a substituent, the range of the above-mentioned number of carbon atoms is for the total number of carbon atoms, including the number of carbon atoms in the substituent.

Specific examples of the low molecular weight compound represented by general formula (T) include those represented by the following formulas (T-1) to (T-4).

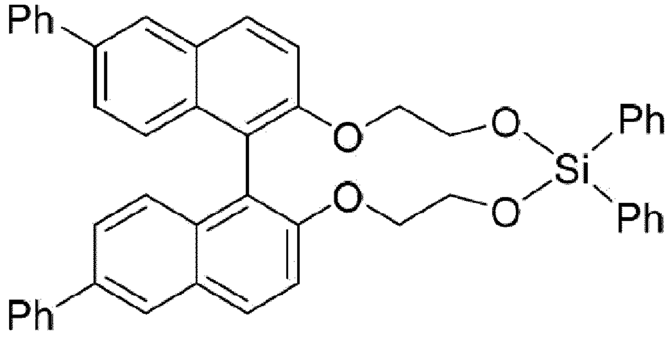

(T-1)

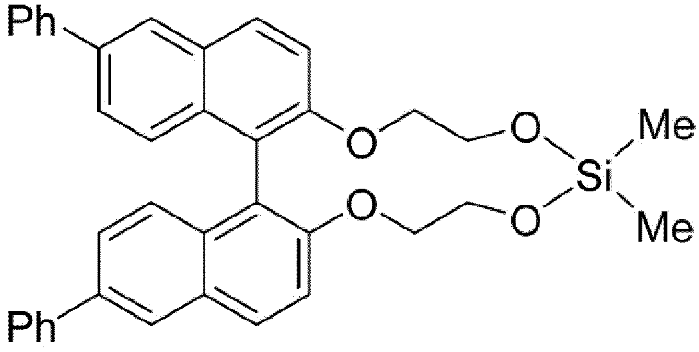

(T-2)

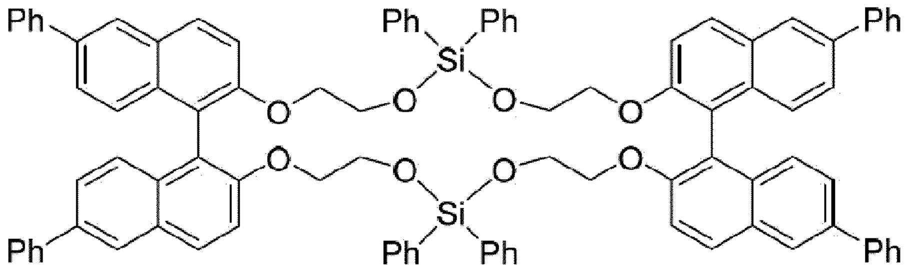

(T-3)

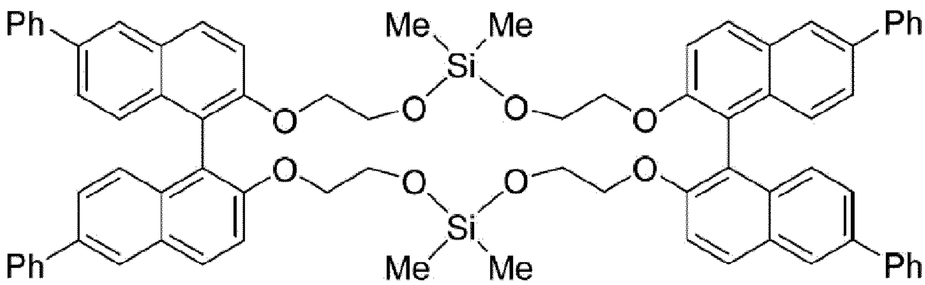

(T-4)

The above-mentioned low molecular weight cyclic body, which may be contained in the thermoplastic resin composition of the present invention, can arise as a by-product due to the polymerization reaction for production of the polyether resin, and its low molecular weight makes the flowability of the composition good and improves the moldability of the thermoplastic resin. Furthermore, since the above-mentioned cyclic body is a low molecular weight body with a molecular structure similar to that of a plasticizer, it is thought that a thermoplastic resin or the like containing the above-mentioned cyclic body is highly miscible with other resins even without the addition of a plasticizer, and problems caused by bleeding out of the plasticizer, which is no longer required to be added, can be reliably prevented. The above-mentioned

cyclic body is thought to be mainly derived from the above-mentioned component B, and in a thermoplastic resin produced using only the component A, the above-mentioned cyclic body is not contained, and the effect such as improvement in moldability is thought to be unobtainable.

While it is thought to be better to contain an appropriate amount of a component with high plasticity to improve moldability, too much of it may contaminate the metal mold during processing of the thermoplastic resin composition.

From the above, in the thermoplastic resin composition, the total content of the cyclic body represented by the above formula (T) is, based on the entire weight of the thermoplastic resin composition, preferably 15% by weight or less or 13% by weight or less, more preferably 10% by weight or less or 8.0% by weight or less, and still more preferably 6.0% by weight or less or 4.0% by weight or less. Also, the total content of the cyclic body represented by the above formula (T) contained in the thermoplastic resin composition is, based on the entire weight of the thermoplastic resin composition, preferably 0.1% by weight or more and 15% by weight or less, more preferably 2.0% by weight or more and 13% by weight or less, still more preferably 3.0% by weight or more and 11% by weight or less, and particularly preferably 4.0% by weight or more or more than 4.0% by weight (higher than 4.0% by weight), and 11% by weight or less.

When the content of these cyclic bodies is in the above-mentioned range, there is no problem with the properties of the thermoplastic resin composition, especially when used in optical applications. Note that the thermoplastic resin composition may be free of the above-mentioned cyclic body.

<II-2. Resin other than polyether resin>

The thermoplastic resin composition may also contain a thermoplastic resin that does not correspond to the above-mentioned polyether resin, for example, a polycarbonate resin. The type of the polycarbonate resin is not particularly limited as long as it includes a -[O-R-OCO]- unit including a carbonate ester bond in the molecular main chain (R is an aliphatic group, aromatic group, or one including both aliphatic and aromatic groups, and also has a linear or branched structure). Also, the thermoplastic resin composition, the polycarbonate resin may include a polyester carbonate resin and a polyester resin. Then, as for the polyester carbonate resin and the polyester resin as well, there is no particular limitation as long as it includes a -[OR-OC]- unit including a carbonate ester bond in the molecular main chain (R is as mentioned above).

The weight average molecular weight of the polycarbonate resin is preferably 10,000 to 100,000, more preferably 13,000 to 80,000, and still more preferably 15,000 to 60,000.

The thermoplastic resin composition may contain a resin other than the polyether resin, preferably a thermoplastic resin. The type of such a thermoplastic resin as a sub-component is not particularly limited, and in addition to the polycarbonate resin and polyester carbonate resin, examples thereof include various resins such as acrylic resin including polymethyl methacrylate (PMMA), polyethylene terephthalate (PET), triacetyl cellulose (TAC), polyethylene naphthalate (PEN), polyimide (PI), cycloolefin copolymer (COC), norbornene-containing resin, polyethersulfone, cellophane, and aromatic polyamide.

In the composition, the proportion of the total weight of silicon atoms (total Si content) based on the entire weight of the composition is preferably 0.1 to 20% by mass, more preferably 0.2 to 15% by mass, and particularly preferably 0.3 to 10% by mass.

By using a thermoplastic resin with a high Si content, a composition with excellent characteristics can be produced. By mixing a thermoplastic resin or the like with a Si content of, for example, 0.1% by mass or more with a resin that is substantially free of silyl ether constituent units, preferably polycarbonate resin, it is possible to achieve both excellent impact resistance and flowability in the resulting composition.

Note that, in the composition containing the thermoplastic resin, a phenolic compound that may be generated as a by-product of the polymerization reaction, as well as the silane compound, carbonate compound, and diol compound that remain without undergoing the reaction, may be contained. The phenolic compound and diphenyl carbonate, which are impurities, may cause a decrease in strength when made into a molded body, and may also cause odor generation. Therefore, it is preferable for their contents to be kept as low as possible. For this reason, the contents of the phenolic compound, silane compound, carbonate compound, and diol compound may be reduced to the extent that they are not detected, but from the viewpoint of productivity, they may be contained in the composition to the extent that they do not impair the effects. In addition, when remaining monomers are contained in a predetermined amount, such as 1 to 1000 ppm by weight, preferably 10 to 900 ppm, and more preferably 20 to 800 ppm, based on the entire weight of the composition, the effect of improved flowability during molding can be obtained and good plasticity can be achieved when the resin is melted. Also, in the compositions of the present invention, an aromatic monohydroxy compound, represented by an aryl alcohol such as phenol, may be contained in, for example, more than or not less than 300 ppm by mass, more than or not less than 500 ppm by mass, or more than or not less than 700 ppm by mass.

<II-3. Additive>

The thermoplastic resin composition may contain an additive. Examples of the additive include an antioxidant. As the antioxidant, a phosphite-based antioxidant is preferable. Also, the thermoplastic resin composition preferably contains an antioxidant used in the polymerization reaction for production of the polyether resin.

The proportion of the antioxidant to be added in the thermoplastic resin composition is preferably 0.001 parts by mass or more (about 10 ppm by mass or more), more preferably 0.01 parts by mass or more (about 100 ppm by mass or more), and still more preferably 0.1 parts by mass or more (about 1000 ppm by mass or more), with respect to the entire weight of the composition, 100 parts by weight. Also, the proportion of the antioxidant to be added in the thermoplastic resin composition is preferably 2.0 parts by mass or less, more preferably 1.0 parts by mass or less, still more preferably 0.7 parts by mass or less (about 7,000 ppm by mass or less), and particularly preferably 0.5 parts by mass or less (about 5,000 ppm by mass or less), with respect to the entire weight of the composition, 100 parts by weight.

In the thermoplastic resin composition, only one type of antioxidant may be contained, or two or more types thereof may be contained. When two or more types are contained, it is preferable that the total amount be in the above range.

The thermoplastic resin composition of the present invention may contain the additives described below as secondary components.

Quencher

In the thermoplastic resin of the present invention, the catalyst may be removed or deactivated after the polymerization reaction is terminated in order to retain thermal stability. A method for deactivating the catalyst by addition of a known acidic substance can be suitably performed. As the acidic substance, specifically, esters such as butyl benzoate, aromatic sulfonic acids such as p-toluenesulfonic acid; aromatic sulfonate esters such as butyl p-toluenesulfonate and hexyl p-toluenesulfonate; phosphoric acids such as phosphorous acid, phosphoric acid, and phosphonic acid; phosphite esters such as triphenyl phosphite, monophenyl phosphite, diphenyl phosphite, diethyl phosphite, di-n-propyl phosphite, di-n-butyl phosphite, din-hexyl phosphite, dioctyl phosphite, and monooctyl phosphite; phosphate esters such as triphenyl phosphate, diphenyl phosphate, monophenyl phosphate, dibutyl phosphate, dioctyl phosphate, and monooctyl phosphate; phosphonic acids such as diphenylphosphonic acid, dioctylphosphonic acid, and dibutylphosphonic acid; phosphonate esters such as diethyl phenylphosphonate; phosphines such as triphenylphosphine and bis(diphenylphosphino)ethane; boric acids such as boric acid and phenylboric acid; aromatic sulfonate salts such as tetrabutylphosphonium dodecylbenzenesulfonate salt; organic halides such as stearoyl chloride, benzoyl chloride, and p-toluenesulfonyl chloride; alkylsulfuric acids such as dimethylsulfuric acid; organic halides such as benzyl chloride; and the like are suitably used.

Also, as the quencher for deactivating the catalyst, alkyl acid phosphate metal salts, such as distearyl acid phosphate zinc salt and monostearyl acid phosphate zinc salt, may be used.

The above-mentioned quencher may be used in a molar amount of 0.001 to 50 times, preferably 0.01 to 30 times, with respect to the amount of the catalyst, for example.

To the thermoplastic resin of the present invention, a stabilizer may be added. As the stabilizer, a thermal stabilizer and the above-mentioned antioxidant are exemplified. When compounded, the proportion of the stabilizer to be added is preferably 0.001 parts by mass or more, more preferably 0.01 parts by mass or more, and still more preferably 0.02 parts by mass or more, and also preferably 2 parts by mass or less, more preferably 1.4 parts by mass or less, and still more preferably 1.0 parts by mass or less, with respect to 100 parts by mass of the thermoplastic resin. In the thermoplastic resin composition, only one type of stabilizer may be contained, or two or more types thereof may be contained. When two or more types are contained, it is preferable that the total amount be in the above range.

Examples of the thermal stabilizer may include a phenolic thermal stabilizer, a phosphorus-based thermal stabilizer, and a sulfur-based thermal stabilizer. Specific examples thereof may include oxoacids of phosphorus such as phosphoric acid, phosphonic acid, phosphorous acid, phosphinic acid, and polyphosphoric acid; acid pyrophosphate metal salts such as sodium acid pyrophosphate, potassium acid pyrophosphate, and calcium acid pyrophosphate; phosphate salts of Group 1 or Group 10 metals such as potassium phosphate, sodium phosphate, cesium phosphate, and zinc phosphate; and organic phosphate compounds, organic phosphite compounds, and organic phosphonite compounds. Examples thereof may also include at least one selected from the group of (a) phosphite ester compound in which at least one ester in the molecule is esterified with phenol and/or phenol having at least one alkyl group having 1 to 25 carbon atoms, (b) phosphorous acid, and (c) tetrakis(2,4-di-tert-butylphenyl)-4,4'-biphenylene-di-phosphonite. Specific examples of the (a) phosphite ester compound may include trioctyl phosphite, trioctadecyl phosphite, tridecyl phosphite, trilauryl phosphite, tristearyl phosphite, triphenyl phosphite, tris(monononylphenyl) phosphite, tris(monononyl/dinonylphenyl) phosphite, trisnonylphenyl phosphite, tris(octylphenyl) phosphite, tris(2,4-di-tert-butylphenyl) phosphite, trinonyl phosphite, didecylmonophenyl phosphite, dioctylmonophenyl phosphite, diisopropylmonophenyl phosphite, monobutyldiphenyl phosphite, monodecyldiphenyl phosphite, bis(2,4-di-tert-butylphenyl)pentaerythritol phosphite, bis(2,6-di-tert-butyl-4-methylphenyl)pentaerythritol phosphite, monooctyldiphenyl phosphite, distearylpentaerythritol diphosphite, tricyclohexyl phosphite, diphenylpentaerythritol diphosphite, bis(2,6-di-tert-butyl-4-methylphenyl)pentaerythritol diphosphite, 2,2-methylene bis(4,6-di-tert-butylphenyl)octyl phosphite, bis(nonylphenyl)pentaerythritol diphosphite, bis(2,4-di-tert-butylphenyl)pentaerythritol diphosphite, and bis(2,6-di-tert-butyl-4-ethylphenyl)pentaerythritol diphosphite. They may be used alone, or two or more types may be mixed for use.

Examples of the organic phosphite compound may include "ADK STAB 1178 (trade name, hereinafter the same)," "ADK STAB 2112," and "ADK STAB HP-10" manufactured by ADEKA CORPORATION, "JP-351," "JP-360," and "JP-3CP" manufactured by Johoku Chemical Co., Ltd., and "Irgafos 168" manufactured by BASF SE.

Also, examples of the phosphate ester may include trimethyl phosphate, triethyl phosphate, tributyl phosphate, trioctyl phosphate, triphenyl phosphate, tricresyl phosphate, tris(nonylphenyl) phosphate, and 2-ethylphenyldiphenyl phosphate.

When compounded, the proportion of the thermal stabilizer to be added is preferably 0.001 parts by mass or more, more preferably 0.01 parts by mass or more, and still more preferably 0.03 parts by mass or more, and also preferably 1 part by mass or less, more preferably 0.7 parts by mass or less, and still more preferably 0.5 parts by mass or less, with respect to 100 parts by mass of the thermoplastic resin.

In the thermoplastic resin composition, only one type of thermal stabilizer may be contained, or two or more types thereof may be contained. When two or more types are contained, it is preferable that the total amount be in the above range.

Flame retardant

In the thermoplastic resin of the present invention, various additives may be compounded to the extent not departing from the spirit of the present invention. As the flame retardant, an organometallic salt-based flame retardant, phosphorus-based flame retardant, silicone-based flame retardant, or the like may be compounded. As the flame retardant that can be used in the present invention, the flame retardants (flame retardant compositions) described in paragraphs 0085 to 0093 of Japanese Patent Laid-Open No. 2016-183422 are exemplified, the contents of which are incorporated herein by reference.

Ultraviolet absorber

Examples of the ultraviolet absorber may include, in addition to an inorganic ultraviolet absorber such as cerium oxide and zinc oxide, an organic ultraviolet absorber such as a benzotriazole compound, a benzophenone compound, a salicylate compound, a cyanoacrylate compound, a triazine compound, an oxanilide compound, a malonate ester compound, a hindered amine compound, and a phenyl salicylate-based compound. Among these, benzotriazole-based and benzophenone-based organic ultraviolet absorbers are preferable. In particular, specific examples of the benzotriazole compound may include 2-(2'-hydroxy-5'-methylphenyl)benzotriazole, 2-[2'-hydroxy-3',5'-bis($\alpha$,$\alpha$-dimethylbenzyl)phenyl]-benzotriazole, 2-(2'-hydroxy-3',5'-di-tert-butyl-phenyl)-benzotriazole, 2-(2'-hydroxy-3'-tert-butyl-5'-methylphenyl)-5-chlorobenzotriazole, 2-(2'-hydroxy-3',5'-di-tert-butyl-phenyl)-5-chlorobenzotriazole, 2-(2'-hydroxy-3',5'-di-tert-amyl)-benzotriazole, 2-(2'-hydroxy-5'-tert-octylphenyl)-benzotriazole, 2,2'-methylene bis[4-(1,1,3,3-tetramethylbutyl)-6-(2N-benzotriazol-2-yl)phenol], 2-(4,6-diphenyl-1,3,5-triazin-2-yl)-5-[(hexyl)oxy]-phenol, 2-[4,6-bis(2,4-dimethylphenyl)-1,3,5-triazin-2-yl]-5-(octyloxy)phenol, 2,2'-(1,4-phenylene) bis[4H-3,1-benzoxazin-4-one], [(4-methoxyphenyl)-methylene]-propanedioic acid-dimethyl ester, 2-(2H-benzotriazol-2-yl)-p-cresol, 2-(2H-benzotriazol-2-yl)-4,6-bis(1-methyl-1-phenylmethyl)phenol, 2-[5-chloro(2H)-benzotriazol-2-yl]-4-methyl-6-(tert-butyl)phenol, 2,4-di-tert-butyl-6-(5-chlorobenzotriazol-2-yl)phenol, 2-(2H-benzotriazol-2-yl)-4-(1,1,3,3-tetrabutyl)phenol, 2,2'-methylene bis [6-(2H-benzotriazol-2-yl)-4-(1,1,3,3-tetrabutyl)phenol], and [methyl-3-[3-tert-butyl-5-(2H-benzotriazol-2-yl)-4-hydroxyphenyl]propionate-polyethylene glycol] condensation product. Among the above, 2-(2'-hydroxy-5'-tert-octylphenyl)benzotriazole and 2,2'-methylene bis[4-(1,1,3,3-tetramethylbutyl)-6-(2N-benzotriazol-2-yl)phenol] are preferable. Also, specific examples of the benzophenone-based ultraviolet absorber may include 2,4-dihydroxy-benzophenone, 2-hydroxy-4-methoxy-benzophenone, 2-hydroxy-4-n-octoxy-benzophenone, 2-hydroxy-4-dodecyloxy-benzophenone, 2-hydroxy-4-octadecyloxy-benzophenone, 2,2'-dihydroxy-4-methoxy-benzophenone, 2,2'-dihydroxy-4,4'-dimethoxy-benzophenone, and 2,2',4,4'-tetrahydroxy-benzophenone. In addition, specific examples of the phenyl salicylate-based ultraviolet absorber may include phenyl salicylate and 4-tert-butyl-phenyl salicylate. Furthermore, specific examples of the triazine-based ultraviolet absorber may include 2-(4,6-diphenyl-1,3,5-triazin-2-yl)-5-[(hexyl)oxy]-phenol and 2-[4,6-bis(2,4-dimethylphenyl)-1,3,5-triazin-2-yl]-5-(octyloxy)phenol. Moreover, specific examples of the hindered amine-based ultraviolet absorber include bis(2,2,6,6-tetramethylpiperidin-4-yl) sebacate.

When compounded, the proportion of the ultraviolet absorber to be added is preferably 0.01 parts by mass or more, more preferably 0.1 parts by mass or more, and also preferably 3 parts by mass or less, more preferably 1 part by

mass or less, with respect to 100 parts by mass of the thermoplastic resin.

Only one type of ultraviolet absorber may be used, or two or more types of ultraviolet absorbers may be used. When two or more types are used, it is preferable that the total amount be in the above range.

Mold release agent

Examples of the mold release agent may include a mold release agent such as a carboxylate ester, a polysiloxane compound, and a paraffin wax (polyolefin-based). Specific examples thereof may include at least one compound selected from the group of an aliphatic carboxylic acid, an ester of an aliphatic carboxylic acid and an alcohol, an aliphatic hydrocarbon compound with a number average molecular weight of 200 to 15000, and a polysiloxane-based silicone oil. Examples of the aliphatic carboxylic acid may include a saturated or unsaturated, aliphatic monovalent, divalent, or trivalent carboxylic acid. Here, the aliphatic carboxylic acid encompasses an alicyclic carboxylic acid as well. Among these, the preferred aliphatic carboxylic acid is a monovalent or divalent carboxylic acid having 6 to 36 carbon atoms, and an aliphatic saturated monovalent carboxylic acid having 6 to 36 carbon atoms is still more preferable. Specific examples of the aliphatic carboxylic acid may include palmitic acid, stearic acid, valeric acid, caproic acid, capric acid, lauric acid, arachic acid, behenic acid, lignoceric acid, cerotic acid, melissic acid, tetratriacontanoic acid, montanic acid, glutaric acid, adipic acid, and azelaic acid. As the aliphatic carboxylic acid in the ester of an aliphatic carboxylic acid and an alcohol, those that are the same as the above aliphatic carboxylic acids can be used. Meanwhile, examples of the alcohol may include a saturated or unsaturated, monohydric or polyhydric alcohol. These alcohols may have a substituent such as a fluorine atom or an aryl group. Among these, a monohydric or polyhydric, saturated alcohol having 30 or less carbon atoms is preferable, and an aliphatic saturated monohydric alcohol or polyhydric alcohol having 30 or less carbon atoms is still more preferable. Here, the aliphatic compound encompasses an alicyclic compound as well. Specific examples of the alcohol may include octanol, decanol, dodecanol, stearyl alcohol, behenyl alcohol, ethylene glycol, diethylene glycol, glycerin, pentaerythritol, 2,2-dihydroxyperfluoropropanol, neopentylene glycol, ditrimethylolpropane, and dipentaerythritol. Note that the above ester compound may contain the aliphatic carboxylic acid and/or the alcohol as impurities, and may be a mixture of a plurality of compounds. Specific examples of the ester of an aliphatic carboxylic acid and an alcohol may include beeswax (a mixture mainly composed of myricyl palmitate), stearyl stearate, behenyl behenate, stearyl behenate, glycerin monopalmitate, glycerin monostearate, glycerin distearate, glycerin tristearate, pentaerythritol monopalmitate, pentaerythritol monostearate, pentaerythritol distearate, pentaerythritol tristearate, and pentaerythritol tetrastearate. Examples of the aliphatic hydrocarbon with a number average molecular weight of 200 to 15000 may include liquid paraffin, paraffin wax, microwax, polyethylene wax, Fischer-Tropsch wax, and oligomer of an $\alpha$-olefin having 3 to 12 carbon atoms. Here, the aliphatic hydrocarbon includes an alicyclic hydrocarbon as well. Also, these hydrocarbon compounds may be partially oxidized. Among these, paraffin wax, polyethylene wax, or a partially oxidized product of polyethylene wax is preferable, and paraffin wax and polyethylene wax are still more preferable. The number average molecular weight is preferably 200 to 5000. These aliphatic hydrocarbons may be a single substance, or it may be a mixture of materials with various constituent components and molecular weights, as long as the main component is in the above range. Examples of the polysiloxane-based silicone oil may include dimethyl silicone oil, phenyl methyl silicone oil, diphenyl silicone oil, and fluorinated alkyl silicone. Two or more types of them may be used in combination.

When compounded, the proportion of the mold release agent to be added is preferably 0.001 parts by mass or more, more preferably 0.01 parts by mass or more, and also preferably 2 parts by mass or less, more preferably 1 part by mass or less, with respect to 100 parts by mass of the thermoplastic resin.

Only one type of mold release agent may be used, or two or more types of mold release agents may be used. When two or more types are used, it is preferable that the total amount be in the above range.

Coloring agent

The coloring agent may be either a dye or a pigment, and examples thereof may include an inorganic pigment, an organic pigment, and an organic dye. Examples of the inorganic pigment may include carbon black, a sulfide-based pigment such as cadmium red and cadmium yellow; a silicate salt-based pigment such as ultramarine blue; an oxide-based pigment such as titanium oxide, zinc oxide, red iron oxide, chromium oxide, iron black, titanium yellow, zinc-iron brown, titanium cobalt green, cobalt green, cobalt blue, copper-chromium black, and copper-iron black; a chromic acid-based pigment such as lead yellow and molybdate orange; and a ferrocyanide-based pigment such as iron blue. In addition, examples of the organic pigment and organic dye as the coloring agent may include a phthalocyanine-based dye/pigment ("dye/pigment" refers to a dye or pigment, hereinafter the same) such as copper phthalocyanine blue and copper phthalocyanine green; an azo dye/pigment such as nickel azo yellow; a condensed polycyclic dye/pigment such as thioindigo-based, perinone-based, perylene-based, quinacridone-based, dioxazine-based, isoindolinone-based, and quinophthalone-based dyes/pigments; and quinoline-based, anthraquinone-based, heterocyclic, and methyl dyes/pigments. Then, among these, titanium oxide, carbon black, cyanine-based, quinoline-based, anthraquinone-based, and

phthalocyanine-based dyes/pigments, and the like are preferable from the standpoint of thermal stability.

Also, the coloring agent may be masterbatched for use with polystyrene resin, polycarbonate resin, or acrylic resin for the purpose of improving handling properties during extrusion and improving dispersibility in the resin composition.

When compounded, the proportion of the coloring agent to be added is preferably 5 parts by mass or less, more preferably 3 parts by mass or less, and still more preferably 2 parts by mass or less, and also 0.1 parts by mass or more, with respect to 100 parts by mass of the thermoplastic resin. Only one type of coloring agent may be used, or two or more types of coloring agents may be used. When two or more types are used, it is preferable that the total amount be in the above range.

[III. Molded body]

Next, a molded body according to the present invention, which contains the thermoplastic resin or thermoplastic resin composition of the present invention, will be described.

The molded body according to the present invention contains the above-mentioned thermoplastic resin or thermoplastic resin composition. The molded body is obtained by molding the thermoplastic resin or the thermoplastic resin composition. The molding method for the molded body is not particularly limited, and examples of the molded body include an injection molded product, a press molded product, a blow molded product, an extrusion molded product, a vacuum molded product, and a pressure molded product.

The molded body of the present invention is, for example, an optical lens, an optical film, or the like. The thermoplastic resin or the like of the present invention is suited for optical applications, and the optical lens or optical film has particularly excellent properties. Also, the optical lens that may be included in the molded body has a refractive index, Abbe number, and other properties in the appropriate range.

[IV. Method for producing thermoplastic resin]

<IV-1. Outline of production method>

A method for producing the thermoplastic resin includes at least a step of polymerizing the above-mentioned silane compound as a linking agent and the diol compound. The silane compound functions as a supply source for the silane bond moiety, and the component A and component B function as a supply source for their respective corresponding constituent units.

Schematically illustrating the above-mentioned polymerization reaction, it is as follows. For example, when dimethyldiphenoxysilane is used as the silane compound, it reacts with a terminal hydroxyl group of the diol compound to form the main chain of the thermoplastic resin, and phenol (PhOH) is produced as a by-product. Therefore, in the polymerization step, it is preferable to proceed the polymerization reaction while the mixture of each of the above-mentioned components is melted and the byproduct alcohol, such as an aryl alcohol including phenol, is removed under reduced pressure.

<IV-2. Ratio of monomers>

In the polymerization process for production of the thermoplastic resin, the ratio of the monomers, silane compound and diol compound, is adjusted as appropriate to realize the above-mentioned preferable ratio of constituent units. For example, as mentioned above, there is no particular limitation on the proportions of the diol constituent unit (B), the fluorene constituent unit (F), and the dinaphthalene constituent unit (N), and a molar ratio of the monomer compounds equal to the target ratio for the constituent units can be employed.

For example, each of the contents of a diol compound (B') for forming the specific diol constituent unit (B), a fluorene compound (F') for forming the fluorene constituent unit (F), and a dinaphthalene compound (N') for forming the dinaphthalene constituent unit (N) in all diol compounds, based on the total number of moles, is, for example, 10 to 100 mol%, and may be 30 to 70 mol%, 40 to 60 mol%, or 45 to 55 mol%.

Also, in the thermoplastic resin, the fluorene constituent unit (F) and the dinaphthalene constituent unit (N) may be used in combination, in which case the molar ratio between the fluorene compound (F') for forming the fluorene constituent unit (F) and the dinaphthalene compound (N') for forming the dinaphthalene constituent unit (N) is preferably 20:80 to 80:20, more preferably 30:70 to 70:30, and still more preferably 40:60 to 60:40.

In addition, the silane constituent unit (S) is bonded to a terminal of the diol constituent unit (B), the fluorene constituent unit (F), or the dinaphthalene constituent unit (N), and it is contained in a number of moles approximately equal to the total number of moles of the diol constituent unit (B), the fluorene constituent unit (F), and the dinaphthalene constituent unit (N). However, in the polymerization step, it is preferable to use the silane compound in excess, to some

extent. For example, the number of moles of the silane compound to be polymerized is about 1.0 times to 1.2 times, preferably 1.01 times to 1.1 times, and more preferably 1.02 times to 1.06 times, the total number of moles of the component A and the component B. In this manner, when the amount (number of moles) of the silane compound with respect to the total amount (number of moles) of the diol compound for forming the diol constituent unit (A) is slightly in excess in the polymerization step, the excess silane compound is not used in the polymerization reaction and is removed from the reaction system, whereas the shortage of the silane constituent unit (S) in the thermoplastic resin obtained after polymerization is prevented and the amount of the silane constituent unit can be reliably adjusted to be equal to the total number of moles of the diol constituent unit (A).

<II-3. Optional monomer>

In the polymerization step for producing the thermoplastic resin, a monomer other than the silane compound, component A, and component B may be used. It is, for example, a monomer for forming the above-mentioned optional constituent unit (Z), or the like.

<II-4. Catalyst>

Although no catalyst is required to be used in the polymerization step, it is preferable to use, for example, any of the following polymerization catalysts.

First, preferred specific examples of the polymerization catalyst include a metal acetate, such as zinc acetate, lead acetate, manganese acetate, cobalt acetate, aluminum acetate, calcium acetate, potassium acetate, lithium acetate, magnesium acetate, sodium acetate, tin acetate, zirconium acetate, and zirconium acetylacetonate (Zr(acac)), and other metal salts. Among these metal salts, more preferred specific examples of the polymerization catalyst include zinc acetate, lead acetate, manganese acetate, and cobalt acetate.

As the polymerization catalyst, a phosphonium salt or the like can be used, with a quaternary phosphonium salt being preferable. Specific examples of the phosphonium salt as the polymerization catalyst include: an alkyl phosphonium salt, such as tetra-n-butyl phosphonium bromide and tetra-n-butyl phosphonium chloride; an aryl phosphonium salt, such as tetraphenyl phosphonium bromide, tetraphenyl phosphonium chloride, and tetraphenyl phosphonium phenoxide (TPPP); and an alkyl aryl phosphonium salt.

In addition, a catalyst containing a basic compound can also be used as the polymerization catalyst, and examples of the basic compound catalyst include an alkali metal compound and an alkaline earth metal compound, such as an organic acid salt, an inorganic salt such as carbonate, an oxide, a hydroxide, a hydride, and an alkoxide of an alkali metal, an alkaline earth metal compound, and the like. Alternatively, as the basic compound catalyst, a quaternary ammonium hydroxide and a salt thereof, an amine, a phosphazene, and the like are used. These compounds can be used alone, or multiple types of them can be used in combination.

Among the above-mentioned basic compound catalysts, those containing an alkali metal carbonate or an alkali metal hydroxide are more preferable. More preferred specific examples of the catalyst include those containing a metal carbonate, such as cesium carbonate, potassium carbonate, sodium carbonate, and sodium bicarbonate; and those containing a metal hydroxide, such as cesium hydroxide, potassium hydroxide, and sodium hydroxide.

Also, preferred specific examples of the amine catalyst include diazabicycloundecene (DBU: registered trademark), and preferred specific examples of the phosphazene catalyst include BTPP (tert-butyliminotripyrrolidinophosphorane).

In addition, as the catalyst, a phosphonium salt or the like can be used, with a quaternary phosphonium salt being preferable. Specific examples of the phosphonium salt as the polymerization catalyst include: an alkyl phosphonium salt, such as tetra-n-butyl phosphonium bromide and tetra-n-butyl phosphonium chloride; an aryl phosphonium salt, such as tetraphenyl phosphonium bromide, tetraphenyl phosphonium chloride, and tetraphenyl phosphonium phenoxide (TPPP); and an alkyl aryl phosphonium salt.

Further specific examples of the catalyst in the polymerization reaction include the following.

Examples of the alkali metal compound include sodium hydroxide, potassium hydroxide, lithium hydroxide, cesium hydroxide, sodium bicarbonate, potassium bicarbonate, lithium bicarbonate, cesium bicarbonate, sodium carbonate, potassium carbonate, lithium carbonate, cesium carbonate, sodium acetate, potassium acetate, lithium acetate, cesium acetate, sodium stearate, potassium stearate, lithium stearate, cesium stearate, sodium borohydride, potassium borohydride, lithium borohydride, cesium borohydride, sodium boron phenylate, potassium boron phenylate, lithium boron phenylate, cesium boron phenylate, sodium benzoate, potassium benzoate, lithium benzoate, cesium benzoate, disodium hydrogen phosphate, dipotassium hydrogen phosphate, dilithium hydrogen phosphate, dicesium hydrogen phosphate, disodium phenyl phosphate, dipotassium phenyl phosphate, dilithium phenyl phosphate, dicesium phenyl phosphate; an alcoholate and a phenolate of sodium, potassium, lithium, and cesium; and a disodium salt, a dipotassium salt, a dilithium salt, and a dicesium salt of bisphenol A.

Also, examples of the alkaline earth metal compound include calcium hydroxide, barium hydroxide, magnesium hydroxide, strontium hydroxide, calcium bicarbonate, barium bicarbonate, magnesium bicarbonate, strontium bicarbonate, calcium carbonate, barium carbonate, magnesium carbonate, strontium carbonate, calcium acetate, barium acetate, magnesium acetate, strontium acetate, calcium stearate, barium stearate, magnesium stearate, and strontium stearate.

In addition, specific examples of the basic boron compound that can be used as the catalyst in the polymerization step include a sodium salt, a potassium salt, a lithium salt, a calcium salt, a barium salt, a magnesium salt, and a strontium salt of tetramethylboron, tetraethylboron, tetrapropylboron, tetrabutylboron, trimethylethylboron, trimethylbenzylboron, trimethylphenylboron, triethylmethylboron, triethylbenzylboron, triethylphenylboron, tributylbenzylboron, tributylphenylboron, tetraphenylboron, benzyltriphenylboron, methyltriphenylboron, butyltriphenylboron, and the like.

Examples of the basic phosphorus compound that can be used as the catalyst in the polymerization step include triethylphosphine, tri-n-propylphosphine, triisopropylphosphine, tri-n-butylphosphine, triphenylphosphine, tributylphosphine, and a quaternary phosphonium salt.

Examples of the basic ammonium compound that can be used as the catalyst in the polymerization step include tetramethylammonium hydroxide, tetraethylammonium hydroxide, tetrapropylammonium hydroxide, tetrabutylammonium hydroxide, trimethylethylammonium hydroxide, trimethylbenzylammonium hydroxide, trimethylphenylammonium hydroxide, triethylmethylammonium hydroxide, triethylbenzylammonium hydroxide, triethylphenylammonium hydroxide, tributylbenzylammonium hydroxide, tributylphenylammonium hydroxide, tetraphenylammonium hydroxide, benzyltriphenylammonium hydroxide, methyltriphenylammonium hydroxide, and butyltriphenylammonium hydroxide.

Examples of the amine compound that can be used as the catalyst in the polymerization step include 4-aminopyridine, 2-aminopyridine, N,N-dimethyl-4-aminopyridine, 4-diethylaminopyridine, 2-hydroxypyridine, 2-methoxypyridine, 4-methoxypyridine, 2-dimethylaminoimidazole, 2-methoxyimidazole, imidazole, 2-mercaptoimidazole, 2-methylimidazole, and aminoquinoline.

In addition, those known per se as polymerization catalysts can also be employed, and for example, an antimony compound, a titanium compound, a germanium compound, a tin compound, or an aluminum compound is preferable. Examples of such compounds may include an oxide, an acetate, a carboxylate, a hydride, an alcoholate, a halide, a carbonate, and a sulfate of antimony, titanium, germanium, tin, and aluminum. Furthermore, two or more of these compounds can be used in combination. Among these, tin, titanium, and germanium compounds are preferable from the viewpoint of melt stability and color hue of the thermoplastic resin.

As mentioned above, those known per se can be employed as the catalyst in the polymerization reaction, and for example, compounds containing a manganese, magnesium, titanium, zinc, aluminum, calcium, cobalt, sodium, lithium, or lead element or the like can be used. Specific examples thereof include an oxide, an acetate, a carboxylate, a hydride, an alcoholate, a halide, a carbonate, and a sulfate containing these elements. Among these, compounds such as an oxide, an acetate, and an alcoholate of manganese, magnesium, zinc, titanium, and cobalt are preferable from the viewpoint of melt stability, color hue, and low polymer-insoluble foreign matter of the thermoplastic resin. Furthermore, manganese, magnesium, and titanium compounds are preferable. Two or more of these compounds can be used in combination.

As the catalyst in the polymerization step, a salt of zinc, tin, zirconium, or lead is preferably used, and these can be used alone or in combination. They may also be used in combination with the above-mentioned alkali metal compounds and alkaline earth metal compounds.

As the catalyst in the polymerization step, specifically, zinc acetate, zinc benzoate, zinc 2-ethylhexanoate, tin(II) chloride, tin(IV) chloride, tin(II) acetate, tin(IV) acetate, dibutyltin dilaurate, dibutyltin oxide, dibutyltin dimethoxide, zirconium acetylacetonate, zirconium oxyacetate, zirconium tetrabutoxide, lead(II) acetate, lead(IV) acetate, zirconium acetate, titanium tetrabutoxide, and the like can be used. Among the above, zinc acetate, zirconium acetate, and titanium tetrabutoxide are preferable, and titanium tetrabutoxide is more preferable.

Note that the above-mentioned catalyst can be prepared by known methods, or those commercially available may be used.

Also, in the thermoplastic resin and the thermoplastic resin composition, the details of which will be described later, it is preferable to substantially completely remove the catalyst, for example, alkali metal compound catalyst and alkaline earth metal compound catalyst.

<II-5. Additive>

In the polymerization reaction for production of the thermoplastic resin, an additive may be used, and an antioxidant is suitably used. In the polymerization step, although the order of mixing is not limited, it is preferable to start the polymerization reaction after not only the silane compound, component A, and component B as monomer compounds, but also an antioxidant is mixed with the monomer compounds in advance. In the polymerization step, it is preferable to polymerize the monomer compounds in the presence of the above-mentioned catalyst.

Examples of the antioxidant may include a phosphite-based additive, a phenolic antioxidant, a hindered phenolic

antioxidant, a bisphenolic antioxidant, a polyphenolic antioxidant, and a sulfur-based antioxidant, and it is preferable to use a phosphite-based additive.

Specific examples of the phosphite-based antioxidant may include an organic phosphate compound, an organic phosphite compound, and an organic phosphonite compound. Examples thereof may also include at least one selected from the group of (a) phosphite ester compound in which at least one ester in the molecule is esterified with phenol and/or phenol having at least one alkyl group having 1 to 25 carbon atoms, (b) phosphorous acid, and (c) tetrakis(2,4-di-tert-butylphenyl)-4,4'-biphenylene-di-phosphonite. Specific examples of the (a) phosphite ester compound may include trioctyl phosphite, trioctadecyl phosphite, tridecyl phosphite, trilauryl phosphite, tristearyl phosphite, triphenyl phosphite, tris(monononylphenyl) phosphite, tris(monononyl/dinonyl-phenyl) phosphite, trisnonylphenyl phosphite, tris(octylphenyl) phosphite, tris(2,4-di-tert-butylphenyl) phosphite, trinonyl phosphite, didecylmonophenyl phosphite, dioctylmonophenyl phosphite, diisopropylmonophenyl phosphite, monobutyldiphenyl phosphite, monodecyldiphenyl phosphite, bis(2,4-di-tert-butylphenyl)pentaerythritol phosphite, bis(2,6-di-tert-butyl-4-methylphenyl)pentaerythritol phosphite, monooctyldiphenyl phosphite, distearylpentaerythritol diphosphite, tricyclohexyl phosphite, diphenylpentaerythritol diphosphite, bis(2,6-di-tert-butyl-4-methylphenyl)pentaerythritol diphosphite, 2,2-methylene bis(4,6-di-tert-butylphenyl)octyl phosphite, bis(nonylphenyl)pentaerythritol diphosphite, bis(2,4-di-tert-butylphenyl)pentaerythritol diphosphite, and bis(2,6-di-tert-butyl-4-ethylphenyl)pentaerythritol diphosphite. They may be used alone, or two or more types may be mixed for use.

Examples of the organic phosphite compound may include "ADK STAB 1178 (trade name, hereinafter the same)," "ADK STAB 2112," and "ADK STAB HP-10" manufactured by ADEKA CORPORATION, "JP-351," "JP-360," and "JP-3CP" manufactured by Johoku Chemical Co., Ltd., and "Irgafos 168" manufactured by BASF SE.

Also, examples of the phosphate ester may include trimethyl phosphate, triethyl phosphate, tributyl phosphate, trioctyl phosphate, triphenyl phosphate, tricresyl phosphate, tris(nonylphenyl) phosphate, and 2-ethylphenyldiphenyl phosphate.

Examples of the phenolic antioxidant may include 2,6-di-tert-butyl-4-methylphenol, tris(3,5-di-tert-butyl-4-hydroxybenzyl) isocyanurate, n-octadecyl-3-(3',5'-di-tert-butyl-4'-hydroxyphenyl) propionate, tetrakis[methylene-3-(3,5-di-tert-butyl-4-hydroxyphenyl)propionate]methane, 4,4'-butylidene bis-(3-methyl-6-tertbutylphenol), triethylene glycol-bis [3-(3-tert-butyl-4-hydroxy-5-methylphenyl)propionate], 3,9-bis{2-[3-(3-tert-butyl-4-hydroxy-5-methylphenyl)propionyloxy]-1,1-dimethylethyl}-2,4, 8,10-tetraoxaspiro[5,5]undecane, pentaerythritol tetrakis[3-(3,5-di-tert-butyl-4-hydroxyphenyl)propionate], thiodiethylene bis[3-(3,5-di-tert-butyl-4-hydroxyphenyl)propionate], N,N'-hexane-1,6-diyl bis[3-(3,5-di-tert-butyl-4-hydroxyphenylpropionamide)], 2,4-dimethyl-6-(1-methylpentadecyl)phenol, diethyl [[3,5-bis(1,1-dimethylethyl)-4-hydroxyphenyl]methyl]phosphoate, 3,3',3",5,5',5"-hexa-tert-butyl-a,a',a"-(mesitylene-2,4,6-triyl)tri-p-cresol, 4,6-bis(octylthiomethyl)-o-cresol, ethylene bis(oxyethylene) bis[3-(5-tert-butyl-4-hydroxy-m-tolyl)propionate], hexamethylene bis[3-(3,5-di-tert-butyl-4-hydroxyphenyl)propionate], 1,3,5-tris(3,5-di-tert-butyl-4-hydroxybenzyl)-1,3,5-triazine-2,4,6(1H,3H,5H)-trione, and 2,6-di-tert-butyl-4-(4,6-bis(octylthio)-1,3,5-triazin-2-ylamino)phenol.

Examples of the phenolic antioxidant may include "Irganox 1010" ((R), hereinafter the same) and "Irganox 1076" manufactured by BASF SE, and "ADK STAB AO-50" and "ADK STAB AO-60" manufactured by ADEKA CORPORATION.

When compounded, the proportion of the antioxidant to be added is preferably 0.001 parts by mass or more, more preferably 0.01 parts by mass or more, and still more preferably 0.05 parts by mass or more, and also preferably 1 part by mass or less, more preferably 0.5 parts by mass or less, and still more preferably 0.3 parts by mass or less or 0.1 parts by mass or less, with respect to 100 parts by mass of the monomer compounds of the thermoplastic resin in total. In addition, the content of phosphorus in the thermoplastic resin due to the phosphite-based antioxidant or the like is also, for example, 1 part by mass or less, more preferably 0.5 parts by mass or less, and still more preferably 0.1 parts by mass or less.

Only one type of antioxidant may be used, or two or more types of antioxidants may be used. When two or more types are used, it is preferable that the total amount be in the above range.

It is also possible to add an antioxidant to the thermoplastic resin produced by the polymerization reaction to produce a thermoplastic resin composition containing the antioxidant. Conventionally, additives are often added after production of the resin in order to prevent thermal history on the additives themselves caused by the polymerization reaction, or to enable adjustment of the amount to be added depending on the purpose of use.

However, according to the method for producing the thermoplastic resin of the present invention, in which an antioxidant is added to the monomer compounds prior to the polymerization reaction, the effect of improving the color hue in the thermoplastic resin to be produced was remarkable.

<II-6. Conditions of polymerization reaction>

In the polymerization reaction by which the above-mentioned monomer compounds are polymerized, the mixture of each of the above components is melted, and while in a molten state, the by-product alcohol derived from the carbonate compound, such as an aryl alcohol including phenol and methanol, is removed under reduced pressure. By setting the reaction conditions in this way, the polymerization reaction can be proceeded efficiently.

In the polymerization step, it is preferable to proceed the polymerization reaction under a pressure of 400 Pa or less. That is, it is preferable that the pressure in the polymerization reaction be in the range of 400 Pa or less.

In the polymerization step, it is preferable to maintain the system at normal pressure without pressure reduction or with little pressure reduction for a certain period of time, and then reduce the pressure in the system to further proceed the polymerization reaction. For example, in the polymerization step, it is preferable to gradually decrease the reaction pressure from the initial atmospheric pressure to 400 Pa or 200 Pa or less, such as 40,000 Pa, 27,000 Pa, 24,000 Pa, 20,000 Pa, 16,000 Pa, 10,000 Pa, 8,000 Pa, 5,000 Pa, 4,000 Pa, 2,000 Pa, 400 Pa, and 400 Pa or less or 200 Pa or less. For example, in the polymerization step, the reaction pressure may be reduced in stages from the initial atmospheric pressure to 40,000 Pa, 20,000 Pa, 10,000 Pa, 5,000 Pa, and 200 Pa or less. As described above, the pressure reduction step, in which the pressure in the reaction system is reduced in stages and the pressure reduction degree is improved in the middle of the step, can efficiently remove the by-product alcohol while suppressing the distillation of the raw materials, which is preferable.

The time of the polymerization step can be determined as appropriate, taking into consideration conditions such as the type of target thermoplastic resin, pressure, and temperature. For example, the total time spent for the polymerization step is 5 to 10 hours or less. In more detail, the reaction time before pressure reduction in the reaction system is 0.5 to 3 hours, preferably 1 to 2 hours, and the reaction time after pressure reduction is 1 to 5 hours, preferably 2 to 4 hours.

In the polymerization step, it is preferable that the temperature in the above-mentioned polymerization reaction be in the range of 150 to 300°C. More preferably, the temperature of the polymerization reaction is 160 to 280°C, still more preferably 170 to 270°C, and particularly preferably 180 to 260°C. Also, the preferred temperature range for the polymerization reaction may be 190 to 290°C, 210 to 280°C, 230 to 270°C, 240 to 260°C, or the like.

In the polymerization step, it is preferable that the value of the ratio of the molar amount of the catalyst to the total molar amount of the monomer compounds (molar ratio: that is, the molar amount of the catalyst/the molar amount of the monomer compounds) be $1.0 \times 10^{-7}$ to $1.0 \times 10^{-2}$ (mol/mol: 0.1 to 10000 μmol/mol or $1.0 \times 10^{-4}$ to 10 mmol/mol). The above molar ratio is more preferably $1.0 \times 10^{-7}$ to $2.0 \times 10^{-5}$ mol/mol (or 0.1 to 20 μmol/mol).

## Examples

<Method for measuring refractive index (nd)>

Refractive index (nd):

For a 3 mm thick rectangular piece made of the polycarbonate copolymer produced in the Examples and Comparative Examples described later, the refractive index was measured by the method of JIS-K-7142 using an Abbe refractometer.

<Method for measuring Abbe number (νd)>

For a 3 mm thick rectangular piece made of the polycarbonate resin produced in Examples and Comparative Examples, the refractive indices were measured at wavelengths of 486 nm, 589 nm and 656 nm at 23°C using an Abbe refractometer, and the Abbe number was further calculated using the expression below.

$$\nu d = (nd - 1)/(nF - nC)$$

nd: Refractive index at a wavelength of 589 nm
nC: Refractive index at a wavelength of 656 nm
nF: Refractive index at a wavelength of 486 nm

<Measurement of glass transition temperature (Tg)>

A test specimen of 5 to 12 mg was used as a measurement sample. The measurement sample was prepared by accurately weighing the test specimen into a sample container for Al autosampler (RDC aluminum pan, cylindrical container with a diameter of 6.8 mm and a height of 2.5 mm) and sealing the top of the sample container with a cover for Al autosampler.

The measurement of Tg was carried out using a differential scanning calorimeter (DSC) under a nitrogen atmosphere (nitrogen flow rate: 50 ml/min), and 10.0 mg of sapphire was used as the reference material in the reference cell. Then, the measurement sample that had been adjusted to 30°C was heated up to 280°C at 20°C/min and then cooled down to 30°C by cooling at 20°C/min. Thereafter, the temperature was increased to 280°C at 10°C/min to perform the

measurement.

Measurement apparatus: differential scanning calorimeter (DSC) (product name "DSC-7020", manufactured by Hitachi High-Tech Science Corporation)

<Measurement of weight average molecular weight (Mw) in terms of polystyrene>

The standard curve was created using GPC (gel permeation chromatography) with chloroform as the developing solvent and a standard polystyrene (Shodex STANDARD, SM-105) with a known molecular weight (molecular weight distribution = 1). From the measured standard polystyrene, the elution time and molecular weight value for each peak were plotted and approximated by a cubic equation to form a calibration curve.

Then, based on the obtained calibration curve, the weight average molecular weight (Mw) was determined as the value in terms of polystyrene from the following expression.

[Calculation expression]

$$Mw = \Sigma(W_i \times M_i)/\Sigma(W_i)$$

(In the above expression, i represents the i-th division point when the molecular weight M is divided, $W_i$ represents the i-th weight, and $M_i$ represents the i-th molecular weight. In addition, the molecular weight M represents the molecular weight in terms of polystyrene at the same elution time of the calibration curve.)

[Measurement conditions]

- Apparatus: LabSolutions manufactured by Shimadzu Corporation
- Column: guard column (Shodex GPC K-G 4A) × 1, analytical column (Shodex GPC K-805L) × 2
- Solvent: chloroform (HPLC grade)
- Injection volume: 10 μL
- Sample concentration: 2000 ppm
- Solvent flow rate: 1 mL/min
- Measurement temperature: 40°C
- Detector: RI

<Measurement of content proportion of low molecular weight compound with weight average molecular weight (Mw) of 1,000 or less>

The proportion of low molecular weight compound with a Mw of 1,000 or less in the polycarbonate resin can be calculated, for example, based on data obtained by GPC analysis under the above-mentioned conditions. For example, it can be calculated from the ratio of the area of retention time of 20.5 min to 21.5 min/the area of 0 min to 21.5 min (GPC area ratio).

That is, the content proportion of the low molecular weight compound can be determined by carrying out GPC analysis under the conditions described in the <Measurement of weight average molecular weight (Mw) in terms of polystyrene> column to measure the content proportion of the low molecular weight compound (B/A × 100 (%)) based on the ratio between the GPC area (A) of the peak with a retention time (holding time) of 21.5 minutes or less, which is thought to correspond to the amount of all compounds contained in the polycarbonate resin sample, and the GPC area (B) of the peak identified during a retention time of 20.5 minutes to 21.5 minutes, which is thought to correspond to the amount of low molecular weight compound with a weight average molecular weight of 1,000 or less.

<Synthesis of di(1-naphthyl)dimethoxysilane (DNDMS)>

In a 500 mL four-neck flask equipped with a magnetic stirring bar, a thermometer, and a dropping funnel, magnesium (12.30 g, 0.506 mol) and iodine (3 grains) were charged, and the inside of the system was replaced to a nitrogen atmosphere. 50 mL of THF and a mixed solution of 150 mL of THF, 1-bromonaphthalene (91.11 g, 0.44 mol), and tetramethoxysilane (30.44 g, 0.2 mol) were added to the flask part and the dropping funnel, respectively, and stirring with a magnetic stirrer was started. Under a stream of nitrogen, dropwise addition from the dropping funnel was started to initiate Grignard reagent preparation and reaction with tetramethoxysilane. The entire volume in the dropping funnel was added

dropwise over 50 minutes, after which heating with an oil bath was started and heating reflux was carried out for 3 hours. After terminating the heating reflux, the temperature was lowered to 20°C by air cooling and ice cooling. While continuing ice cooling, 40 mL of methanol was added to stop the reaction. A magnetic stirring bar and 450 mL of hexane were added to another 1 L flask, and stirring with a magnetic stirrer was performed. The solution after the reaction was stopped was poured into the stirred hexane, and almost the entire amount of magnesium salt by-produced from the reaction was precipitated out as a white precipitate. The magnesium salt was filtered out by filtration under reduced pressure, and the filtration residue was washed twice with 100 mL of toluene warmed to 70°C and once with 100 mL of hexane at room temperature. Using a rotary evaporator, the solvent was distilled off from the filtrate after the filtration under reduced pressure, thereby obtaining 86.35 g of a crude product.

While heating the crude product to 100°C, 40 g of toluene was added, and when dissolved, hot filtration was carried out under reduced pressure. While stirring the filtrate with the magnetic stirring bar and the magnetic stirrer, air cooling and ice cooling were carried out for 25 minutes and 15 minutes, respectively, precipitating DNDMS. Finally, DNDMS, a white solid, was separated by filtration through a Kiriyama funnel and washed twice with 50 mL of ice-cold hexane, thereby obtaining 55.13 g of a white solid composed of DNDMS (yield 80%).

Identification of the obtained white solid was performed by NMR and GC. As a result, the NMR spectral data were as follows, and the GC purity was 99.3%. 1H NMR (500 MHz, CDCl3): δ 8.31 (dd, 2H), 8.05, (dd, 2H), 7.93, (d, 2H), 7.83, (dd, 2H), 7.49, (dd, 2H), 7.45-7.38, (m, 4H), 3.64, (s, 6H).

The molecular structure of DNDMS thus obtained is shown by formula (1-2) below. Note that the DNDMS synthesized in the above-mentioned synthesis example may also contain isomers, such as di(2-naphthyl)dimethoxysilane, for example. Then, even if the obtained DNDMS is a mixture of isomers represented by formula (1-3), it may be used as it is in the next polymerization reaction.

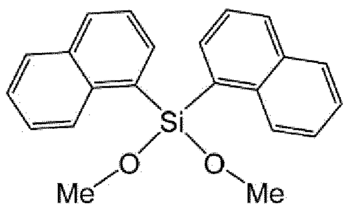

(1 − 2)

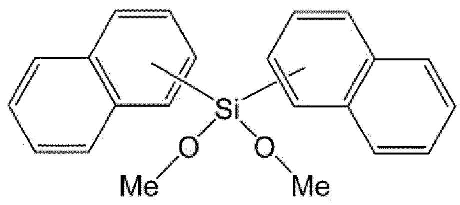

(1 − 3)

<Synthesis of di(2-naphthyl)diethoxysilane (D2NDES)>

In a 500 mL four-neck flask equipped with a magnetic stirring bar, a thermometer, and a dropping funnel, magnesium (12.58 g, 0.518 mol) and iodine (1 grain) were charged, and the inside of the system was replaced to a nitrogen atmosphere. 50 mL of THF and a mixed solution of 150 mL of THF, 2-bromonaphthalene (93.18 g, 0.45 mol), and tetraethoxysilane (41.67 g, 0.2 mol) were added to the flask part and the dropping funnel, respectively, and stirring with a magnetic stirrer was started. Under a stream of nitrogen, dropwise addition from the dropping funnel was started to initiate Grignard reagent preparation and reaction with tetramethoxysilane. The entire volume in the dropping funnel was added dropwise over 50 minutes, after which heating with an oil bath was started and heating reflux was carried out for 3.5 hours. After terminating the heating reflux, the temperature was lowered to 20°C by air cooling and ice cooling. While continuing ice cooling, 50 mL of ethanol was added to stop the reaction. A magnetic stirring bar and 400 mL of hexane were added to another 1 L flask, and stirring with a magnetic stirrer was performed. The solution after the reaction was stopped was poured into the stirred hexane, and a magnesium salt by-produced from the reaction was precipitated out as a grayish white precipitate. The magnesium salt was filtered out from the reaction solution by decantation, and the residue was washed twice with 50 mL of hexane and filtered under reduced pressure. Using a rotary evaporator, the solvent was distilled off from the filtrate after the filtration under reduced pressure, thereby obtaining 84.48 g of a crude product.

The crude product was distilled under reduced pressure to obtain 36.56 g of purified D2NDES (b.p. 202°C/130 Pa) as a yellowish white solid. Of the D2NDES after distillation, 32.62 g was further purified by recrystallization. 11.6 g of hexane was added to D2NDES and heated to 45°C while stirring with a magnetic stirrer, thereby completely dissolving it. After cooling to room temperature with stirring, 2 mg of crude crystals of D2NDES were added, and crystals of D2NDES began to be precipitated. After further stirring at room temperature for 90 minutes, stirring was performed for 10 minutes under ice cooling. The precipitated white solid was separated by filtration through a Kiriyama funnel and washed once with 30 mL of ice-cold hexane, thereby obtaining 28.6 g of a white solid composed of D2NDES with high purity (yield 43%, taking into account the amount used for recrystallization).

Identification of the obtained white solid was performed by NMR and GC. As a result, the NMR spectral data were as follows, and the GC purity was 99.4%. $^{1}$H NMR, (500 MHz, $CDCl_3$): δ 8.24, (s, 2H), 7.86-7.83, (m, 6H), 7.74, (dd, 2H),

7.53-7.46, (m, 4H), 3.95, (q, 4H), 1.31, (t, 6H).

The molecular structure of D2NDES thus obtained is shown by formula (1-4) below. Note that the D2NDES synthesized in the above-mentioned synthesis example may also contain isomers, such as di(1-naphthyl)diethoxysilane, for example, but even if it is a mixture of isomers, it may be used as it is in the next polymerization reaction.

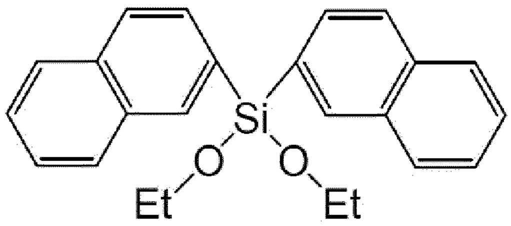

(1 − 4)

<Synthesis of di(1-naphthyl)diethoxysilane (DNDES)>

In a 300 mL four-neck flask equipped with a magnetic stirring bar, a thermometer, and a dropping funnel, magnesium (3.91 g, 0.161 mol) and iodine (1 grain) were charged, and the inside of the system was replaced to a nitrogen atmosphere. 15 mL of THF and a mixed solution of 35 mL of THF, 1-bromonaphthalene (28.99 g, 0.14 mol), and tetraethoxysilane (10.42 g, 0.05 mol) were added to the flask part and the dropping funnel, respectively, and stirring with a magnetic stirrer was started. Under a stream of nitrogen, dropwise addition from the dropping funnel was started to initiate Grignard reagent preparation and reaction with tetramethoxysilane. The entire volume in the dropping funnel was added dropwise over 60 minutes, after which heating with an oil bath was started and heating reflux was carried out for 3 hours. After terminating the heating reflux, the temperature was lowered to 20°C by air cooling and ice cooling. While continuing ice cooling, 20 mL of ethanol was added to stop the reaction. A magnetic stirring bar and 150 mL of hexane were added to another 500 mL flask, and stirring with a magnetic stirrer was performed. The solution after the reaction was stopped was poured into the stirred hexane, and almost the entire amount of magnesium salt by-produced from the reaction was precipitated out as a white precipitate. The magnesium salt was filtered out by filtration under reduced pressure, and the filtration residue was washed three times with 50 mL of hexane. Using a rotary evaporator, the solvent was distilled off from the filtrate after the filtration under reduced pressure, thereby obtaining 26.33 g of a crude product.

While warming the crude product to 66°C, 100 mL of hexane was added. The insoluble components were hot-filtered under reduced pressure, and the filtration residue was washed with 50 mL of hexane that had also been warmed to 66°C. Using a rotary evaporator, hexane was distilled off from the filtrate, thereby obtaining 23.71 g of a white solid, which was used for recrystallization. While warming the obtained white solid again to 66°C, hexane was added, and the solid was completely dissolved when 6.4 g of hexane was added. Then, while stirring the solution with the magnetic stirring bar and the magnetic stirrer, air cooling and ice cooling were carried out for 20 minutes and 15 minutes, respectively, precipitating DNDES. Finally, DNDES, a white solid, was separated by filtration through a Kiriyama funnel and washed twice with 20 mL of ice-cold hexane, thereby obtaining 14.27 g of a white solid composed of DNDES (yield 77%).

Identification of the obtained white solid was performed by NMR. As a result, the NMR spectral data were as follows.

$^1$H NMR, (500 MHz, $CDCl_3$): δ 8.32, (d, 2H), 8.11, (dd, 2H), 7.91, (d, 2H), 7.82, (d, 2H), 7.50, (dd, 2H), 7.42-7.34, (m, 4H), 3.85, (q, 4H), 1.25, (t, 6H).

The molecular structure of DNDES thus obtained is shown by formula (1-5) below. Note that the DNDES synthesized in the above-mentioned synthesis example may also contain isomers, such as di(2-naphthyl)diethoxysilane, for example, but even if it is a mixture of isomers, it may be used as it is in the next polymerization reaction.

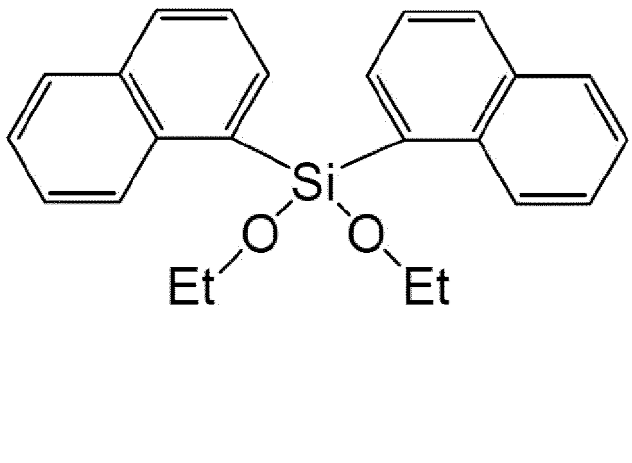

(1 − 5)

<Synthesis of (9-phenanthrenyl)phenyldimethoxysilane (PHPDMS)>

In a 500 mL four-neck flask equipped with a magnetic stirring bar, a thermometer, and a dropping funnel, magnesium (6.26 g, 0.258 mol) and iodine (3 grains) were charged, and the inside of the system was replaced to a nitrogen atmosphere. 25 mL of THF and phenyltrimethoxysilane (51.06 g, 0.258 mol) were added to the flask part, and a mixed solution of 100 mL of THF and 9-bromophenanthrene (64.28 g, 0.250 mol) was further added to the dropping funnel. Stirring with a magnetic stirrer was started. Under a stream of nitrogen, dropwise addition from the dropping funnel was started to initiate Grignard reagent preparation and reaction with phenyltrimethoxysilane. The entire volume in the dropping funnel was added dropwise over 40 minutes, after which heating with an oil bath was started and heating reflux was carried out for 3 hours. After terminating the heating reflux, the temperature was lowered to room temperature by air cooling and ice cooling. While continuing ice cooling, 20 mL of methanol was added to stop the reaction.

A magnetic stirring bar, 100 mL of hexane, and 300 mL of toluene were added to another 1 L flask, and stirring with a magnetic stirrer was performed. The solution after the reaction was stopped was poured into the stirred mixed solution of hexane and toluene, and a magnesium salt by-produced from the reaction was precipitated out as a grayish white precipitate. The magnesium salt was filtered out from the reaction solution by filtration under reduced pressure. The residue was washed twice with 100 mL of toluene warmed to 70°C and once with 100 mL of hexane at room temperature, and filtered under reduced pressure. Using a rotary evaporator and a vacuum pump, the solvent was distilled off under reduced pressure from the filtrate after the filtration under reduced pressure, thereby obtaining 95.10 g of a crude product.

While warming the crude product to 100°C, 67 g of toluene was added, and when dissolved, hot filtration was carried out under reduced pressure. While stirring the filtrate with the magnetic stirring bar and the magnetic stirrer, air cooling and ice cooling were carried out for 100 minutes and 25 minutes, respectively, precipitating PHPDMS. Finally, PHPDMS, a solid, was separated by filtration through a Kiriyama funnel and washed once with 50 mL and twice with 100 mL of ice-cold hexane, thereby obtaining 56.86 g of a slightly pinkish white solid composed of PHPDMS (yield 66%).

Identification of the obtained white solid was performed by NMR. As a result, the NMR spectral data were as follows.

$^1$H NMR, (500 MHz, $CDCl_3$): δ 8.70, (dd, 2H), 8.36, (s, 1H), 8.27, (dd, 1H), 7.95, (dd, 1H), 7.72-7.68, (m, 3H), 7.63-7.59, (m, 2H), 7.53-7.50, (m, 1H), 7.43-7.40, (m, 1H), 7.37-7.34, (m, 2H), 3.68, (s, 6H).

The molecular structure of (9-phenanthrenyl)phenyldimethoxysilane (PHPDMS) thus obtained is shown by formula (1-6) below. Note that the PHPDMS synthesized in the above-mentioned synthesis example may also contain isomers, but even if it is a mixture of isomers, it may be used as it is in the next polymerization reaction.

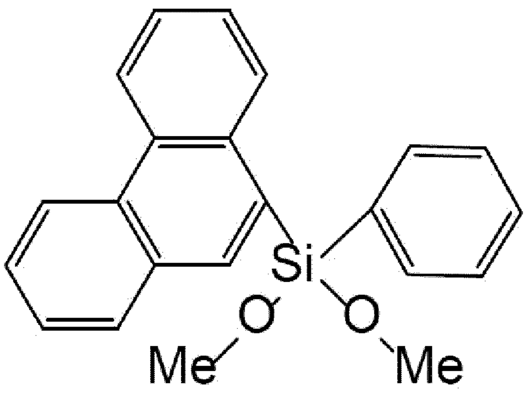

(1 − 6)

<Synthesis of (1-naphthyl)phenyldimethoxysilane (NPDMS)>

In a 500 mL four-neck flask equipped with a magnetic stirring bar, a thermometer, and a dropping funnel, magnesium (9.01 g, 0.371 mol) and iodine (3 grains) were charged, and the inside of the system was replaced to a nitrogen atmosphere. 20 mL of THF and phenyltrimethoxysilane (73.53 g, 0.371 mol) were added to the flask part, and a mixed solution of 100 mL of THF and 1-bromonaphthalene (74.55 g, 0.360 mol) was further added to the dropping funnel. Stirring with a magnetic stirrer was started. Under a stream of nitrogen, dropwise addition from the dropping funnel was started to initiate Grignard reagent preparation and reaction with phenyltrimethoxysilane. The entire volume in the dropping funnel was added dropwise over 50 minutes, after which heating with an oil bath was started and heating reflux was carried out for 2.5 hours. After terminating the heating reflux, the temperature was lowered to room temperature by air cooling and ice cooling. While continuing ice cooling, 20 mL of methanol was added to stop the reaction.

A magnetic stirring bar and 300 mL of hexane were added to another 500 mL flask, and stirring with a magnetic stirrer was performed. The solution after the reaction was stopped was poured into the stirred hexane, and a magnesium

salt by-produced from the reaction was precipitated out as a grayish white precipitate. The magnesium salt was filtered out from the reaction solution by filtration under reduced pressure, and the residue was washed twice with 50 mL of hexane and filtered under reduced pressure. Using a rotary evaporator, the solvent was distilled off under reduced pressure from the filtrate after the filtration under reduced pressure, thereby obtaining 115.84 g of a crude product.

The crude product was distilled under reduced pressure to obtain 90.16 g of purified NPDMS (b.p. 143°C/120 Pa) as a colorless and transparent oil (yield 85%).

Identification of the obtained oily compound was performed by NMR and GC. As a result, the NMR spectral data were as follows, and the GC purity was 98%. $^1H$ NMR, (500 MHz, $CDCl_3$): $\delta$ 8.25, (dd, 1H), 8.00, (dd, 1H), 7.94, (d, 1H), 7.85, (dd, 1H), 7.69-7.67, (m, 2H), 7.50, (dd, 1H), 7.47-7.39, (m, 3H), 7.37-7.34, (m, 2H), 3.65, (s, 6H).

The molecular structure of (1-naphthyl)phenyldimethoxysilane (NPDMS) thus obtained is shown by formula (1-7) below. Note that the NPDMS synthesized in the above-mentioned synthesis example may also contain isomers, but even if it is a mixture of isomers, it may be used as it is in the next polymerization reaction.

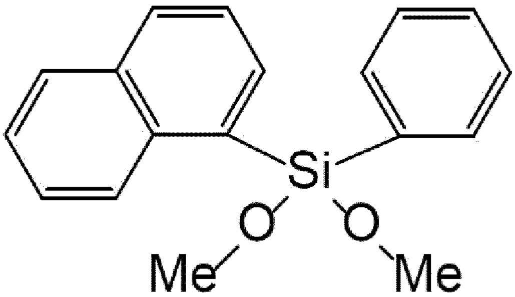

(1 − 7)

<Example 1>

In a 300 ml four-neck flask equipped with a stirrer, 17.56 g (0.040 mol) of BPEF, 14.17 g (0.041 mol) of DNDMS, and 60 μmol/mol of sodium bicarbonate as a catalyst (the catalyst amount is the relative number of moles to BPEF) were placed, and the inside of the system was replaced to a nitrogen atmosphere.

Subsequently, the raw material mixture was heated and melted at 600 hPa and 210°C. After 30 minutes of reaction, the temperature was increased to 230°C, the pressure was reduced to 400 hPa, and the reaction was allowed to proceed for 30 minutes while methanol distilled from the reaction system was condensed and removed with a condenser tube. Next, the reaction was carried out with the pressure reduced to 200 hPa for 20 minutes, with the temperature increased to 240°C and the pressure reduced to 100 hPa for 10 minutes, with the pressure reduced to 50 hPa for 10 minutes, with the pressure reduced to 20 hPa for 10 minutes, and with the pressure reduced to less than 1 hPa for 90 minutes.

The resulting polysilyl ether resin had a Mw of 17,082, a refractive index (nd) of 1.673, an Abbe number (vd) of 20.82, and a glass transition temperature (Tg) of 136°C.

<Example 2-1>

In a 300 ml four-neck flask equipped with a stirrer, 21.56 g (0.040 mol) of BNEF, 14.17 g (0.041 mol) of DNDMS, and 120 μmol/mol of sodium bicarbonate as a catalyst (the catalyst amount is the relative number of moles to BNEF) were placed, and the inside of the system was replaced to a nitrogen atmosphere.

Subsequently, the raw material mixture was heated and melted at 600 hPa and 210°C. After 30 minutes of reaction, the temperature was increased to 230°C, the pressure was reduced to 400 hPa, and the reaction was allowed to proceed for 120 minutes while methanol distilled from the reaction system was condensed and removed with a condenser tube. Next, the reaction was carried out with the pressure reduced to 200 hPa for 20 minutes, with the temperature increased to 240°C and the pressure reduced to 100 hPa for 20 minutes, with the pressure reduced to 50 hPa for 10 minutes, with the pressure reduced to 20 hPa for 10 minutes, and with the pressure reduced to less than 1 hPa for 90 minutes.

The resulting polysilyl ether resin had a Mw of 9,720, a refractive index (nd) of 1.699, an Abbe number (vd) of 18.23, and a glass transition temperature (Tg) of 152°C.

<Example 2-2>

A thermoplastic resin was obtained by steps that were generally common to those in Example 2-1, except that zinc acetate was used as the catalyst in place of sodium bicarbonate. Specifically, the steps were as follows.

In a 300 ml four-neck flask equipped with a stirrer, 21.56 g (0.040 mol) of BNEF, 14.17 g (0.041 mol) of DNDMS, and 100 μmol/mol of zinc acetate as a catalyst (the catalyst amount is the relative number of moles to BNEF) were placed, and the inside of the system was replaced to a nitrogen atmosphere.

Subsequently, the raw materials were heated and melted at 400 hPa and 210°C. After 30 minutes of reaction, the temperature was increased to 230°C, and the reaction was allowed to proceed for 60 minutes while methanol distilled from the reaction system was condensed and removed with a condenser tube. Next, the reaction was carried out with the pressure reduced to 200 hPa for 20 minutes, with the temperature increased to 240°C and the pressure reduced to 100 hPa for 10 minutes, with the pressure reduced to 50 hPa for 10 minutes, and with the pressure reduced to less than 1 hPa for 180 minutes.

The resulting polysilyl ether resin had a Mw of 19,510, a refractive index (nd) of 1.700, an Abbe number (vd) of 18.17, and a glass transition temperature (Tg) of 163°C.

<Example 3>

In a 300 ml four-neck flask equipped with a stirrer, 10.78 g (0.020 mol) of BNEF, 12.54 g (0.020 mol) of 2NBN, 14.17 g (0.041 mol) of DNDMS, and 220 μmol/mol of sodium bicarbonate and 24 μmol/mol of tetraphenylphosphonium phenoxide as catalysts (the catalyst amount is the relative number of moles to BNEF and 2NBN) were placed, and the inside of the system was replaced to a nitrogen atmosphere.

Subsequently, the raw material mixture was heated and melted at 600 hPa and 210°C. After 30 minutes of reaction, the temperature was increased to 230°C, the pressure was reduced to 400 hPa, and the reaction was allowed to proceed for 130 minutes while methanol distilled from the reaction system was condensed and removed with a condenser tube. Next, the reaction was carried out with the temperature increased to 240°C for 30 minutes, with the pressure reduced to 200 hPa for 30 minutes, with the pressure reduced to 100 hPa for 30 minutes, with the pressure reduced to 50 hPa for 20 minutes, with the pressure reduced to 20 hPa for 10 minutes, and with the pressure reduced to less than 1 hPa for 120 minutes.

The resulting polysilyl ether resin had a Mw of 4,436, a refractive index (nd) of 1.719, an Abbe number (vd) of 15.74, and a glass transition temperature (Tg) of 146°C.

<Example 4>

In a 300 ml four-neck flask equipped with a stirrer, 23.63 g (0.040 mol) of OPPFL-2EO, 14.17 g (0.041 mol) of DNDMS, and 120 μmol/mol of sodium bicarbonate and 6 μmol/mol of tetraphenylphosphonium phenoxide as catalysts (the catalyst amount is the relative number of moles to OPPFL-2EO) were placed, and the inside of the system was replaced to a nitrogen atmosphere.

Subsequently, the raw material mixture was heated and melted at 600 hPa and 210°C. After 30 minutes of reaction, the temperature was increased to 230°C, the pressure was reduced to 400 hPa, and the reaction was allowed to proceed for 30 minutes while methanol distilled from the reaction system was condensed and removed with a condenser tube. Next, the reaction was carried out with the pressure reduced to 200 hPa for 20 minutes, with the temperature increased to 240°C and the pressure reduced to 100 hPa for 10 minutes, with the pressure reduced to 50 hPa for 10 minutes, with the pressure reduced to 20 hPa for 10 minutes, and with the pressure reduced to less than 1 hPa for 90 minutes.

The resulting polysilyl ether resin had a Mw of 6,826, a refractive index (nd) of 1.678, an Abbe number (vd) of 20.06, and a glass transition temperature (Tg) of 138°C.

<Example 5>

In a 300 ml four-neck flask equipped with a stirrer, 21.56 g (0.040 mol) of BNEF, 5.26 g (0.021 mol) of DPDMS, 7.17 g (0.021 mol) of DNDMS, and 120 μmol/mol of sodium bicarbonate and 12 μmol/mol of tetraphenylphosphonium phenoxide as catalysts (the catalyst amount is the relative number of moles to BNEF) were placed, and the inside of the system was replaced to a nitrogen atmosphere.

Subsequently, the raw material mixture was heated and melted at 600 hPa and 210°C. After 30 minutes of reaction, the temperature was increased to 230°C, the pressure was reduced to 400 hPa, and the reaction was allowed to proceed for 40 minutes while methanol distilled from the reaction system was condensed and removed with a condenser tube. Next, the reaction was carried out with the pressure reduced to 200 hPa for 30 minutes, with the temperature increased to 240°C and the pressure reduced to 100 hPa for 20 minutes, with the pressure reduced to 50 hPa for 20 minutes, with the pressure reduced to 20 hPa for 10 minutes, and with the pressure reduced to less than 1 hPa for 90 minutes.

The resulting polysilyl ether resin had a Mw of 9,258, a refractive index (nd) of 1.688, an Abbe number (vd) of

18.93, and a glass transition temperature (Tg) of 141°C.

<Example 6>

In a 300 ml four-neck flask equipped with a stirrer, 9.13 g (0.040 mol) of bisphenol A (BPA), 14.17 g (0.041 mol) of DNDMS, and 220 μmol/mol of sodium bicarbonate and 12 μmol/mol of tetraphenylphosphonium phenoxide as catalysts (the catalyst amount is the relative number of moles to BPA) were placed, and the inside of the system was replaced to a nitrogen atmosphere.
Subsequently, the raw material mixture was heated and melted at 600 hPa and 210°C. After 30 minutes of reaction, the temperature was raised to 230°C, the pressure was reduced to 400 hPa, and the reaction was allowed to proceed for 30 minutes while methanol distilled from the reaction system was condensed and removed with a condenser tube. Next, the reaction was carried out with the temperature increased to 240°C for 50 minutes, with the pressure reduced to 200 hPa for 20 minutes, with the pressure reduced to 100 hPa for 20 minutes, with the pressure reduced to 50 hPa for 10 minutes, with the pressure reduced to 20 hPa for 10 minutes, and with the pressure reduced to less than 1 hPa for 120 minutes.
The resulting polysilyl ether resin had a Mw of 4,745, a refractive index (nd) of 1.664, an Abbe number (vd) of 21.09, and a glass transition temperature (Tg) of 112°C.
Note that in the thermoplastic resin of Example 6, unlike the other Examples mentioned above, a constituent unit derived from BPA is formed in addition to DNDMS, and therefore, the constituent unit represented by the above-mentioned formula (A-1) in which the values of k1 and j1 are 0 is contained.

<Example 7>

In a 300 ml four-neck flask equipped with a stirrer, 19.40 g (0.035 mol) of BNEF, 13.51 g (0.036 mol) of DNDES, and 200 μmol/mol of zinc acetate as a catalyst (the catalyst amount is the relative number of moles to BNEF) were placed, and the inside of the system was replaced to a nitrogen atmosphere.
Subsequently, the raw material mixture was heated and melted under conditions of 400 hPa and 210°C. After 30 minutes of reaction, the temperature was increased to 230°C, and the reaction was allowed to proceed for 30 minutes while ethanol distilled from the reaction system was condensed and removed with a condenser tube. Next, the reaction was carried out with the pressure reduced to 200 hPa for 30 minutes, with the temperature increased to 240°C for 30 minutes, with the pressure reduced to 100 hPa for 20 minutes, with the pressure reduced to 50 hPa for 20 minutes, and with the pressure reduced to less than 1 hPa and the temperature increased to 260°C for 90 minutes.
The resulting polysilyl ether resin had a Mw of 9,229, a refractive index (nd) of 1.699, an Abbe number (vd) of 18.22, and a glass transition temperature (Tg) of 155°C.

<Example 8>

In a 300 ml four-neck flask equipped with a stirrer, 19.40 g (0.036 mol) of BNEF, 13.81 g (0.037 mol) of D2NDES, and 200 μmol/mol of zinc acetate as a catalyst (the catalyst amount is the relative number of moles to BNEF) were placed, and the inside of the system was replaced to a nitrogen atmosphere.
Subsequently, the raw material mixture was heated and melted under conditions of 400 hPa and 210°C. After 30 minutes of reaction, the temperature was increased to 230°C, and the reaction was allowed to proceed for 30 minutes while ethanol distilled from the reaction system was condensed and removed with a condenser tube. Next, the reaction was carried out with the pressure reduced to 200 hPa for 20 minutes, with the temperature increased to 245°C and the pressure reduced to 100 hPa for 10 minutes, with the pressure reduced to 50 hPa for 10 minutes, and with the pressure reduced to less than 1 hPa and the temperature increased to 260°C for 45 minutes.
The resulting polysilyl ether resin had a Mw of 49,339, a refractive index (nd) of 1.700, an Abbe number (vd) of 18.19, and a glass transition temperature (Tg) of 148°C.

<Example 9>

In a 300 ml four-neck flask equipped with a stirrer, 21.56 g (0.040 mol) of BNEF, 12.13 g (0.041 mol) of NPDMS, and 50 μmol/mol of zinc acetate as a catalyst (the catalyst amount is the relative number of moles to BNEF) were placed, and the inside of the system was replaced to a nitrogen atmosphere. The raw materials were heated and melted at 400 hPa and 210°C. After 15 minutes of reaction, the temperature was increased to 230°C, and the reaction was allowed to proceed for 15 minutes while methanol distilled from the reaction system was condensed and removed with a condenser tube. Next, the reaction was carried out with the pressure reduced to 200 hPa for 5 minutes, with the temperature increased to 240°C and the pressure reduced to 100 hPa for 10 minutes, with the pressure reduced to 50 hPa for 10 minutes, and with the

pressure reduced to less than 1 hPa and the temperature increased to 260°C for 30 minutes.

The resulting polysilyl ether resin had a Mw of 20,407, a refractive index (nd) of 1.689, an Abbe number (vd) of 18.87, and a glass transition temperature (Tg) of 149°C.

<Example 10>

In a 300 ml four-neck flask equipped with a stirrer, 21.56 g (0.040 mol) of BNEF, 14.17 g (0.041 mol) of PHPDMS, and 50 μmol/mol of zinc acetate as a catalyst (the catalyst amount is the relative number of moles to BNEF) were placed, and the inside of the system was replaced to a nitrogen atmosphere. The raw materials were heated and melted at 400 hPa and 210°C. After 10 minutes of reaction, the temperature was increased to 230°C, and the reaction was allowed to proceed for 10 minutes while methanol distilled from the reaction system was condensed and removed with a condenser tube. Next, the reaction was carried out with the pressure reduced to 200 hPa for 5 minutes, with the temperature increased to 240°C and the pressure reduced to 100 hPa for 5 minutes, with the pressure reduced to 50 hPa for 5 minutes, and with the pressure reduced to less than 1 hPa and the temperature increased to 260°C for 10 minutes.

The resulting polysilyl ether resin had a Mw of 12,398, a refractive index (nd) of 1.699, an Abbe number (vd) of 17.99, and a glass transition temperature (Tg) of 159°C.

<Example 11>

In a 300 ml four-neck flask equipped with a stirrer, 57.07 g (0.130 mol) of BPEF, 14.20 g (0.066 mol) of DPC, 22.81 g (0.066 mol) of DNDMS, and 50 μmol/mol of zinc acetate as a catalyst (the catalyst amount is the relative number of moles to BPEF) were placed, and the inside of the system was replaced to a nitrogen atmosphere. The raw materials were heated and melted at 400 hPa and 210°C. After 20 minutes of reaction, the pressure was reduced to 300 hPa, the temperature was increased to 230°C, and the reaction was allowed to proceed for 20 minutes while methanol and phenol distilled from the reaction system were condensed and removed with a condenser tube. Next, the reaction was carried out with the pressure reduced to 200 hPa for 10 minutes, with the pressure reduced to 100 hPa and the temperature increased to 240°C for 10 minutes, with the pressure reduced to 50 hPa for 10 minutes, and with the pressure reduced to less than 1 hPa and the temperature increased to 260°C for 50 minutes.

The resulting polysilyl ether-polycarbonate resin had a Mw of 59,716, a refractive index (nd) of 1.660, an Abbe number (vd) of 21.65, and a glass transition temperature (Tg) of 143°C.

<Example 12>

In a 300 ml four-neck flask equipped with a stirrer, 57.07 g (0.130 mol) of BPEF, 19.88 g (0.093 mol) of DPC, 13.68 g (0.040 mol) of DNDMS, and 50 μmol/mol of zinc acetate as a catalyst (the catalyst amount is the relative number of moles to BPEF) were placed, and the inside of the system was replaced to a nitrogen atmosphere. The raw materials were heated and melted at 400 hPa and 210°C. After 20 minutes of reaction, the pressure was reduced to 300 hPa, the temperature was increased to 230°C, and the reaction was allowed to proceed for 10 minutes while methanol and phenol distilled from the reaction system were condensed and removed with a condenser tube. Next, the reaction was carried out with the pressure reduced to 200 hPa for 10 minutes, with the pressure reduced to 100 hPa and the temperature increased to 240°C for 10 minutes, with the pressure reduced to 50 hPa for 20 minutes, and with the pressure reduced to less than 1 hPa and the temperature increased to 260°C for 30 minutes.

The resulting polysilyl ether-polycarbonate resin had a Mw of 53,124, a refractive index (nd) of 1.653, an Abbe number (vd) of 22.23, and a glass transition temperature (Tg) of 144°C.

<Example 13>

In a 300 ml four-neck flask equipped with a stirrer, 57.07 g (0.130 mol) of BPEF, 25.82 g (0.121 mol) of DPC, 4.61 g (0.013 mol) of DNDMS, and 50 μmol/mol of zinc acetate as a catalyst (the catalyst amount is the relative number of moles to BPEF) were placed, and the inside of the system was replaced to a nitrogen atmosphere. The raw materials were heated and melted at 400 hPa and 210°C. After 20 minutes of reaction, the pressure was reduced to 300 hPa, the temperature was increased to 230°C, and the reaction was allowed to proceed for 10 minutes while methanol and phenol distilled from the reaction system were condensed and removed with a condenser tube. Next, the reaction was carried out with the pressure reduced to 200 hPa for 5 minutes, with the pressure reduced to 100 hPa and the temperature increased to 240°C for 10 minutes, with the pressure reduced to 50 hPa for 5 minutes, and with the pressure reduced to less than 1 hPa and the temperature increased to 260°C for 30 minutes.

The resulting polysilyl ether-polycarbonate resin had a Mw of 35,904, a refractive index (nd) of 1.644, an Abbe number (vd) of 22.97, and a glass transition temperature (Tg) of 145°C.

<Example 14>

In a 300 ml four-neck flask equipped with a stirrer, 10.78 g (0.020 mol) of BNEF, 10.53 g (0.020 mol) of DPBN, 14.17 g (0.041 mol) of DNDMS, and 200 μmol/mol of zinc acetate as a catalyst (the catalyst amount is the relative number of moles to BNEF and DPBN) were placed, and the inside of the system was replaced to a nitrogen atmosphere. The raw materials were heated and melted at 400 hPa and 210°C. After 30 minutes of reaction, the temperature was increased to 230°C, and the reaction was allowed to proceed for 30 minutes while methanol distilled from the reaction system was condensed and removed with a condenser tube. Next, the reaction was carried out with the pressure reduced to 200 hPa for 20 minutes, with the temperature increased to 240°C and the pressure reduced to 100 hPa for 10 minutes, with the pressure reduced to 50 hPa for 10 minutes, and with the pressure reduced to less than 1 hPa and the temperature increased to 260°C for 120 minutes.

The resulting polysilyl ether resin had a Mw of 33,862, a refractive index (nd) of 1.705, an Abbe number (νd) of 17.06, and a glass transition temperature (Tg) of 158°C.

<Comparative Example 1>

In a 300 ml four-neck flask equipped with a stirrer, 31.00 g (0.071 mol) of BPEF, 18.98 g (0.078 mol) of DPDMS, and 15 μmol/mol of cesium carbonate as a catalyst (the catalyst amount is the relative number of moles to BPEF) were placed, and the inside of the system was replaced to a nitrogen atmosphere. The raw materials were heated and melted at 990 hPa and 190°C. After 30 minutes of reaction, the temperature was increased to 210°C, the pressure was reduced to 600 hPa, and the reaction was allowed to proceed for 15 minutes while methanol distilled from the reaction system was condensed and removed with a condenser tube. Next, the reaction was carried out with the temperature increased to 220°C and the pressure reduced to 400 hPa for 6 minutes, with the temperature increased to 230°C and the pressure reduced to 200 hPa for 10 minutes, with the temperature increased to 240°C and the pressure reduced to 100 hPa for 10 minutes, with the temperature increased to 260°C and the pressure reduced to 50 hPa for 20 minutes, with the pressure reduced to 20 hPa for 10 minutes, and with the pressure reduced to less than 1 hPa for 90 minutes.

The resulting polysilyl ether resin had a Mw of 46,225, a refractive index (nd) of 1.643, an Abbe number (νd) of 23.92, and a glass transition temperature (Tg) of 97°C.

<Comparative Example 2>

In a 300 ml four-neck flask equipped with a stirrer, 70.00 g (0.130 mol) of BNEF, 34.25 g (0.140 mol) of DPDMS, and 60 μmol/mol of sodium bicarbonate as a catalyst (the catalyst amount is the relative number of moles to BNEF) were placed, and the inside of the system was replaced to a nitrogen atmosphere. The raw materials were heated and melted at 600 hPa and 210°C. After 30 minutes of reaction, the temperature was increased to 230°C, the pressure was reduced to 400 hPa, and the reaction was allowed to proceed for 90 minutes while methanol distilled from the reaction system was condensed and removed with a condenser tube. Next, the reaction was carried out with the temperature increased to 250°C and the pressure reduced to 200 hPa for 20 minutes, with the pressure reduced to 100 hPa for 20 minutes, with the pressure reduced to 50 hPa for 10 minutes, and with the pressure reduced to less than 1 hPa for 90 minutes.

The resulting polysilyl ether resin had a Mw of 20,890, a refractive index (nd) of 1.677, an Abbe number (νd) of 19.72, and a glass transition temperature (Tg) of 131°C.

<Comparative Example 3>

In a 300 ml four-neck flask equipped with a stirrer, 17.51 g (0.033 mol) of BNEF, 20.38 g (0.033 mol) of 2NBN, 17.13 g (0.070 mol) of DPDMS, and 120 μmol/mol of sodium bicarbonate as a catalyst (the catalyst amount is the relative number of moles to BNEF and 2NBN) were placed, and the inside of the system was replaced to a nitrogen atmosphere. The raw materials were heated and melted at 600 hPa and 210°C. After 60 minutes of reaction, the temperature was increased to 230°C, the pressure was reduced to 400 hPa, and the reaction was allowed to proceed for 60 minutes while methanol distilled from the reaction system was condensed and removed with a condenser tube. Next, the reaction was carried out with the temperature increased to 240°C and the pressure reduced to 200 hPa for 30 minutes, with the pressure reduced to 100 hPa for 10 minutes, with the pressure reduced to 50 hPa for 10 minutes, and with the pressure reduced to less than 1 hPa for 90 minutes.

The resulting polysilyl ether resin had a Mw of 13,218, a refractive index (nd) of 1.702, an Abbe number (νd) of 16.30, and a glass transition temperature (Tg) of 131°C.

<Comparative Example 4>

In a 300 ml four-neck flask equipped with a stirrer, 15.96 g (0.070 mol) of BPA, 17.59 g (0.072 mol) of DPDMS, and 15 μmol/mol of cesium carbonate as a catalyst (the catalyst amount is the relative number of moles to BPA) were placed, and the inside of the system was replaced to a nitrogen atmosphere. The raw materials were heated and melted at 990 hPa and 190°C. After 30 minutes of reaction, the temperature was increased to 210°C, the pressure was reduced to 600 hPa, and the reaction was allowed to proceed for 30 minutes while methanol distilled from the reaction system was condensed and removed with a condenser tube. Next, the reaction was carried out with the temperature increased to 220°C and the pressure reduced to 400 hPa for 30 minutes, with the temperature increased to 230°C and the pressure reduced to 200 hPa for 10 minutes, with the temperature increased to 240°C and the pressure reduced to 100 hPa for 10 minutes, with the temperature increased to 260°C and the pressure reduced to 50 hPa for 10 minutes, with the pressure reduced to 20 hPa for 10 minutes, and with the pressure reduced to less than 1 hPa for 90 minutes.

The resulting polysilyl ether resin had a Mw of 45,241, a refractive index (nd) of 1.618, an Abbe number (vd) of 26.90, and a glass transition temperature (Tg) of 89°C.

Note that in the thermoplastic resin of Comparative Example 4, as in Example 6, the constituent unit derived from BPA and represented by formula (A-1) in which the values of k1 and j 1 are 0 is contained.

<Comparative Example 5>

In a 300 ml four-neck flask equipped with a stirrer, 57.07 g (0.130 mol) of BPEF, 14.34 g (0.067 mol) of DPC, 16.34 g (0.067 mol) of DPDMS, and 6 μmol/mol of zinc acetate as a catalyst (the catalyst amount is the relative number of moles to BPEF) were placed, and the inside of the system was replaced to a nitrogen atmosphere. The raw materials were heated and melted at 400 hPa and 210°C. After 20 minutes of reaction, the pressure was reduced to 300 hPa, the temperature was increased to 230°C, and the reaction was allowed to proceed for 30 minutes while methanol and phenol distilled from the reaction system were condensed and removed with a condenser tube. Next, the reaction was carried out with the pressure reduced to 200 hPa for 10 minutes, with the pressure reduced to 100 hPa and the temperature increased to 240°C for 10 minutes, with the pressure reduced to 50 hPa for 10 minutes, and with the pressure reduced to less than 1 hPa and the temperature increased to 260°C for 60 minutes.

The resulting polysilyl ether-polycarbonate resin had a Mw of 70,492, a refractive index (nd) of 1.642, an Abbe number (vd) of 23.68, and a glass transition temperature (Tg) of 123°C.

<Comparative Example 6>

In a 300 ml four-neck flask equipped with a stirrer, 57.07 g (0.130 mol) of BPEF, 20.08 g (0.094 mol) of DPC, 9.80 g (0.040 mol) of DPDMS, and 6 μmol/mol of zinc acetate as a catalyst (the catalyst amount is the relative number of moles to BPEF) were placed, and the inside of the system was replaced to a nitrogen atmosphere. The raw materials were heated and melted at 400 hPa and 210°C. After 20 minutes of reaction, the pressure was reduced to 300 hPa, the temperature was increased to 230°C, and the reaction was allowed to proceed for 30 minutes while methanol and phenol distilled from the reaction system were condensed and removed with a condenser tube. Next, the reaction was carried out with the pressure reduced to 200 hPa for 10 minutes, with the pressure reduced to 100 hPa and the temperature increased to 240°C for 10 minutes, with the pressure reduced to 50 hPa for 10 minutes, and with the pressure reduced to less than 1 hPa and the temperature increased to 260°C for 40 minutes.

The resulting polysilyl ether-polycarbonate resin had a Mw of 61,628, a refractive index (nd) of 1.641, an Abbe number (vd) of 23.60, and a glass transition temperature (Tg) of 133°C.

<Comparative Example 7>

In a 300 ml four-neck flask equipped with a stirrer, 57.07 g (0.130 mol) of BPEF, 25.82 g (0.121 mol) of DPC, 3.27 g (0.013 mol) of DPDMS, and 6 μmol/mol of zinc acetate as a catalyst (the catalyst amount is the relative number of moles to BPEF) were placed, and the inside of the system was replaced to a nitrogen atmosphere. The raw materials were heated and melted at 400 hPa and 210°C. After 20 minutes of reaction, the pressure was reduced to 300 hPa, the temperature was increased to 230°C, and the reaction was allowed to proceed for 30 minutes while methanol and phenol distilled from the reaction system were condensed and removed with a condenser tube. Next, the reaction was carried out with the pressure reduced to 200 hPa for 10 minutes, with the pressure reduced to 100 hPa and the temperature increased to 240°C for 10 minutes, with the pressure reduced to 50 hPa for 10 minutes, and with the pressure reduced to less than 1 hPa and the temperature increased to 260°C for 23 minutes.

The resulting polysilyl ether-polycarbonate resin had a Mw of 58,373, a refractive index (nd) of 1.640, an Abbe number (vd) of 23.54, and a glass transition temperature (Tg) of 143°C.

[Table 1]

| | | Example 1 | Example 2-1 | Example 2-2 | Example 3 | Example 4 | Example 5 | Example 6 | Example 7 | Example 8 | Example 9 | Example 10 | Example 11 | Example 12 | Example 13 | Example 14 | Comp. Ex. 1 | Comp. Ex. 2 | Comp. Ex. 3 | Comp. Ex. 4 | Comp. Ex. 5 | Comp. Ex. 6 | Comp. Ex. 7 |
|---|---|---|---|---|---|---|---|---|---|---|---|---|---|---|---|---|---|---|---|---|---|---|---|
| Silane compound | DPDMS Diphenyldimethoxysilane (mol%) | 0 | 0 | 0 | 0 | 0 | 50 | 0 | 0 | 0 | 0 | 0 | 0 | 0 | 0 | 0 | 100 | 100 | 100 | 100 | 49 | 29 | 10 |
| | DNDMS Di(1-naphthyl)dimethoxysilane (mol%) | 100 | 100 | 100 | 100 | 100 | 50 | 100 | 0 | 0 | 0 | 0 | 52 | 32 | 9 | 100 | 0 | 0 | 0 | 0 | 0 | 0 | 0 |
| | DNDES Di(1-naphthyl)diethoxysilane (mol%) | 0 | 0 | 0 | 0 | 0 | 0 | 0 | 100 | 0 | 0 | 0 | 0 | 0 | 0 | 0 | 0 | 0 | 0 | 0 | 0 | 0 | 0 |
| | D2NDES Di(2-naphthyl)diethoxysilane (mol%) | 0 | 0 | 0 | 0 | 0 | 0 | 0 | 0 | 100 | 0 | 0 | 0 | 0 | 0 | 0 | 0 | 0 | 0 | 0 | 0 | 0 | 0 |
| | NPDMS (1-Naphthyl) phenyldimethoxysilane (mol%) | 0 | 0 | 0 | 0 | 0 | 0 | 0 | 0 | 0 | 100 | 0 | 0 | 0 | 0 | 0 | 0 | 0 | 0 | 0 | 0 | 0 | 0 |
| | PHPDMS (9-Phenanthrenyl) phenyldimethoxysilane (mol%) | 0 | 0 | 0 | 0 | 0 | 0 | 0 | 0 | 0 | 0 | 100 | 0 | 0 | 0 | 0 | 0 | 0 | 0 | 0 | 0 | 0 | 0 |
| Carbonate compound | DPC Diphenyl carbonate (mol%) | 0 | 0 | 0 | 0 | 0 | 0 | 0 | 0 | 0 | 0 | 0 | 48 | 68 | 91 | 0 | 0 | 0 | 0 | 0 | 51 | 71 | 90 |
| Dihydroxy compound (diol) | BPA (mol%) | 0 | 0 | 0 | 0 | 0 | 0 | 100 | 0 | 0 | 0 | 0 | 0 | 0 | 0 | 0 | 0 | 0 | 0 | 100 | 0 | 0 | 0 |
| | BPEF (mol%) | 100 | 0 | 0 | 0 | 0 | 0 | 0 | 0 | 0 | 0 | 0 | 100 | 100 | 100 | 0 | 100 | 0 | 0 | 0 | 100 | 100 | 100 |
| | OPPFL2EO (BPPEF) (mol%) | 0 | 0 | 0 | 0 | 100 | 0 | 0 | 0 | 0 | 0 | 0 | 0 | 0 | 0 | 0 | 0 | 0 | 0 | 0 | 0 | 0 | 0 |
| | BNEF (mol%) | 0 | 100 | 100 | 50 | 0 | 100 | 0 | 100 | 100 | 100 | 100 | 0 | 0 | 0 | 50 | 0 | 100 | 50 | 0 | 0 | 0 | 0 |
| | DPBN (mol%) | 0 | 0 | 0 | 0 | 0 | 0 | 0 | 0 | 0 | 0 | 0 | 0 | 0 | 0 | 50 | 0 | 0 | 0 | 0 | 0 | 0 | 0 |
| | 2NBN (mol%) | 0 | 0 | 0 | 50 | 0 | 0 | 0 | 0 | 0 | 0 | 0 | 0 | 0 | 0 | 0 | 0 | 0 | 50 | 0 | 0 | 0 | 0 |
| Physical properties | Refractive index (nd) | 1.673 | 1.699 | 1.7 | 1.719 | 1.678 | 1.688 | 1.664 | 1.699 | 1.7 | 1.689 | 1.699 | 1.66 | 1.653 | 1.644 | 1.705 | 1.643 | 1.677 | 1.702 | 1.618 | 1.642 | 1.641 | 1.64 |
| | Abbe number (vd) | 20.8 | 18.2 | 18.2 | 15.7 | 20.1 | 18.9 | 21.1 | 18.2 | 18.2 | 18.9 | 18 | 21.7 | 22.2 | 23 | 17.1 | 23.9 | 19.7 | 16.3 | 26.9 | 23.7 | 23.6 | 23.5 |
| | Glass transition temperature Tg (°C) | 136 | 152 | 163 | 146 | 138 | 141 | 112 | 155 | 148 | 149 | 159 | 143 | 144 | 145 | 158 | 97 | 131 | 131 | 89 | 123 | 133 | 143 |
| | Mw | 17,000 | 9,700 | 19,500 | 4,400 | 6,800 | 9,300 | 4,700 | 9,200 | 49,300 | 20,000 | 12,000 | 60,000 | 53,000 | 36,000 | 34,000 | 46,200 | 21,000 | 13,200 | 45,200 | 70,000 | 62,000 | 58,000 |

From the results of Examples and Comparative Examples, it was confirmed that the thermoplastic resins of the present embodiment tend to have a high refractive index (nd), as well as a high value of Abbe number (vd). Such thermoplastic resins having good properties not only in terms of refractive index but also in terms of chromatic aberration can be suitably used in optical applications.

The molecular structures of the compounds listed in the above-mentioned Examples and Comparative Examples are shown below.

B P E F : 9,9-Bis[4-(2-hydroxyethoxy)phenyl]fluorene

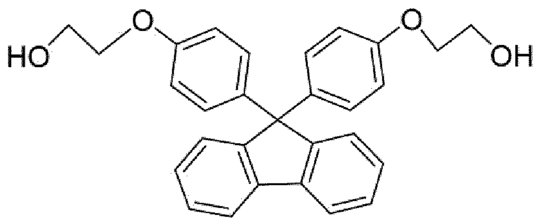

B N E F : 9,9-Bis[6-(2-hydroxyethoxy)naphthalen-2-yl]fluorene

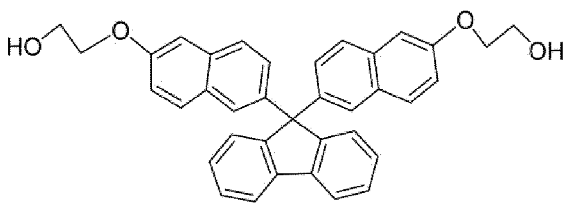

2NBN=2DNBINOL-2EO: 2,2'-Bis(2-hydroxyethoxy)-6,6'-di (naphthalen-2-yl)-1,1'-binaphthalene

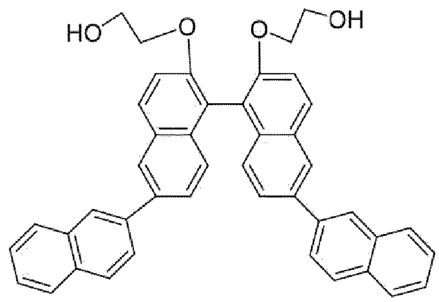

D P B N : 2,2'-Bis(2-hydroxyethoxy)-6,6'-diphenyl-1,1'-binaphthalene

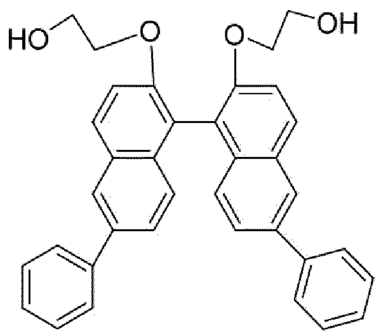

DNDMS : Di(1-naphthyl)dimethoxysilane

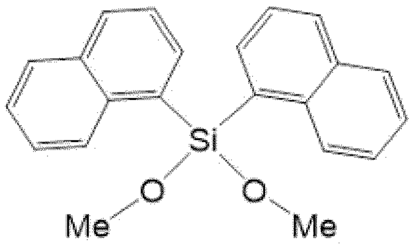

D P D M S : Diphenyldimethoxysilane

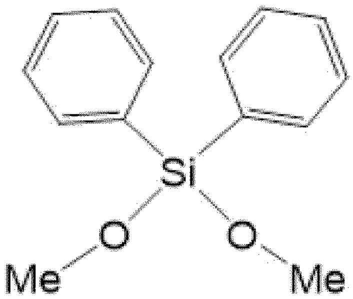

## Claims

**1.** A thermoplastic resin comprising a constituent unit represented by the following general formula (1) containing:

a silane constituent unit (S), which is a -OSi($R^1R^2$)O- moiety; and
a dihydroxy compound-derived diol constituent unit (A) represented by M,

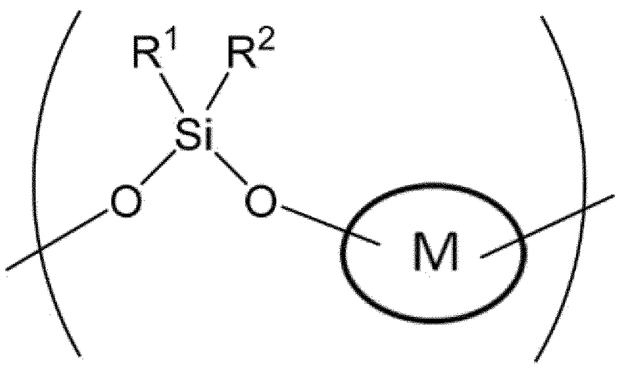

(1)

wherein at least one of $R^1$ and $R^2$ represents a polycyclic aryl group having 10 to 30 carbon atoms and optionally having a substituent.

**2.** The thermoplastic resin according to claim 1, wherein a proportion of the polycyclic aryl group is 30% by mol or more based on a total number of moles of $R^1$ and $R^2$ in all the silane constituent units (S) contained in the thermoplastic resin.

**3.** The thermoplastic resin according to claim 1, wherein a proportion of the silane constituent unit in which $R^1$ and $R^2$ in the general formula (1) are each the polycyclic aryl group is 30% by mol or more based on a total number of moles of all the silane constituent units (S) contained in the thermoplastic resin.

**4.** The thermoplastic resin according to claim 1, wherein $R^1$ and $R^2$ in the general formula (1) are each independently a polycyclic aryl group selected from a naphthyl group, a phenanthrenyl group, an anthryl group, a pyrenyl group, a triphenylenyl group, a naphthacenyl group, and a chrysenyl group, all of which optionally have a substituent.

**5.** The thermoplastic resin according to claim 1, wherein $R^1$ and $R^2$ are each independently a 1-naphthyl group, a 2-naphthyl group, or a 9-phenanthrenyl group.

6. The thermoplastic resin according to claim 1, wherein one of $R^1$ and $R^2$ is a phenyl group optionally having a substituent.

7. The thermoplastic resin according to claim 1, wherein the diol constituent unit (A) comprises a constituent unit represented by either of the following general formula (A-1) or general formula (A-2):

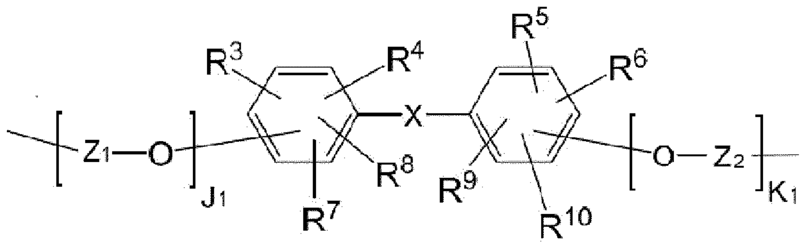

(A—1)

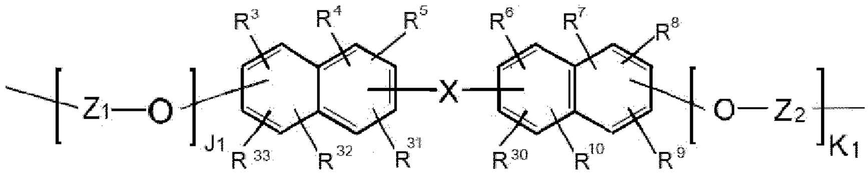

(A—2)

wherein $R^3$ to $R^{10}$ and $R^{30}$ to $R^{33}$ each independently represent hydrogen, a halogen, an alkoxy, an alkyl group having 1 to 20 carbon atoms and optionally having a substituent, an alkenyl group having 2 to 20 carbon atoms and optionally having a substituent, or an aryl group having 6 to 30 carbon atoms and optionally having a substituent;
$Z_1$ and $Z_2$ are each independently an alkylene group having 1 to 5 carbon atoms and optionally having a substituent;
$J_1$ each independently represents an integer of 0 or more and 5 or less;
$K_1$ each independently represents an integer of 0 or more and 5 or less;
X is each independently a single bond or any of structural formulas represented by the following formula (2):

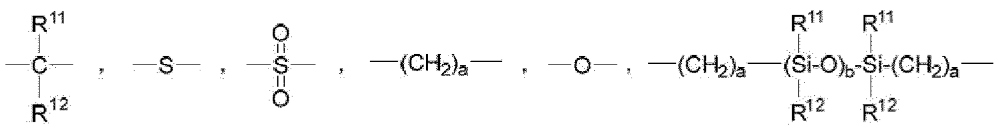

(2)

wherein $R^{11}$ and $R^{12}$ each independently represent hydrogen, a halogen, an alkyl group having 1 to 20 carbon atoms and optionally having a substituent, or an aryl group having 6 to 30 carbon atoms and optionally having a substituent, or $R^{11}$ and $R^{12}$ are bonded to each other to form and represent a carbocycle or heterocycle having 1 to 20 carbon atoms and optionally having a substituent; and
a and b each independently represent an integer of 0 or 1 or more and 5000 or less.

8. The thermoplastic resin according to claim 1, wherein the diol constituent unit (A) comprises any of the following:

a fluorene constituent unit (F), which is a constituent unit derived from a fluorene ring-containing dihydroxy compound;
a dinaphthalene constituent unit (N), which is a constituent unit derived from a dinaphthalene-containing dihydroxy compound; and
a bisphenol constituent unit (B) derived from a bisphenol compound.

9. The thermoplastic resin according to claim 8, wherein the fluorene constituent unit (F) is a constituent unit derived from any of BPEF, BPPEF, and BNEF.

10. The thermoplastic resin according to claim 8, wherein the dinaphthalene constituent unit (N) comprises at least a constituent unit derived from 2NBN or DPBN.

11. The thermoplastic resin according to claim 8, wherein a molar ratio between the fluorene constituent unit (F) and the dinaphthalene constituent unit (N) is 30:70 to 90:10.

12. The thermoplastic resin according to claim 1, wherein a relationship between a refractive index (nd) and an Abbe number (vd) of the thermoplastic resin satisfies a relationship of the following expression (I):

$$\text{refractive index (nd)} > -0.0078 \times \text{Abbe number (vd)} + 1.8293 \cdots \text{(I)}.$$

13. The thermoplastic resin according to claim 12, wherein the expression (I) satisfies the following expression (I-1):

$$-0.0080 \times \text{Abbe number (vd)} + 1.861 > \text{refractive index (nd)} > -0.0078 \times \text{Abbe number (vd)} + 1.8293 \qquad \text{(I-1)}.$$

14. The thermoplastic resin according to claim 1, wherein the thermoplastic resin has a refractive index (nd) of 1.600 to 1.730.

15. The thermoplastic resin according to claim 1, wherein the thermoplastic resin has an Abbe number (vd) of 15.0 to 27.0.

16. The thermoplastic resin according to claim 1, wherein the thermoplastic resin has a Tg of 105 to 170°C.

17. A molded body comprising the thermoplastic resin according to claim 1.

18. The molded body according to claim 17, wherein the molded body is an optical lens or an optical film.

Fig. 1

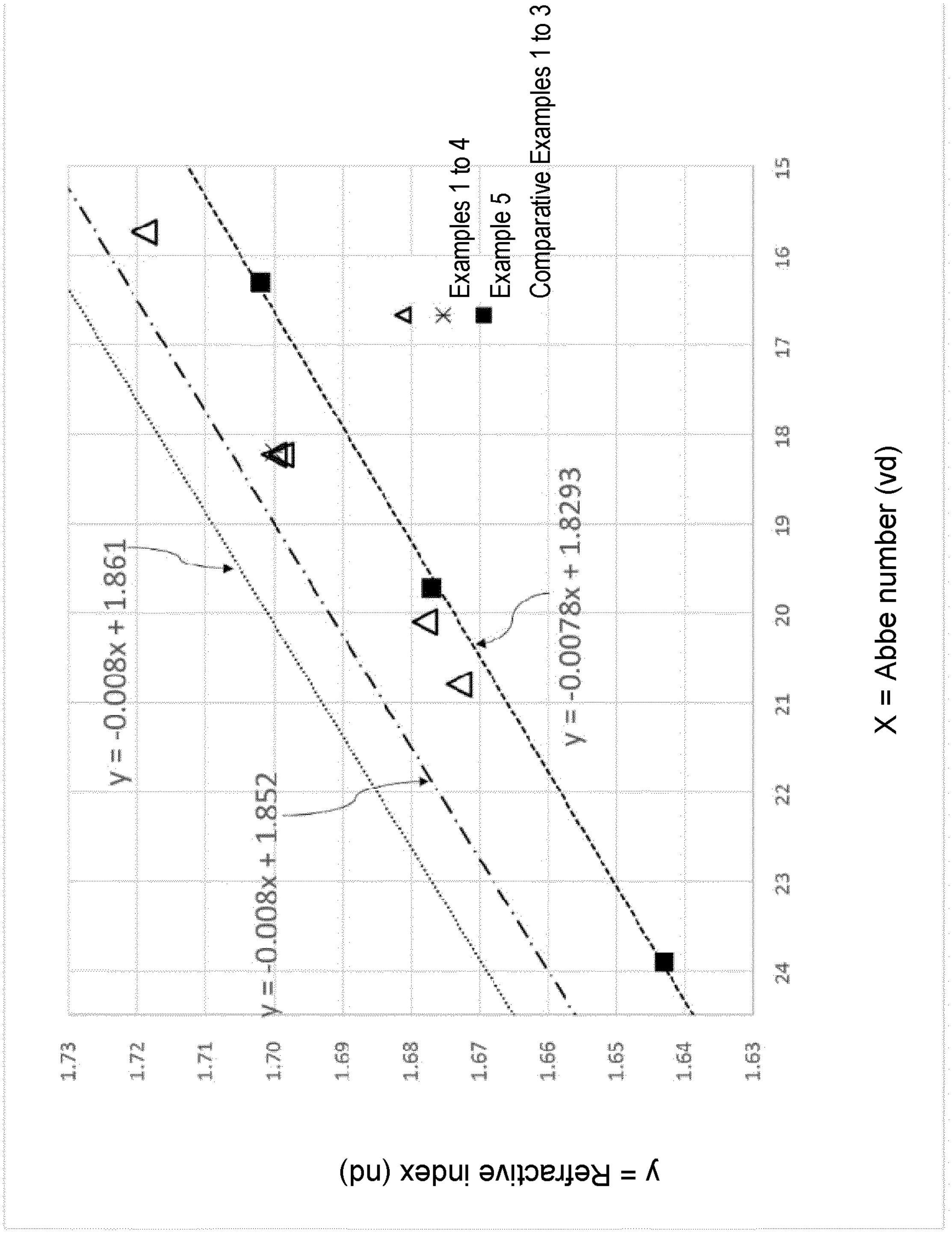
y = Refractive index (nd)
X = Abbe number (vd)
y = -0.008x + 1.861
y = -0.008x + 1.852
y = -0.0078x + 1.8293
Examples 1 to 4
Example 5
Comparative Examples 1 to 3
1.73
1.72
1.71
1.70
1.69
1.68
1.67
1.66
1.65
1.64
1.63
15
16
17
18
19
20
21
22
23
24

## INTERNATIONAL SEARCH REPORT

International application No.
**PCT/JP2023/043420**

**A. CLASSIFICATION OF SUBJECT MATTER**

***C08G 77/00***(2006.01)i; ***C08G 65/40***(2006.01)i; ***G02B 1/04***(2006.01)i
FI: C08G77/00; C08G65/40; G02B1/04

According to International Patent Classification (IPC) or to both national classification and IPC

**B. FIELDS SEARCHED**

Minimum documentation searched (classification system followed by classification symbols)

C08G77/00-77/62; C08G65/00-65/48; G02B1/04

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

CAplus/REGISTRY (STN)

**C. DOCUMENTS CONSIDERED TO BE RELEVANT**

| Category* | Citation of document, with indication, where appropriate, of the relevant passages | Relevant to claim No. |
|---|---|---|
| X | WO 2022/008377 A1 (OSRAM OPTO SEMICONDUCTORS GMBH) 13 January 2022 (2022-01-13) claims, examples | 1-6, 14, 17 |
| A | | 7-13, 15, 16, 18 |
| X | WO 2022/065329 A1 (MITSUBISHI GAS CHEMICAL COMPANY, INC.) 31 March 2022 (2022-03-31) claims, paragraphs [0042], [0058]-[0060] | 1-8, 10, 12-18 |
| A | | 9, 11 |
| X | WO 2020/196343 A1 (MITSUBISHI GAS CHEMICAL COMPANY, INC.) 01 October 2020 (2020-10-01) claims, examples | 1-18 |

☑ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **30 January 2024** | **20 February 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (July 2022)

INTERNATIONAL SEARCH REPORT

International application No.
PCT/JP2023/043420

C. DOCUMENTS CONSIDERED TO BE RELEVANT

| Category* | Citation of document, with indication, where appropriate, of the relevant passages | Relevant to claim No. |
|---|---|---|
| X<br>A | WO 2022/065327 A1 (MITSUBISHI GAS CHEMICAL COMPANY, INC.) 31 March 2022 (2022-03-31)<br>claims | 1-17<br>18 |
| X<br>A | JP 3-47842 A (GENERAL ELECTRIC COMPANY) 28 February 1991 (1991-02-28)<br>claims, p. 5, lower right column, lines 4-9 | 1-8, 10, 12-17<br>9, 11, 18 |
| A | JP 2022-505145 A (MITSUBISHI GAS CHEMICAL COMPANY, INC.) 14 January 2022 (2022-01-14)<br>claims | 1-18 |
| A | US 4026827 A (DYNAMIT NOBEL AKTIENGESELLSCHAFT) 31 May 1977 (1977-05-31)<br>claims | 1-18 |
| A | JP 50-129699 A (CIBA GEIGY AG) 14 October 1975 (1975-10-14)<br>claims | 1-18 |

Form PCT/ISA/210 (second sheet) (July 2022)

**INTERNATIONAL SEARCH REPORT**
**Information on patent family members**

International application No.
**PCT/JP2023/043420**

| Patent document cited in search report | Publication date (day/month/year) | Patent family member(s) | Publication date (day/month/year) |
|---|---|---|---|
| WO 2022/008377 A1 | 13 January 2022 | JP 2023-532443 A<br>claims, examples<br>US 2023/0287182 A1<br>KR 10-2023-0023791 A | |
| WO 2022/065329 A1 | 31 March 2022 | EP 4219589 A1<br>claims, paragraphs [0059], [0090]-[0092]<br>CN 116390968 A<br>KR 10-2023-0071149 A | |
| WO 2020/196343 A1 | 01 October 2020 | US 2022/0033655 A1<br>claims, examples<br>CN 113614144 A<br>KR 10-2021-0146323 A | |
| WO 2022/065327 A1 | 31 March 2022 | EP 4219593 A1<br>claims<br>CN 116390969 A<br>KR 10-2023-0071115 A | |
| JP 3-47842 A | 28 February 1991 | US 5041514 A<br>claims, column 2, lines 52-56 | |
| JP 2022-505145 A | 14 January 2022 | US 2021/0355058 A1<br>claims<br>WO 2020/080558 A1<br>CN 112955422 A<br>KR 10-2021-0080449 A | |
| US 4026827 A | 31 May 1977 | DE 2003237 A<br>FR 2077308 A | |
| JP 50-129699 A | 14 October 1975 | US 4022753 A<br>claims<br>DE 2512581 A1 | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 8502537 W
- JP 2015512999 W
- JP 2016183422 A